# EUROPÄISCHE PATENTSCHRIFT

(11) **EP 2 358 481 B1**
(45) Veröffentlichungstag und Bekanntmachung des Hinweises auf die Patenterteilung: **02.12.2015**
(21) Anmeldenummer: 09776397.3
(22) Anmeldetag: 24.02.2009
(51) Int. Cl.: B05B 15/12, B05B 12/14, B05B 15/04

(54) **LACKIERANLAGE UND VERFAHREN ZUM BETREIBEN EINER LACKIERANLAGE**
PAINTING SYSTEM AND METHOD FOR OPERATING A PAINTING SYSTEM
INSTALLATION DE MISE EN PEINTURE ET DISPOSITIF POUR FAIRE FONCTIONNER UNE INSTALLATION DE MISE EN PEINTURE

(30) Priorität: 19.12.2008 DE 102008064043
(43) Veröffentlichungstag der Anmeldung: 24.08.2011
(73) Patentinhaber: Dürr Systems GmbH, 74321 Bietigheim-Bissingen (DE)
(72) Erfinder: FRITZ, Hans-Georg, 73760 Ostfildern (DE); HOLZHEIMER, Jens, 71732 Tamm (DE); WIELAND, Dietmar, 71336 Waiblingen (DE); HERRE, Frank, 71739 Oberriexingen (DE); WESCHKE, Jürgen, 71263 Weil der Stadt (DE)
(74) Vertreter: Hoeger, Stellrecht & Partner Patentanwälte mbB
(86) Internationale Anmeldenummer: PCT/EP2009/001305
(87) Internationale Veröffentlichungsnummer: WO 2010/069407

(56) Entgegenhaltungen:
- WO-A-91/16141
- WO-A-2007/039276
- WO-A-2009/026984
- WO-A-2009/026987
- WO-A1-2009/103454
- DE-A1-102005 048 579
- JP-A- 9 299 732

## Beschreibung

Die vorliegende Erfindung betrifft eine Lackieranlage, welche mindestens eine Lackiervorrichtung mit mindestens einer Appliziereinheit zum Lackieren von Werkstücken, insbesondere von Fahrzeugkarosserien, mit einem Fluidlack und eine Vorrichtung zum Abtrennen von Fluidlack-Overspray aus einem Overspray-Partikel enthaltenden Rohgasstrom umfasst, wobei diese Vorrichtung mindestens ein Filterelement zum Abtrennen des Oversprays aus dem Rohgasstrom umfasst.

Eine solche Lackieranlage ermöglicht es, den Fluidlack-Overspray, d.h. den nicht an den zu lackierenden Werkstücken anhaftenden Fluidlack, welcher in Form von Overspray-Partikeln von einem den Applikationsbereich der Lackieranlage durchsetzenden Luftstrom aufgenommen und mitgeführt wird, aus diesem Luftstrom wieder abzutrennen und den gereinigten Luftstrom in einem Umluftkreislauf wieder dem Applikationsbereich zuzuführen oder aber in die Umgebung der Anlage abzugeben.

Mit dem Begriff "Fluidlack" wird in dieser Beschreibung und in den beigefügten Ansprüchen - in Unterscheidung zum Begriff "Pulverlack" - ein Lack mit einer fließfähigen Konsistenz, von flüssig bis pastös (beispielsweise im Falle eines PVC-Lacks), bezeichnet. Der Begriff "Fluidlack" umfasst insbesondere die Begriffe "Flüssiglack" und "Nasslack".

Die Overspray-Partikel, aus denen sich der Fluidlack-Overspray zusammensetzt, können feste oder flüssige Teilchen, insbesondere Tröpfchen, sein.

Die DE102005048579 offenbart eine gattungsgemäße Lackieranlage.

Die WO 2009/026984 A und die WO 2009/103454 A1, welche als Stand der Technik nach Artikel 54 (3) EPÜ zu berücksichtigen sind, offenbaren eine Lackieranlage, umfassend mindestens eine Lackiervorrichtung mit mindestens einer Appliziereinheit zum Lackieren von Werkstücken mit einem Fluidlack und eine Vorrichtung zum Abtrennen von Fluidlack-Overspray aus einem Rohgasstrom, welcher mindestens ein Filterelement zum Abtrennen des Oversprays aus dem Rohgasstrom umfasst, wobei die Vorrichtung zum Abtrennen von Fluidlack-Overspray aus einem Rohgasstrom mindestens eine Filtervorrichtung umfasst, welche mindestens ein Filterelement zum Abtrennen des Oversprays aus dem Rohgasstrom und mindestens einen Hilfsmaterialaufnahmebehälter zum Aufnehmen eines Hilfsmaterials umfasst, wobei die Filtervorrichtung mindestens eine Einlassöffnung umfasst, durch welche der Rohgasstrom in die Filtervorrichtung eintritt, und wobei die Einlassöffnung derart ausgebildet und ausgerichtet ist, dass der Rohgasstrom so in den Hilfsmaterialaufnahmebehälter gerichtet in die Filtervorrichtung eintritt, dass er in einem Innenraum des Hilfsmaterialaufnahmebehälters umgelenkt wird.

Gegenstand der vorliegenden Erfindung sind die Lackieranlage nach Anspruch 1 und das Verfahren zum Betreiben einer Lackieranlage nach Anspruch 6.

Das Hilfsmaterial dient dabei dazu, sich als Sperrschicht an den Oberflächen des Filterelements abzusetzen, um zu verhindern, dass diese Flächen durch anhaftende Overspray-Partikel verkleben. Ferner dient das Hilfsmaterial dazu, zu erreichen, dass der Filterkuchen am Filterelement durchströmbar bleibt und nicht verschlossen wird.

Durch periodisches Abreinigen der Filterelemente der Filtervorrichtung gelangt das Gemisch aus Hilfsmaterial und Fluidlack-Overspray von den Filterelementen in den Hilfsmaterialaufnahmebehälter, aus dem es beispielsweise abgesaugt werden kann, um der Lackieranlage für eine erneute Verwendung als Hilfsmaterial zugeführt zu werden.

Ferner kann das im Hilfsmaterialaufnahmebehälter befindliche Gemisch aus Hilfsmaterial und Fluidlack-Overspray mittels Druckluftpulsen aus einer Druckluftlanze aufgewirbelt werden, um so aus dem Hilfsmaterialaufnahmebehälter zu den Filterelementen aufzusteigen und sich dort abzusetzen.

Das fließfähige, partikelförmige Hilfsmaterial wird auch als "Precoat"-Material oder als Filterhilfsmaterial bezeichnet.

Die beschriebene Ausgestaltung der Filtervorrichtung ermöglicht es, das mindestens eine Filterelement in einfacher und effizienter Weise mit dem Hilfsmaterial zu beaufschlagen, ohne dass das Hilfsmaterial in den Applikationsbereich gelangt, in welchem der Rohgasstrom den Fluidlack-Overspray aufnimmt.

Die Einlassöffnung der Filtervorrichtung ist derart ausgebildet und ausgerichtet, dass der Rohgasstrom so in den Hilfsmaterialaufnahmebehälter gerichtet in die Filtervorrichtung eintritt, dass er in einem Innenraum des Hilfsmaterialaufnahmebehälters umgelenkt wird.

Dadurch, dass der Rohgasstrom direkt in den Hilfsmaterialaufnahmebehälter gelenkt wird, wird erreicht, dass eine ausreichende Menge Hilfsmaterial in den Rohgasstrom zugegeben wird und/oder dass eine ausreichende Menge Hilfsmaterial, die mittels einer Aufwirbelungseinrichtung aufgewirbelt worden ist, durch den Rohgasstrom aus dem Hilfsmaterialaufnahmebehälter zu dem mindestens einen Filterelement getragen wird.

Der Rohgasstrom tritt durch die Einlassöffnung in eine im Übrigen gegenüber dem vor der Einlassöffnung liegenden Strömungsweg des Rohgasstroms und gegenüber dem Applikationsbereich der Lackieranlage abgeschlossene Filtervorrichtung ein. Dadurch ist ferner gewährleistet, dass kein Hilfsmaterial aus dem Hilfsmaterialaufnahmebehälter in den vor der Einlassöffnung liegenden Strömungsweg des Rohgasstroms oder in den Applikationsbereich gelangt, da sich dieses Hilfsmaterial hierzu entgegen der Strömungsrichtung des Rohgasstroms durch die Einlassöffnung bewegen müsste.

Bei Verwendung einer solchen Filtervorrichtung kann auf eine zusätzliche Düsenanordnung zum Einsprühen von Hilfsmaterial in den Rohgasstrom verzichtet werden.

Ferner ist es bei Verwendung einer solchen Filtervorrichtung nicht erforderlich, Teile des Strömungswegs des Rohgasstroms vom Applikationsbereich zu der Filtervorrichtung während der Zugabe von Hilfsmaterial in den Rohgasstrom zeitweise zu verschließen.

Vorzugsweise wird das Hilfsmaterial ausschließlich innerhalb der Filtervorrichtung, nachdem der Rohgasstrom die Einlassöffnung der Filtervorrichtung passiert hat, in den Rohgasstrom eingebracht.

Um die Strömungsrichtung des Rohgasstroms möglichst präzise ausrichten zu können, ist vorzugsweise vorgesehen, dass die Einlassöffnung als ein sich in der Strömungsrichtung des Rohgasstroms erstreckender Einlasskanal ausgebildet ist.

Um die maximale Strömungsgeschwindigkeit des Rohgasstroms in dem Einlasskanal zu erhöhen, kann vorgesehen sein, dass der Einlasskanal einen sich in der Strömungsrichtung des Rohgasstroms bis zu einer Engstelle hin verengenden durchströmbaren Querschnitt aufweist.

Um die Strömungsgeschwindigkeit des Rohgasstroms nach dem Passieren einer Engstelle, an welcher der Rohgasstrom seine maximale Strömungsgeschwindigkeit aufweist, wieder abzusenken und so zu verhindern, dass der Rohgasstrom mit einer zu hohen Strömungsgeschwindigkeit auf das Hilfsmaterial in dem Hilfsmaterialaufnahmebehälter trifft, kann vorgesehen sein, dass der Einlasskanal einen sich in der Strömungsrichtung des Rohgasstroms von einer Engstelle aus erweiternden durchströmbaren Querschnitt aufweist.

Bei einer bevorzugten Ausgestaltung der Erfindung ist die Einlassöffnung nach unten durch eine untere Leitfläche begrenzt.

Für die angestrebte Lenkung des Rohgasstroms in den Hilfsmaterialaufnahmebehälter hinein ist es günstig, wenn die untere Leitfläche zumindest abschnittsweise gegen die Horizontale geneigt ist, und zwar insbesondere so, dass die untere Leitfläche - in der Strömungsrichtung des Rohgasstroms gesehen - nach unten geneigt ist.

Als besonders günstig hat es sich erwiesen, wenn die untere Leitfläche zumindest abschnittsweise unter einem Winkel von mindestens ungefähr 30°, vorzugsweise unter einem Winkel von mindestens ungefähr 40°, gegen die Horizontale geneigt ist.

Ferner hat es sich als günstig erwiesen, wenn die untere Leitfläche zumindest abschnittsweise unter einem Winkel von höchstens ungefähr 75°, vorzugsweise von höchstens ungefähr 65°, gegen die Horizontale geneigt ist.

Um ein Abreißen der Rohgasströmung an der unteren Leitfläche zu verhindern und eine gerichtete Strömung in den Hilfsmaterialaufnahmebehälter zu gewährleisten, ist es von Vorteil, wenn die untere Leitfläche einen oberen Abschnitt und einen in der Strömungsrichtung des Rohgasstroms auf den oberen Abschnitt folgenden unteren Abschnitt aufweist, wobei der untere Abschnitt stärker gegenüber der Horizontalen geneigt ist als der obere Abschnitt.

Ferner ist es zur Lenkung der Rohgasströmung günstig, wenn die Einlassöffnung nach oben durch eine obere Leitfläche begrenzt ist.

Auch die obere Leitfläche ist vorzugsweise zumindest abschnittsweise gegen die Horizontale geneigt, und zwar insbesondere derart, dass die obere Leitfläche - in der Strömungsrichtung des Rohgasstroms gesehen - nach unten geneigt ist.

Dabei hat es sich als günstig erwiesen, wenn die obere Leitfläche zumindest abschnittsweise unter einem Winkel von mindestens ungefähr 30°, vorzugsweise unter einem Winkel von mindestens ungefähr 40°, gegen die Horizontale geneigt ist.

Außerdem hat es sich als günstig erwiesen, wenn die obere Leitfläche zumindest abschnittsweise unter einem Winkel von höchstens ungefähr 75°, vorzugsweise unter einem Winkel von höchstens ungefähr 65°, gegen die Horizontale geneigt ist.

Die mittlere Strömungsgeschwindigkeit des Rohgasstroms beim Passieren der engsten Stelle der Einlassöffnung sollte ausreichend hoch sein, um ein Ausströmen von Hilfsmaterial oder von von dem mindestens einen Filterelement abgereinigtem Fluidlack-Overspray durch die Einlassöffnung zu verhindern.

Vorzugsweise beträgt die mittlere Strömungsgeschwindigkeit des Rohgasstroms beim Passieren der engsten Stelle der Einlassöffnung mindestens ungefähr 2 m/s, insbesondere mindestens ungefähr 3 m/s.

Ferner hat es sich als günstig erwiesen, wenn die mittlere Strömungsgeschwindigkeit des Rohgasstroms beim Passieren der engsten Stelle der Einlassöffnung höchstens ungefähr 8 m/s, vorzugsweise höchstens ungefähr 5 m/s beträgt.

Um eine gut ausgerichtete Strömung des Rohgases in den Hilfsmaterialaufnahmebehälter zu erreichen, ist die Einlassöffnung vorzugsweise so ausgebildet, dass die Strömung des Rohgases im Bereich der Einlassöffnung nicht abreißt.

Um zu erreichen, dass der mit Overspray beladene Rohgasstrom vor dem Erreichen des mindestens einen Filterelements möglichst wenig mit Bauteilen der Filtervorrichtung in Kontakt kommt, an denen sich der Overspray absetzen könnte, ist es von Vorteil, wenn der Hilfsmaterialaufnahmebehälter so ausgebildet und relativ zu der Einlassöffnung angeordnet ist, dass der aus der Einlassöffnung austretende Rohgasstrom in dem Hilfsmaterialaufnahmebehälter zu dem mindestens einen Filterelement hin umgelenkt wird.

Um zu erreichen, dass möglichst wenig Hilfsmaterial in den Bereich der Einlassöffnung der Filtervorrichtung gelangt, ist es günstig, wenn die Filtervorrichtung mindestens ein Rückhalteelement umfasst, welches Hilfsmaterial aus dem Hilfsmaterialaufnahmebehälter von der Einlassöffnung fernhält.

Ein solches Rückhalteelement ist besonders wirksam, wenn es in einen Innenraum der Filtervorrichtung und/oder in einen Innenraum des Hilfsmaterialaufnahmebehälters hineinragt.

Bei einer bevorzugten Ausgestaltung der Erfindung ist vorgesehen, dass das Rückhalteelement, das beispielsweise als ein Rückhalteblech ausgebildet sein kann, eine untere Begrenzung der Einlassöffnung bildet.

In diesem Fall kann insbesondere vorgesehen sein, dass das Rückhalteelement einen Abschnitt einer Leitfläche für den Rohgasstrom aufweist, welcher stärker gegenüber der Horizontalen geneigt ist als ein in der Strömungsrichtung des Rohgasstroms vor dem an dem Rückhalteelement angeordneten Abschnitt der Leitfläche angeordneter weiterer Abschnitt der Leitfläche. Hierdurch wird ein Abreißen der Rohgasströmung an der Leitfläche wirksam verhindert.

Ferner ist es von Vorteil, wenn die Filtervorrichtung mindestens ein Filterabschirmelement umfasst, welches so ausgebildet und angeordnet ist, dass es verhindert, dass das in die Filtervorrichtung eintretende Rohgas von der Einlassöffnung direkt zu dem mindestens einen Filterelement strömt. Hierdurch wird erreicht, dass möglichst der gesamte in die Filtervorrichtung eintretende Rohgasstrom zunächst direkt in den Hilfsmaterialaufnahmebehälter und erst dann, mit Hilfsmaterial beladen, zu dem mindestens einen Filterelement gelangt.

Ein solches Filterabschirmelement kann insbesondere als ein Abschirmblech ausgebildet sein.

Um möglichst zu verhindern, dass von dem mindestens einen Filterelement abgereinigtes Material (Hilfsmaterial und Fluidlack-Overspray) in den Bereich der Einlassöffnung der Filtervorrichtung gelangt, ist es von Vorteil, wenn die Filtervorrichtung mindestens ein Abweiselement umfasst, welches von dem mindestens einen Filterelement abgereinigtes Material von der Einlassöffnung des Rohgases fernhält.

Vorzugsweise lenkt das mindestens eine Abweiselement das von dem mindestens einen Filterelement abgereinigte Material in den Hilfsmaterialaufnahmebehälter.

Ein solches Abweiselement kann insbesondere als ein Abweisblech ausgebildet sein.

Um zu verhindern, dass sich Hilfsmaterial und/oder Overspray im Bereich der Einlassöffnung ablagert, ist es von Vorteil, wenn die Filtervorrichtung mindestens ein Abdeckelement umfasst, das einen Eckbereich der Einlassöffnung abdeckt, so dass Hilfsmaterial und/oder Overspray von dem Eckbereich der Einlassöffnung ferngehalten wird.

Ein solches Abdeckelement kann ferner insbesondere eine im Wesentlichen dreieckige Abdeckfläche aufweisen.

Ein solches Abdeckelement kann insbesondere als ein Abdeckblech ausgebildet sein.

Alternativ oder ergänzend zum Vorsehen eines solchen Abdeckelements kann vorgesehen sein, dass die Einlassöffnung an mindestens einem Eckbereich eine Eckfläche aufweist, welche schräg zur Vertikalen und schräg zur Horizontalen ausgerichtet ist, so dass Hilfsmaterial und/oder Overspray durch die Neigung der Eckfläche an der Eckfläche nach unten abrutscht.

Eine solche Eckfläche kann insbesondere an einem im Eckbereich der Einlassöffnung vorgesehenen Abdeckelement vorgesehen sein.

Um die vom Rohgasstrom beim Durchströmen des Hilfsmaterialaufnahmebehälters aufgenommene Hilfsmaterialmenge zu erhöhen, kann die Filtervorrichtung mindestens eine Aufwirbelungseinrichtung zum Aufwirbeln von in dem Hilfsmaterialaufnahmebehälter befindlichem Hilfsmaterial umfassen.

Die beschriebene Filtervorrichtung eignet sich insbesondere zur Verwendung in einer Vorrichtung zum Abtrennen von Fluidlack-Overspray aus einem Overspray-Partikel enthaltenden Rohgasstrom, welche mindestens eine solche Filtervorrichtung und eine Strömungskammer umfasst, durch welche der Rohgasstrom von einem Applikationsbereich einer Lackieranlage zu der Einlassöffnung der mindestens einen Filtervorrichtung strömt.

Vorzugsweise nimmt dabei der von dem Rohgasstrom durchströmbare Querschnitt der Strömungskammer längs der Strömungsrichtung des Rohgasstroms bis zu der mindestens einen Einlassöffnung der mindestens einen Filtervorrichtung ab. Hierdurch nimmt die Strömungsgeschwindigkeit des Rohgasstroms beim Durchströmen der Strömungskammer bis zu der mindestens einen Einlassöffnung der mindestens einen Filtervorrichtung zu, was verhindert, dass Hilfsmaterial und/oder Overspray aus der Filtervorrichtung entgegen der Strömungsrichtung des Rohgasstroms zu dem Applikationsbereich der Lackieranlage gelangt.

Insbesondere kann vorgesehen sein, dass die Strömungskammer durch mindestens eine im Wesentlichen horizontale Begrenzungswand begrenzt ist, durch welche der von dem Rohgasstrom durchströmbare Querschnitt der Strömungskammer sprunghaft abnimmt.

Ferner ist es von Vorteil, wenn die Vorrichtung mindestens ein Strömungsleitblech umfasst, das über mindestens einer Filtervorrichtung angeordnet ist und so unter einem Winkel von höchstens ungefähr 10°, vorzugsweise unter einem Winkel von höchstens ungefähr 3°, gegen die Horizontale geneigt ist, dass auf das Strömungsleitblech gelangende Flüssigkeit nicht in den Strömungsweg des Rohgasstroms gelangt. Hierdurch wird verhindert, dass beispielsweise durch Schlauchplatzer im Applikationsbereich austretender Fluidlack oder Löschwasser in den Strömungsweg des Rohgasstroms und von dort in die Filtervorrichtung gelangen.

Wenn die Vorrichtung mindestens einen durch eine Bedienungsperson begehbaren Steg umfasst, so ist dessen Oberseite vorzugsweise zumindest abschnittsweise so unter einem Winkel von höchstens ungefähr 10°, vorzugsweise unter einem Winkel von höchstens ungefähr 3°, gegen die Horizontale geneigt, dass auf den begehbaren Steg gelangende Flüssigkeit nicht in den Strömungsweg des Rohgasstroms gelangt. Auch dies dient dazu, beispielsweise aufgrund von Schlauchplatzern im Applikationsbereich austretenden Fluidlack oder Löschwasser aus dem Strömungsweg des Rohgasstroms durch die Strömungskammer herauszuhalten.

Die beschriebene Vorrichtung zum Abtrennen von Fluidlack-Overspray eignet sich insbesondere zur Verwendung in einer Anlage zum Lackieren von Gegenständen, insbesondere von Fahrzeugkarosserien, die mindestens einen Applikationsbereich zum Applizieren von Fluidlack auf die zu lackierenden Gegenstände und mindestens eine solche Vorrichtung zum Abtrennen von Fluidlack-Overspray umfasst.

Dabei hat es sich als günstig erwiesen, wenn der vertikale Abstand des Applikationsbereichs von der Einlassöffnung der Filtervorrichtung mindestens ungefähr 1,0 m, vorzugsweise mindestens ungefähr 1,5 m, beträgt.

Die vorliegende Erfindung kann den Vorteil bieten, dass so wenig Overspray wie möglich an den Wänden der Strömungskammer oder an den Wänden der Filtervorrichtung auf dem Weg zu dem mindestens einen Filterelement kleben bleibt.

Das mindestens eine Filterelement ist vorzugsweise in einer weitestgehend geschlossenen Box untergebracht, so dass kein Hilfsmaterial oder von dem Filterelement abgereinigter Overspray in den Applikationsbereich gelangt, ohne dass hierfür Teile des Strömungswegs des Rohgasstroms zeitweise abgesperrt werden müssen.

Die Luftströmung innerhalb der Filtervorrichtung kann so gestaltet sein, dass eine möglichst homogene Verteilung des Hilfsmaterials an dem Filterelement oder an den Filterelementen erfolgt.

Die Kapazität der beschriebenen Filtervorrichtung kann auf die den Applikationsbereich durchsetzende Rohgasmenge abgestimmt werden.

Die beschriebene Filtervorrichtung eignet sich insbesondere zur Verwendung in trockenen Fluidlack-Overspray-Abscheidungssystemen für Lackierkabinen in der Automobilindustrie oder im allgemeinen Industrie-Lackieranlagenbereich.

Die beschriebene Filtervorrichtung kann eine Beaufschlagung des Rohgasstroms mit Hilfsmaterial und eine Abreinigung der Filterelemente während des laufenden Lackierprozesses ermöglichen.

Die Vorrichtung zum Abtrennen von Fluidlack-Overspray aus dem Overspray-Partikel enthaltenden Rohgasstrom umfasst mindestens eine Filtervorrichtung zum Abtrennen von Fluidlack-Overspray aus dem Overspray-Partikel enthaltenden Rohgasstrom, wobei die Filtervorrichtung mindestens ein Filterelement zum Abtrennen des Oversprays aus dem Rohgasstrom und mindestens einen Hilfsmaterialaufnahmebehälter zum Aufnehmen eines Hilfsmaterials umfasst. Dieses Hilfsmaterial wird dem mit Fluidlack-Overspray beladenen Rohgasstrom zugegeben, bevor der Rohgasstrom mindestens ein Filterelement zum Abtrennen des Oversprays aus dem Rohgasstrom passiert hat. Der Hilfsmaterialaufnahmebehälter ist vorzugsweise mit mindestens einem Füllstandssensor zur Ermittlung des Füllstands des Hilfsmaterials in dem Hilfsmaterialaufnahmebehälter versehen.

Diese Ausbildung des Hilfsmaterialaufnahmebehälters ermöglicht es, den aktuellen Betriebszustand des Hilfsmaterialaufnahmebehälters in einfacher Weise zu überwachen, um insbesondere eine Entleerung eines Gemisches aus Hilfsmaterial und Fluidlack-Overspray aus dem Hilfsmaterialaufnahmebehälter gezielt steuern zu können.

Im Laufe des Betriebs des Hilfsmaterialaufnahmebehälters nimmt in diesem Fall der Anteil des Fluidlack-Oversprays an dem im Hilfsmaterialaufnahmebehälter befindlichen Gemisch aus Hilfsmaterial und Fluidlack-Overspray immer weiter zu, was dazu führt, dass die Dichte des Gemisches abnimmt. Die Sperrschicht, welche sich auf dem mindestens einen Filterelement aufbaut, weist daher ein immer größeres Volumen auf. Der Füllstand des Materials im Hilfsmaterialaufnahmebehälter unmittelbar vor einem Abreinigungsvorgang des Filterelements nimmt daher immer weiter ab. Aus dem jeweiligen Füllstand des Hilfsmaterials in dem Hilfsmaterialaufnahmebehälter vor einem Abreinigungsvorgang des mindestens einen Filterelements kann daher auf den Anteil des Fluidlack-Oversprays an dem im Hilfsmaterialaufnahmebehälter befindlichen Gemisch geschlossen werden.

Umgekehrt nimmt der Füllstand des Materials im Hilfsmaterialaufnahmebehälter unmittelbar nach einem Abreinigungsvorgang des mindestens einen Filterelements mit wachsender Betriebsdauer immer weiter zu, da durch das Abreinigen das gesamte an dem Filterelement abgeschiedene Material einschließlich des abgeschiedenen Fluidlack-Oversprays in den Hilfsmaterialaufnahmebehälter gelangt und unmittelbar nach einem Abreinigungsvorgang noch keine neue Sperrschicht an dem Filterelement aufgebaut ist. Auch aus dem Füllstand des Materials im Hilfsmaterialaufnahmebehälter unmittelbar nach einem Abreinigungsvorgang kann daher auf den Anteil des Fluidlack-Oversprays an dem im Hilfsmaterialaufnahmebehälter befindlichen Gemisch geschlossen werden.

Mittels eines Füllstandssensors zur Ermittlung des Füllstands des Hilfsmaterials in dem Hilfsmaterialaufnahmebehälter kann also der Betriebszustand des Hilfsmaterialaufnahmebehälters und der Zustand des darin befindlichen Materials zuverlässig und für jeden Hilfsmaterialaufnahmebehälter einzeln überwacht werden.

Um den Füllstand im Hilfsmaterialaufnahmebehälter möglichst genau ermitteln zu können, ist der Füllstandssensor vorzugsweise dazu in der Lage, ein Signal zu erzeugen, das einem Wert aus einer Vielzahl diskreter Füllstandshöhen oder aus einem Kontinuum von Füllstandshöhen entspricht.

Bei einer bevorzugten Ausgestaltung der Erfindung ist vorgesehen, dass der Füllstandssensor als ein analoger Sensor ausgebildet ist.

Insbesondere kann der Füllstandssensor als ein kapazitiver Sensor ausgebildet sein.

Um das Messergebnis des Füllstandssensors möglichst wenig durch Randeffekte zu beeinträchtigen, ist es von Vorteil, wenn der Füllstandssensor so in einem Innenraum des Hilfsmaterialaufnahmebehälters angeordnet ist, dass er von Wänden des Hilfsmaterialaufnahmebehälters beabstandet ist.

Als besonders günstig hat es sich erwiesen, wenn der Füllstandssensor ein im Wesentlichen stabförmiges Sensorelement umfasst.

Die Längsrichtung des Füllstandssensors, also insbesondere die Längsrichtung des stabförmigen Sensorelements, ist vorzugsweise im Wesentlichen vertikal ausgerichtet, um hinsichtlich der verschiedenen messbaren Füllstandshöhen eine möglichst große Auflösung zu erhalten.

Vorzugsweise ist die Längsrichtung des Füllstandssensors, also insbesondere die Längsrichtung des stabförmigen Sensorelements, im Wesentlichen senkrecht zu einem Boden des Hilfsmaterialaufnahmebehälters ausgerichtet.

Um das im Hilfsmaterialaufnahmebehälter befindliche Material durchmischen und dessen Oberfläche glätten sowie durch Unterhöhlung entstandene Materialbrücken aufbrechen zu können, ist es von Vorteil, wenn der Hilfsmaterialaufnahmebehälter mit einer Einrichtung zum Durchmischen des im Hilfsmaterialaufnahmebehälter befindlichen Materials versehen ist.

Eine solche Durchmischungseinrichtung kann beispielsweise als ein Fluidboden des Hilfsmaterialaufnahmebehälters ausgebildet sein, durch den ein gasförmiges Medium, insbesondere Druckluft, hindurchtreten kann, um das im Innenraum des Hilfsmaterialaufnahmebehälters befindliche Material zu fluidisieren und so lokal unterschiedliche Füllhöhen des Materials innerhalb des Hilfsmaterialaufnahmebehälters zu egalisieren.

Alternativ oder ergänzend hierzu kann auch vorgesehen sein, dass der Hilfsmaterialaufnahmebehälter mit einem Rührwerk zum Durchmischen des Materials und zum Vergleichmäßigen der Vorlage versehen ist.

Ein solches Rührwerk kann eine mit Paddeln versehene Welle umfassen.

Die Welle kann im Wesentlichen horizontal oder im Wesentlichen vertikal ausgerichtet sein.

Die Paddel können in einem Winkelabstand voneinander und/oder in Axialrichtung der Welle zueinander versetzt an der Welle angeordnet sein.

Die Welle kann beispielsweise elektromotorisch zu einer Drehbewegung antreibbar sein.

Alternativ oder ergänzend hierzu kann auch vorgesehen sein, dass die Welle pneumatisch, insbesondere mittels einer mit Druckluft beaufschlagten Turbine, zu einer Drehbewegung antreibbar ist. Ein pneumatischer Antrieb bietet den Vorteil, dass eine Funkenbildung vermieden und ein ausreichender Explosionsschutz gewährleistet wird.

Um zu verhindern, dass der Boden des Hilfsmaterialaufnahmebehälters, insbesondere ein Fluidboden, durch herabfallende größere Gegenstände beschädigt wird, ist es günstig, wenn der Hilfsmaterialaufnahmebehälter mindestens eine Rückhaltevorrichtung umfasst, welche verhindert, dass Gegenstände zu dem Boden des Hilfsmaterialaufnahmebehälters gelangen.

Eine solche Rückhaltevorrichtung kann insbesondere ein oberhalb des Bodens des Hilfsmaterialaufnahmebehälters angeordnetes Rückhaltegitter umfassen, welches Durchtrittsöffnungen für den Durchtritt von Hilfsmaterial und Overspray durch das Rückhaltegitter aufweist.

Um den Zugang zu dem Innenraum des Hilfsmaterialaufnahmebehälters für Wartungszwecke zu ermöglichen, kann vorgesehen sein, dass der Hilfsmaterialaufnahmebehälter an einer Seitenwand eine Zugangsöffnung aufweist, welche durch ein Verschlusselement verschließbar ist.

Insbesondere kann vorgesehen sein, dass der Innenraum des Hilfsmaterialaufnahmebehälters durch eine durch die Zugangsöffnung hindurchtretende Bedienungsperson begehbar ist.

Dabei kann der Füllstandssensor mittelbar oder unmittelbar an dem Verschlusselement der Zugangsöffnung, beispielsweise an einer Revisionstür, gehalten sein.

Um das Hilfsmaterial aufzuwirbeln und so in einen durch den Hilfsmaterialaufnahmebehälter hindurchgeführten Rohgasstrom einzubringen, und/oder um eine Homogenisierung der in dem Hilfsmaterialaufnahmebehälter vorhandenen Mischung aus Hilfsmaterial und daran gebundenem Overspray zu erzielen, kann der Hilfsmaterialaufnahmebehälter mit einer Aufwirbelungseinrichtung zum Aufwirbeln des in dem Hilfsmaterialaufnahmebehälter befindlichen Hilfsmaterials versehen sein.

In diesem Fall ist es für Wartungs- und Reparaturzwecke besonders günstig, wenn der Füllstandssensor mit der Aufwirbelungseinrichtung zu einer gemeinsam handhabbaren Einheit verbunden ist.

Insbesondere kann vorgesehen sein, dass der Füllstandssensor und die Aufwirbelungseinrichtung gemeinsam an dem Verschlusselement der Zugangsöffnung in der Seitenwand des Hilfsmaterialaufnahmebehälters gehalten sind, so dass der Füllstandssensor und die Aufwirbelungseinrichtung durch Abnehmen des Verschlusselements von der Zugangsöffnung aus dem Innenraum des Hilfsmaterialaufnahmebehälters entnehmbar sind.

Die Aufwirbelungseinrichtung umfasst vorzugsweise mindestens eine Austrittsdüse für ein unter erhöhtem Druck stehendes gasförmiges Medium.

Die Austrittsdüse kann statisch oder drehbar an einer Halterung der Aufwirbelungseinrichtung angeordnet sein.

In beiden Fällen kann vorgesehen sein, dass die Ausrichtung der Austrittsdüse relativ zu den Seitenwänden des Hilfsmaterialaufnahmebehälters verstellbar ist.

Bei dem unter erhöhtem Druck stehenden gasförmigen Medium kann es sich beispielsweise um Druckluft mit einem absoluten Druck von mindestens ungefähr 2 bar handeln.

Vorzugsweise umfasst die Aufwirbelungseinrichtung mindestens zwei Austrittsdüsen. Auch eine höhere Zahl von Austrittsdüsen, beispielsweise vier Austrittsdüsen, ist denkbar.

Die Austrittsdüse ist vorzugsweise ungefähr mittig im Hilfsmaterialaufnahmebehälter angeordnet. Der Abstand zur Oberseite des im Hilfsmaterialaufnahmebehälter befindlichen Materials sollte mindestens ungefähr 15 cm betragen.

Vorzugsweise ist mindestens eine Austrittsdüse der Aufwirbelungseinrichtung als eine Kegeldüse ausgebildet.

Das aus der Austrittsdüse oder aus den Austrittsdüsen austretende gasförmige Medium bildet bei einer bevorzugten Ausgestaltung der Erfindung einen Medienkegel, der eine Bodenfläche des Hilfsmaterialaufnahmebehälters im Wesentlichen vollständig überstreicht, um so eine verbesserte Ausnutzung der Materialvorlage zu erzielen.

Der beschriebene Hilfsmaterialaufnahmebehälter eignet sich zur Verwendung in einer Filtervorrichtung zum Abtrennen von Fluidlack-Overspray aus einem Overspray-Partikel enthaltenden Rohgas, welche mindestens ein Filterelement zum Abtrennen des Oversprays aus dem Rohgasstrom und mindestens einen solchen Hilfsmaterialaufnahmebehälter umfasst.

Dabei ist der Hilfsmaterialaufnahmebehälter vorzugsweise so unterhalb von mindestens einem Filterelement der Filtervorrichtung angeordnet, dass beim Abreinigen des Filterelements von demselben herabfallendes Material (ein Gemisch aus Hilfsmaterial und Fluidlack-Overspray) in den Hilfsmaterialaufnahmebehälter gelangt.

Ferner ist vorgesehen, dass der Hilfsmaterialaufnahmebehälter sich im Strömungsweg der die Filtervorrichtung von einer Eintrittsöffnung bis zu dem mindestens einen Filterelement durchströmenden Rohgasströmung befindet.

Der Hilfsmaterialaufnahmebehälter enthält ein Gemisch aus Hilfsmaterial und daran gebundenem Fluidlack-Overspray, welches durch Abreinigen des mindestens einen Filterelements in den Hilfsmaterialaufnahmebehälter gelangt.

Die beschriebene Filtervorrichtung eignet sich zur Verwendung in einer Vorrichtung zum Abtrennen von Fluidlack-Overspray aus einem Overspray-Partikel enthaltenden Rohgasstrom, welche mindestens eine solche Filtervorrichtung und eine Strömungskammer, durch welche der Rohgasstrom von einem Applikationsbereich einer Lackieranlage zu einer Einlassöffnung der mindestens einen Filtervorrichtung strömt, umfasst.

Eine solche Vorrichtung zum Abtrennen von Fluidlack-Overspray eignet sich zur Verwendung in einer Anlage zum Lackieren von Gegenständen, insbesondere von Fahrzeugkarosserien, welche mindestens einen Applikationsbereich zum Applizieren von Fluidlack auf die zu lackierenden Gegenstände und mindestens eine solche Vorrichtung zum Abtrennen von Fluidlack-Overspray umfasst.

Ferner kann vorgesehen sein, dass die Lackieranlage eine Vorrichtung zum Einbringen von Hilfsmaterial in den Strömungsweg eines mit Fluidlack-Overspray beladenen Rohgasstroms, bevor der Rohgasstrom mindestens ein Filterelement zum Abtrennen des Oversprays aus dem Rohgasstrom passiert hat, umfasst, wobei die Vorrichtung zum Einbringen von Hilfsmaterial Folgendes umfasst:
- eine Ermittlungseinrichtung zum Ermitteln, ob eine ausreichende Rohgasströmung durch das mindestens eine Filterelement vorhanden ist; und
- eine Sperreinrichtung zum Sperren des Einbringens von Hilfsmaterial in den Strömungsweg des Rohgasstroms, wenn die Ermittlungseinrichtung das Fehlen einer ausreichenden Rohgasströmung feststellt.

Hierdurch ist es möglich, ein Einbringen von Hilfsmaterial in den Applikationsbereich einer Lackieranlage auch bei nicht ordnungsgemäßem Betrieb zuverlässig zu verhindern.

Unter einer ausreichenden Rohgasströmung ist dabei eine solche Rohgasströmung zu verstehen, bei welcher pro Zeiteinheit eine (beispielsweise empirisch ermittelte) vorgegebene Mindestmenge von Rohgas das mindestens eine Filterelement zum Abtrennen des Oversprays passiert.

Wenn keine solche ausreichende Rohgasströmung durch das mindestens eine Filterelement vorhanden ist, besteht die Gefahr, dass in den Strömungsweg des Rohgasstroms eingebrachtes Hilfsmaterial entgegen der normalen Strömungsrichtung des Rohgasstroms in den Applikationsbereich der Lackieranlage gelangt.

Durch das beschriebene Sperren des Einbringens von Hilfsmaterial in den Strömungsweg des Rohgasstroms bei Fehlen einer ausreichenden Rohgasströmung wird auch im Falle einer solchen Betriebsstörung ein Einbringen von Hilfsmaterial in den Applikationsbereich der Lackieranlage zuverlässig verhindert.

Dabei kann die Vorrichtung insbesondere eine Steuervorrichtung umfassen, welche als Ermittlungseinrichtung zum Ermitteln, ob eine ausreichende Rohgasströmung vorhanden ist, und/oder als eine Sperreinrichtung zum Sperren des Einbringens von Hilfsmaterial in den Strömungsweg des Rohgasstroms dient.

Die Vorrichtung zum Einbringen von Hilfsmaterial in den Strömungsweg des Rohgasstroms umfasst vorzugsweise mindestens eine Aufwirbelungseinrichtung zum Aufwirbeln von in einem Hilfsmaterialaufnahmebehälter befindlichen Hilfsmaterial, wobei die Funktion der Aufwirbelungseinrichtung bei Fehlen einer ausreichenden Rohgasströmung sperrbar ist.

Ferner kann die Vorrichtung zum Einbringen von Hilfsmaterial in den Rohgasstrom eine Abreinigungseinrichtung zum Abreinigen von Hilfsmaterial von mindestens einem Filterelement umfassen, wobei die Funktion der Abreinigungseinrichtung bei Fehlen einer ausreichenden Rohgasströmung sperrbar ist.

Insbesondere kann vorgesehen sein, dass die Vorrichtung zum Einbringen von Hilfsmaterial in den Strömungsweg des Rohgasstroms Drucksensoren zum Messen eines Druckabfalls an mindestens einem Filterelement umfasst.

Ferner kann vorgesehen sein, dass die Vorrichtung zum Einbringen von Hilfsmaterial in den Strömungsweg des Rohgasstroms mindestens eine Einrichtung zur Überwachung des Betriebszustands eines stromabwärts des mindestens einen Filterelements angeordneten Gebläses umfasst.

Dabei kann die Vorrichtung beispielsweise ein Stromüberwachungsgerät zur Überwachung des Betriebszustands des Gebläses umfassen.

Alternativ oder ergänzend hierzu kann die Vorrichtung einen Frequenzumrichter zur Überwachung des Betriebszustands des Gebläses umfassen.

Alternativ oder ergänzend hierzu kann die Vorrichtung auch einen Differenzdruckmesser zur Messung des Druckabfalls an dem Gebläse umfassen.

Ferner kann vorgesehen sein, dass die Vorrichtung zum Einbringen von Hilfsmaterial in den Strömungsweg des Rohgasstroms mindestens ein Durchflussmessgerät umfasst.

Insbesondere kann vorgesehen sein, dass mindestens ein Durchflussmessgerät stromabwärts des mindestens einen Filterelements angeordnet ist.

Eine solche Vorrichtung zum Einbringen von Hilfsmaterial in den Strömungsweg eines mit Fluidlack-Overspray beladenen Rohgasstroms eignet sich insbesondere zur Verwendung in einer Vorrichtung zum Abtrennen von Fluidlack-Overspray aus einem Overspray-Partikel enthaltenden Rohgasstrom, welche mindestens ein Filterelement zum Abtrennen des Oversprays aus dem Rohgasstrom und mindestens eine solche Vorrichtung zum Einbringen von Hilfsmaterial in den Strömungsweg des mit Fluidlack-Overspray beladenen Rohgasstroms umfasst.

Eine solche Vorrichtung zum Abtrennen von Fluidlack-Overspray eignet sich insbesondere zur Verwendung in einer Anlage zum Lackieren von Gegenständen, insbesondere von Fahrzeugkarosserien, welche mindestens einen Applikationsbereich zum Applizieren von Fluidlack auf die zu lackierenden Gegenstände und mindestens eine solche Vorrichtung zum Abtrennen von Fluidlack-Overspray umfasst.

Ferner kann vorgesehen sein, dass die Vorrichtung zum Abtrennen von Fluidlack-Overspray aus dem Overspray-Partikel enthaltenden Rohgasstrom mindestens eine Einheit umfasst, wobei die Einheit Folgendes umfasst:
- einen Filterelementaufnahmeraum zur Aufnahme mindestens eines Filterelements zum Abtrennen des Oversprays aus dem Rohgasstrom;
- mindestens einen Hilfsmaterialaufnahmebehälter zur Aufnahme eines Hilfsmaterials, das dem Rohgasstrom zugegeben wird, bevor der Rohgasstrom das mindestens eine Filterelement passiert;
- mindestens eine Trennwand zum Abtrennen des Filterelementaufnahmeraums von einer Strömungskammer der Vorrichtung zum Abtrennen von Fluidlack-Overspray, welche von dem Rohgasstrom vor dessen Eintritt in die Einheit durchströmt wird; und
- mindestens eine Einlassöffnung, durch welche der Rohgasstrom aus der Strömungskammer in die Einheit eintritt.

Durch die Verwendung von einer oder vorzugsweise mehreren Einheiten dieser Art wird eine Möglichkeit zur besonders einfachen und raschen Montage einer Vorrichtung zum Abtrennen von Fluidlack-Overspray aus einem Overspray-Partikel enthaltenden Rohgasstrom geschaffen.

Durch Verwendung von einer oder vorzugsweise mehreren Einheiten dieser Art, welche in einer oder in mehreren Reihen in einer Längsrichtung der Vorrichtung zum Abscheiden von Fluidlack-Overspray aneinandergereiht werden, wird in einfacher und rascher Weise eine Vorrichtung zur Abscheidung von Fluidlack-Overspray mit beliebiger Rohgasreinigungskapazität geschaffen.

Durch diese Modulbauweise ist eine solche modular aufgebaute Vorrichtung zum Abscheiden von Fluidlack-Overspray bei Bedarf auch nach der Ersterstellung durch Hinzufügen weiterer Module oder Einheiten beliebig erweiterbar.

Eine solche Einheit wird im Folgenden auch als Modul, als Filtermodul oder als Filtervorrichtung bezeichnet.

Die Strömungsverhältnisse des Rohgasstroms in dem Filterelementaufnahmeraum jeder Einheit bleiben dabei von einer Hinzufügung weiterer Einheiten zur Kapazitätserweiterung unberührt. Dies liegt daran, dass diese Strömungsverhältnisse im Wesentlichen durch die Dimensionierung der Einlassöffnung bestimmt werden, durch welche der Rohgasstrom aus der Strömungskammer in die Einheit eintritt, und daran, dass jede Einheit durch eine eigene Trennwand von der Strömungskammer, welche von dem Rohgasstrom vor dessen Eintritt in die Einheit durchströmt wird, abgetrennt ist.

Die Trennwand der Einheit kann eine schräg zur Horizontalen oder im Wesentlichen vertikal verlaufende Wand umfassen.

Die Einlassöffnung der Einheit kann nach oben hin durch einen unteren Rand der Trennwand, insbesondere einer schräg zur Horizontalen oder im Wesentlichen vertikal verlaufenden Wand der Trennwand, begrenzt sein.

Jede der Einheiten stellt somit eine autarke Filtervorrichtung zum Abtrennen von Fluidlack-Overspray aus einem Overspray-Partikel enthaltenden Rohgasstrom dar, welche einzeln oder mit anderen Einheiten gemeinsam verwendbar ist.

Bei einer bevorzugten Ausgestaltung der Erfindung ist vorgesehen, dass die Einlassöffnung der Einheit nach unten durch eine untere Leitfläche begrenzt ist.

Für die gewünschte Lenkung des Rohgasstroms in den Innenraum der Einheit, d.h. in den Hilfsmaterialaufnahmebehälter, hinein ist es günstig, wenn die untere Leitfläche zumindest abschnittsweise gegen die Horizontale geneigt ist, und zwar insbesondere so, dass die untere Leitfläche - in der Strömungsrichtung des Rohgasstroms gesehen - nach unten geneigt ist.

Als besonders günstig hat es sich erwiesen, wenn die untere Leitfläche zumindest abschnittsweise unter einem Winkel von mindestens ungefähr 30°, vorzugsweise unter einem Winkel von mindestens ungefähr 40°, gegen die Horizontale geneigt ist.

Ferner hat es sich als günstig erwiesen, wenn die untere Leitfläche zumindest teilweise an einem Leitelement ausgebildet ist, welches zu einer Seite hin über eine Tragekonstruktion der Einheit vorsteht.

Ein solches Leitelement kann insbesondere als eine Einlaufschräge ausgebildet sein.

Bei einer bevorzugten Ausgestaltung der beschriebenen Einheit ist vorgesehen, dass die Einheit mindestens ein in dem Filterelementaufnahmeraum angeordnetes Filterelement umfasst.

Um die Einheiten in einfacher Weise miteinander oder mit zwischen jeweils zwei benachbarten Modulen angeordneten Trennwänden verbinden zu können, ist es günstig, wenn die Einheit mindestens ein Verbindungselement zum Verbinden der Einheit mit einer benachbarten weiteren Einheit oder einer benachbarten Trennwand umfasst.

Ein solches Verbindungselement kann insbesondere einen Teil einer Tragekonstruktion der Einheit bilden.

Beispielsweise kann vorgesehen sein, dass das Verbindungselement als eine im Wesentlichen vertikal verlaufende Stütze ausgebildet ist.

Ferner kann das Verbindungselement eine Anlagefläche zum Anlegen an eine Anlagefläche einer benachbarten Einheit oder an eine benachbarte Trennwand aufweisen.

Insbesondere um eine solche ebene Anlagefläche und eine ausreichende mechanische Stabilität zur Verfügung stellen zu können, ist es günstig, wenn das Verbindungselement zumindest abschnittsweise einen im Wesentlichen U-förmigen Querschnitt aufweist.

Um einzelne Einheiten bei Bedarf, beispielsweise für Reparatur- und/oder Wartungszwecke, in einfacher Weise aus einer Reihe miteinander verbundener Einheiten herauslösen zu können, ist es von Vorteil, wenn das Verbindungselement lösbar mit einer benachbarten Einheit oder mit einer benachbarten Trennwand verbindbar ist.

Insbesondere kann vorgesehen sein, dass das Verbindungselement mit einer benachbarten Einheit oder mit einer benachbarten Trennwand verschraubbar ist.

Durch eine Verschraubung der Verbindungselemente miteinander wird die von den Verbindungselementen aufnehmbare statische Belastung erhöht.

Bei einer bevorzugten Ausgestaltung der Erfindung ist vorgesehen, dass die Einheit eine Tragekonstruktion umfasst, welche mindestens eines der anderen Elemente der Einheit, vorzugsweise alle anderen Elemente der Einheit, trägt.

Die beschriebene Einheit ist vorzugsweise vormontierbar, so dass sie nach der Vormontage als Ganzes in einem vormontierten Zustand gehandhabt und transportiert werden kann.

Die beschriebene Einheit eignet sich insbesondere zur Verwendung in einer Vorrichtung zum Abtrennen von Fluidlack-Overspray aus einem Overspray-Partikel enthaltenden Rohgasstrom, welche mindestens eine solche Einheit und eine Strömungskammer, welche von dem Rohgasstrom vor dessen Eintritt in die mindestens eine Einheit durchströmt wird, umfasst.

Bei einer bevorzugten Ausgestaltung einer solchen Vorrichtung ist vorgesehen, dass die Vorrichtung mindestens zwei Einheiten umfasst, die in einer Längsrichtung der Vorrichtung aufeinanderfolgen.

Dabei kann insbesondere vorgesehen sein, dass mindestens zwei Einheiten unmittelbar nebeneinander angeordnet sind.

Dabei können die beiden Einheiten lösbar miteinander verbunden sein.

Alternativ hierzu kann vorgesehen sein, dass die Vorrichtung mindestens eine Trennwand aufweist, durch welche die Filterelementaufnahmeräume von mindestens zwei in einer Längsrichtung der Vorrichtung aufeinanderfolgenden Einheiten voneinander getrennt sind. Durch eine solche Trennung der Filterelementaufnahmeräume einander benachbarter Einheiten werden Längsströmungen zwischen den Filterelementaufnahmeräumen der Einheiten und somit eine gegenseitige Beeinflussung der Strömungsverhältnisse in den Einheiten vermieden. Dadurch wird eine definierte Zonentrennung der Rohgasströmung durch die Einheiten erzielt, was eine wohldefinierte Einstellung der Rohgasströmung innerhalb der einzelnen Einheiten ermöglicht.

Ferner kann vorgesehen sein, dass die Vorrichtung auch mindestens eine Trennwand aufweist, durch welche in einer Längsrichtung der Vorrichtung aufeinanderfolgende Abschnitte der Strömungskammer voneinander getrennt sind.

Dabei können die Trennwände, welche die in einer Längsrichtung der Vorrichtung aufeinanderfolgenden Abschnitte der Strömungskammer voneinander trennen, mit den Trennwänden identisch sein, welche die Filterelementaufnahmeräume von in der Längsrichtung der Vorrichtung aufeinanderfolgenden Einheiten voneinander trennen.

Bei einer bevorzugten Ausgestaltung einer solchen Vorrichtung ist ferner vorgesehen, dass die Vorrichtung zum Abtrennen von Fluidlack-Overspray mindestens zwei Einheiten umfasst, die in einer Querrichtung der Vorrichtung voneinander beabstandet sind.

Dabei kann durch eine Veränderung des Abstands der in der Querrichtung der Vorrichtung voneinander beabstandeten Einheiten die Gesamtanordnung der Einheiten an die Breite der Strömungskammer der Vorrichtung angepasst werden, ohne dass es hierzu einer Veränderung an den Einheiten selbst bedarf.

Vorzugsweise sind die mindestens zwei Einheiten in diesem Fall so angeordnet, dass ihre jeweiligen Einlassöffnungen einander zugewandt sind.

Der zwischen den beiden mit ihren Einlassöffnungen einander zugewandten Einheiten verbleibende Bereich der Strömungskammer bildet einen verengten Abschnitt der Strömungskammer, in welchem die Strömungsgeschwindigkeit des Rohgasstroms, welcher zu den Einlassöffnungen der Einheiten strömt, höher ist als in einem oberhalb der Einheiten liegenden Abschnitt der Strömungskammer. Auf diese Weise wird in dem Rohgasstrom ein ansteigendes Geschwindigkeitsprofil erzeugt, was den Vorteil bietet, dass Hilfsmaterial und Overspray leichter von den Einlassöffnungen ferngehalten und in den Einheiten zurückgehalten werden.

Bei einer bevorzugten Ausgestaltung der Erfindung ist vorgesehen, dass zwischen mindestens zwei Einheiten, die in einer Querrichtung der Vorrichtung voneinander beabstandet sind, ein durch eine Bedienungsperson begehbarer Steg angeordnet ist.

Durch eine Variation der Breite des begehbaren Stegs kann die Gesamtanordnung aus den Einheiten und dem dazwischen angeordneten begehbaren Steg an eine beliebige Breite der Strömungskammer der Vorrichtung zur Abscheidung von Fluidlack-Overspray angepasst werden.

Auch die Höhe der Gesamtanordnung aus den Einheiten kann leicht an eine beliebige Höhe der Strömungskammer der Vorrichtung zur Abscheidung von Fluidlack-Overspray angepasst werden, indem lediglich die Länge der Stützen der Tragekonstruktion der Einheiten verändert wird oder beispielsweise Verlängerungsstücke an diese Stützen angesetzt werden.

Die beschriebene Vorrichtung zum Abtrennen von Fluidlack-Overspray eignet sich insbesondere zur Verwendung in einer Anlage zum Lackieren von Gegenständen, insbesondere von Fahrzeugkarosserien, welche mindestens einen Applikationsbereich zum Applizieren von Fluidlack auf die zu lackierenden Gegenstände und mindestens eine solche Vorrichtung zum Abtrennen von Fluidlack-Overspray umfasst.

Vorzugsweise ist die Strömungskammer der Vorrichtung zum Abtrennen von Fluidlack-Overspray dabei zumindest teilweise unter dem Applikationsbereich angeordnet.

Besonders günstig ist es, wenn die gesamte Vorrichtung zum Abtrennen von Fluidlack-Overspray einschließlich der Strömungskammer und der Einheiten innerhalb der vertikalen Projektion des Applikationsbereichs der Lackieranlage angeordnet ist.

Ferner kann vorgesehen sein, dass die Vorrichtung zum Abtrennen von Fluidlack-Overspray aus dem Overspray-Partikel enthaltenden Rohgasstrom mindestens zwei Filtervorrichtungen umfasst, die jeweils eine Einlassöffnung, durch welche ein Teil-Rohgasstrom in die betreffende Filtervorrichtung eintritt, und jeweils mindestens ein Filterelement zum Abtrennen des Oversprays aus dem Teil-Rohgasstrom umfassen,
wobei die Vorrichtung mindestens einen Aufnahmebehälter zum Aufnehmen eines von Filterelementen mehrerer Filtervorrichtungen abgereinigten Materials und eine Mischvorrichtung zum mechanischen Vermischen des abgereinigten Materials aus mehreren Filtervorrichtungen umfasst.

Durch eine solche Ausgestaltung der Vorrichtung zum Abtrennen von Fluidlack-Overspray aus dem Overspray-Partikel enthaltenden Rohgasstrom wird es ermöglicht, die Fließfähigkeit der Mischung aus Hilfsmaterial und von den Filterelementen abgereinigtem Fluidlack-Overspray in den Hilfsmaterialaufnahmebehältern in einfacher und effizienter Weise aufrechtzuerhalten.

Das Fließverhalten der Mischung aus Hilfsmaterial und Fluidlack-Overspray ist nämlich ein kritischer Punkt für die Prozesssicherheit einer solchen Vorrichtung zum Abtrennen von Fluidlack-Overspray. Ist kein ausreichendes Fließverhalten mehr gegeben, so kann in den Hilfsmaterialaufnahmebehältern kein Materialaustausch mehr stattfinden. Das Material in den Hilfsmaterialaufnahmebehältern kann nicht mehr zur Absaugöffnung nachfließen, und die Behälterfüllstände bleiben oberhalb des Wertes, der den Absaugvorgang beendet. In diesem Fall muss der Lackierprozess unterbrochen werden, und das Material in den Hilfsmaterialaufnahmebehältern muss manuell so aufgelockert werden, dass es wieder fließfähig und somit auch absaugfähig wird.

Auch wenn die Hilfsmaterialaufnahmebehälter mit Fluidböden in Form von Platten aus gesintertem Kunststoff versehen sind, um das in den Hilfsmaterialaufnahmebehältern enthaltene Material durch Zuführung von Druckluft zu fluidisieren, so kann hierdurch eine ausreichende Auflockerung zur Wiederherstellung des erwünschten Fließverhaltens des Materials nicht gewährleistet werden. Die Hafteigenschaften der Partikel in dem Gemisch aus Hilfsmaterial und Fluidlack-Overspray sind nämlich wesentlich stärker als die Strömungskräfte der Druckluft, so dass die Schicht aus dem Material als Ganzes angehoben wird oder sich in dem Material Kanäle bilden, durch welche die Druckluft nach oben strömt. Zusätzlich erschwert wird die Fluidisierung des Materials durch die große Spreizung der Partikelgrößenverteilung des Hilfsmaterials (in einem Bereich von ungefähr 2 µm bis ungefähr 100 µm).

Zur Fluidisierung einer Schüttung von Partikeln mit einem Durchmesser von 2 µm auf eine Porosität von ungefähr 0,85 reicht eine Strömungsgeschwindigkeit von 0,00016 m/s. Für die Fluidisierung einer Schüttung von Partikeln mit einem Durchmesser von 100 µm benötigt man eine Strömungsgeschwindigkeit von 0,35 m/s, d.h. eine ungefähr 2.000fach höhere Strömungsgeschwindigkeit als im Fall von Partikeln mit einem Durchmesser von 2 µm. Auch wenn die Strömungskräfte gegenüber den Haftkräften überwiegen sollten, lassen sich daher durch Einspeisen von Druckluft keine gleichmäßigen Fluidisierungsbedingungen einstellen. Es findet eher eine Klassierung statt, bei welcher der Feinanteil ausgetragen wird und der Grobanteil unbeweglich auf dem Boden der Hilfsmaterialaufnahmebehälter verbleibt. Dieser Klassiereffekt tritt auch auf, wenn das Hilfsmaterial mittels oberhalb der Hilfsmaterialaufnahmebehälter angeordneter Aufwirbelungsvorrichtungen durch Druckluftpulse aufgewirbelt wird.

Der vorstehend beschriebenen Lösung dieses Problems liegt das Konzept zugrunde, dass aus mehreren Filtervorrichtungen, die jeweils von einem Teil-Rohgasstrom durchströmt werden, abgereinigtes Material von ein und demselben Aufnahmebehälter aufgenommen und mittels einer Mischvorrichtung innerhalb des Aufnahmebehälters mechanisch vermischt wird, um auf diese Weise die Haftung zwischen den Partikeln des abgereinigten Materials mechanisch zu zerstören, ein "Zuwachsen" des Aufnahmebehälters mit dem abgereinigten Material zu verhindern und eine größtmögliche Homogenität des im Aufnahmebehälter vorhandenen Materials durch die Durchmischung von aus verschiedenen Filtervorrichtungen abgereinigtem Material zu erzielen.

Hierdurch wird eine höhere Prozesssicherheit erreicht, und das Material im Aufnahmebehälter kann bis zu höheren Konzentrationen von darin enthaltenem Fluidlack-Overspray aufkonzentriert werden, ohne die Fließfähigkeit der Mischung aus Hilfsmaterial und Fluidlack-Overspray zu gefährden.

Wenn hingegen jeder Filtervorrichtung ein eigener Hilfsmaterialaufnahmebehälter zugeordnet ist, so müssen sehr viele solcher Hilfsmaterialaufnahmebehälter vorgesehen und hinsichtlich ihrer Materialzusammensetzung ständig genau kontrolliert werden. Aufgrund unterschiedlicher Belastung der verschiedenen Filtervorrichtungen mit Fluidlack-Overspray, je nach der Lage der betreffenden Filtervorrichtungen relativ zu dem Applikationsbereich, in welchem der Fluidlack-Overspray in den Rohgasstrom gelangt, ist der Aufkonzentrierungsfaktor, d.h. der jeweilige Anteil des Fluidlack-Oversprays an dem gesamten im Hilfsmaterialaufnahmebehälter befindlichen Material, von Hilfsmaterialaufnahmebehälter zu Hilfsmaterialaufnahmebehälter stark unterschiedlich. Entsprechend unterschiedlich ist die Fließfähigkeit des aufkonzentrierten Hilfsmaterial/Lack-Gemisches. Wird nur in einem einzigen Hilfsmaterialaufnahmebehälter der Absaugvorgang nicht mehr korrekt ausgeführt, führt dies zu einer Prozessunterbrechung und einem manuellen Eingriff. Die Zeiten für den Materialaustausch müssen für jeden Hilfsmaterialaufnahmebehälter einzeln eingestellt werden und so ausgewählt werden, dass man sicher über dem kritischen Bereich der Aufkonzentrierung von Fluidlack-Overspray liegt. Dies bedeutet einen hohen Materialverbrauch sowohl an frischem Hilfsmaterial als auch an mit Fluidlack-Overspray beladenem Hilfsmaterial und entsprechend hohe Aufwendungen für die Lagerung und den Transport des Hilfsmaterials.

Im Gegensatz hierzu muss bei der beschriebenen Vorrichtung zum Abtrennen von Fluidlack-Overspray für mehrere Filtervorrichtungen, die jeweils von einem Teil-Rohgasstrom durchströmt werden, nur ein einziger Aufnahmebehälter hinsichtlich des Materialfüllstandes und des Aufkonzentrierungsfaktors kontrolliert werden. Ferner ist es dadurch, dass das aus mehreren verschiedenen Filtervorrichtungen abgereinigte Material mechanisch vermischt wird, möglich, besonders hohe Konzentrationen von Fluidlack-Overspray in dem aus einer bestimmten Filtervorrichtung abgereinigten Material durch Vermischung mit aus anderen Filtervorrichtungen abgereinigtem, weniger mit Fluidlack-Overspray beladenem Material auszugleichen. Das in dem größeren Aufnahmebehälter befindliche Material kann daher bis zu einer höheren Konzentration von Fluidlack-Overspray aufkonzentriert werden, ohne die Fließfähigkeit der Mischung aus Hilfsmaterial und Fluidlack-Overspray zu beeinträchtigen.

Außerdem ist der konstruktive Aufwand zur Herstellung eines einzelnen großen Aufnahmebehälters geringer als der Aufwand zur Herstellung vieler kleiner Hilfsmaterialaufnahmebehälter, welche jeweils nur einer einzigen Filtervorrichtung zugeordnet sind.

Durch den größeren Innenraum des mehreren Filtervorrichtungen zugeordneten Aufnahmebehälters ist es auch einfacher möglich, eine geeignete Mischvorrichtung im Innenraum des Aufnahmebehälters unterzubringen.

Vorzugsweise ist der Aufnahmebehälter als ein Trog ausgebildet, der sich von einem Bereich senkrecht unter einer ersten Filtervorrichtung bis in einen Bereich senkrecht unter einer zweiten Filtervorrichtung erstreckt, wobei zwischen der ersten Filtervorrichtung und der zweiten Filtervorrichtung grundsätzlich beliebig viele weitere Filtervorrichtungen angeordnet sein können.

Bei einer bevorzugten Ausgestaltung der Erfindung ist vorgesehen, dass der Aufnahmebehälter abgereinigtes Material aus mindestens drei verschiedenen Filtervorrichtungen aufnimmt.

Die Mischvorrichtung weist vorzugsweise mindestens ein um eine im Wesentlichen horizontal ausgerichtete Drehachse drehbares Mischwerkzeug auf. Hierdurch wird eine gute Vermischung des im Aufnahmebehälter enthaltenen Materials längs der Richtung der Drehachse bewirkt, so dass das Material im Aufnahmebehälter keine Konzentrationsunterschiede aufweist.

Um auch in langen Aufnahmebehältern zum Aufnehmen des von den Filterelementen einer Vielzahl von Filtervorrichtungen abgereinigten Materials eine gute Durchmischung erzielen zu können, kann vorgesehen sein, dass die Mischvorrichtung mindestens zwei um eine im Wesentlichen horizontal ausgerichtete Drehachse drehbare Drehwellen aufweist, welche in Richtung der Drehachse hintereinander angeordnet sind.

Durch die Verwendung mehrerer kürzerer Drehwellen statt einer einzigen langen Drehwelle zur Halterung der Mischwerkzeuge kann die für die Erzeugung einer Drehbewegung der Mischwerkzeuge erforderliche Antriebsleistung verringert werden.

Um die Bindungskräfte zwischen den Partikeln des im Aufnahmebehälter befindlichen Materials zu zerstören, kann die Mischvorrichtung mit beliebigen geeigneten Mischwerkzeugen versehen sein.

Insbesondere kann vorgesehen sein, dass die Mischvorrichtung mindestens ein Paddel, mindestens eine Pflugschar und/oder mindestens eine Wendel, Schraube oder Spirale umfasst.

Für eine gute Durchmischung des im Aufnahmebehälter angeordneten Materials ist es günstig, wenn die Mischvorrichtung mindestens zwei Wendeln mit entgegengesetztem Drehsinn umfasst.

Da bei der mechanischen Durchmischung des Materials im Aufnahmebehälter kein Klassiereffekt auftritt, bei welchem der Feinanteil des Materials aus dem Aufnahmebehälter ausgetragen wird, kann die Partikelgrößenverteilung des Hilfsmaterials bei der beschriebenen Vorrichtung so gewählt werden, dass eine möglichst große Oberfläche erreicht wird, welche die Fluidlack-Partikel einbettet und somit auch entklebt.

Insbesondere kann ein Hilfsmaterial verwendet werden, bei dem mindestens 20 Gewichtsprozent der Partikel eine Partikelgröße von weniger als 2 µm aufweisen.

Die Dichte des verwendeten Hilfsmaterials, beispielsweise Steinmehl, kann beispielsweise ungefähr 2,75 g/cm³ betragen.

In der beschriebenen Vorrichtung sind auch Hilfsmaterialien verwendbar, deren Schüttguteigenschaften als kohäsiv zu beschreiben sind.

Wenn der Aufnahmebehälter einen Materialauslass zur Entnahme von mit Fluidlack-Overspray beladenem Hilfsmaterial aus dem Aufnahmebehälter aufweist, so ist es günstig, wenn die Mischvorrichtung ein Mischwerkzeug umfasst, das den Materialaustrag durch den Materialauslass unterstützt.

Ferner kann der Aufnahmebehälter einen Einlass für frisches Hilfsmaterial aufweisen, um die Konzentration von Fluidlack-Overspray in dem im Aufnahmebehälter befindlichen Material durch die Zufuhr von frischem Hilfsmaterial zu verringern.

Vorzugsweise ist der Einlass für frisches Hilfsmaterial an einem ersten Endbereich des Aufnahmebehälters angeordnet und weist der Aufnahmebehälter einen Materialauslass auf, der an einem dem ersten Endbereich entgegengesetzten zweiten Endbereich des Aufnahmebehälters angeordnet ist.

Eine besonders gute Durchmischung des im Aufnahmebehälter befindlichen Materials wird erzielt, wenn die Mischvorrichtung bei einer vollständigen Umdrehung einen Mischbereich überstreicht und der Aufnahmebehälter einen Mischabschnitt umfasst, welche eine an die Außenkontur des Mischbereiches angepasste Innenkontur aufweist.

Besonders günstig ist es, wenn der Aufnahmebehälter einen Mischabschnitt umfasst und die Mischvorrichtung bei einer vollständigen Umdrehung im Wesentlichen den gesamten Mischabschnitt des Aufnahmebehälters überstreicht.

Vorzugsweise ist dabei vorgesehen, dass im Normalbetrieb der Vorrichtung im Wesentlichen das gesamte vom Aufnahmebehälter aufgenommene Material im Mischabschnitt des Aufnahmebehälters angeordnet ist.

Der Mischabschnitt des Aufnahmebehälters kann insbesondere im Wesentlichen zylindrisch oder zylinderabschnittsförmig ausgebildet sein.

Der Aufnahmebehälter ist vorzugsweise direkt senkrecht unter den Filtervorrichtungen angeordnet, von denen der Aufnahmebehälter abgereinigtes Material aufnimmt.

Ferner kann vorgesehen sein, dass die Teil-Rohgasströme zumindest teilweise durch den Aufnahmebehälter hindurchgeleitet werden, um dabei Hilfsmaterial aus dem Aufnahmebehälter aufzunehmen.

Ferner kann vorgesehen sein, dass mittels der Appliziereinheit mindestens einer Lackiervorrichtung der Lackieranlage ein Strom eines von einem Lack zum Lackieren der Werkstücke verschiedenen schichtbildenden Mediums zum Applizieren einer Schicht auf eine Oberfläche abgebbar ist.

Hierdurch wird eine Lackiervorrichtung geschaffen, welche flexibel einsetzbar und platzsparend ist und eine möglichst geringe Anzahl von Komponenten aufweist.

Dadurch, dass mittels der Appliziereinheit ein Strom eines von einem Lack zum Lackieren der Werkstücke verschiedenen Mediums abgebbar ist, kann in diesem Fall mittels der Lackiervorrichtung auf einfache Art und Weise beispielsweise eine Schicht auf eine nicht zu lackierende Oberfläche aufgebracht werden. Separate Beschichtungsvorrichtungen sind dadurch entbehrlich. Die Lackiervorrichtung weist somit eine geringere Anzahl von Komponenten auf.

Bei einer Ausgestaltung der Erfindung kann vorgesehen werden, dass die Appliziereinheit eine Lackappliziereinrichtung zum Applizieren von Lack auf die zu lackierenden Werkstücke umfasst, mittels welcher das von dem Lack zum Lackieren der Werkstücke verschiedene schichtbildende Medium abgebbar ist.

Alternativ oder ergänzend hierzu kann vorgesehen sei, dass die Appliziereinheit zusätzlich zu der Lackappliziereinrichtung eine Mediumabgabeeinrichtung zum Abgeben des schichtbildenden Mediums umfasst.

Vorteilhaft ist es, wenn die Lackiervorrichtung eine Umschaltvorrichtung umfasst, mittels derer wahlweise eine Lackzuführleitung oder eine Mediumzuführleitung an die Lackappliziereinrichtung anschließbar ist.

Insbesondere kann vorgesehen sein, dass die Lackappliziereinrichtung eine Abgabeleitung zum Abgeben von Lack oder Medium umfasst, in welche wahlweise eine Lackzuführleitung oder eine Mediumzuführleitung mündet. Dadurch entfällt die Notwendigkeit, für Lack und Medium getrennte Abgabeleitungen vorzusehen.

Günstig ist es, wenn die Lackiervorrichtung einen Aufnahmebehälter umfasst, welchem zum Umschalten zwischen einem Lackabgabemodus und einem Mediumabgabemodus noch in der Abgabeleitung angeordneter Lack und/oder in der Abgabeleitung angeordnetes Medium zuführbar ist. Auf diese Weise kann verhindert werden, dass ein zu lackierendes Werkstück mit einem noch in der Abgabeleitung angeordneten schichtbildenden Medium verunreinigt wird oder dass eine mit einem schichtbildenden Medium zu beaufschlagende Fläche mit noch in der Abgabeleitung angeordnetem Lack lackiert wird.

Um eine nicht zu lackierende Oberfläche auf besonders einfache Art und Weise mit einer Schutzschicht zu versehen, ist vorzugsweise vorgesehen, dass die nicht zu lackierende Oberfläche mittels der Appliziereinheit mit dem schichtbildenden Medium beaufschlagbar ist.

Insbesondere kann vorgesehen sein, dass mittels der Appliziereinheit eine außerhalb der Lackiervorrichtung selbst angeordnete Oberfläche, beispielsweise eine Oberfläche einer Begrenzungswand einer Lackierkabine, mit dem schichtbildenden Medium beaufschlagbar ist.

Vorzugsweise sind alle mit der Lackiervorrichtung erreichbaren Bereiche mit schichtbildendem Medium beaufschlagbar.

Eine einfache Versorgung der Lackiervorrichtung mit dem Medium ist insbesondere dann gewährleistet, wenn die Lackiervorrichtung einen Vorratsbehälter für das schichtbildende Medium umfasst.

Vorteilhafterweise umfasst die Lackiervorrichtung eine Pumpe zum Antreiben einer der Appliziereinheit zuzuführenden Lackströmung und/oder Mediumströmung.

Bei einer Ausgestaltung der Erfindung ist vorgesehen, dass mittels der Appliziereinheit außer einem Lack und dem schichtbildenden Medium auch ein Reinigungsmedium zum Reinigen einer Oberfläche, insbesondere zum Reinigen einer mit Lack-Overspray verunreinigten Oberfläche und/oder einer mittels des schichtbildenden Mediums beschichteten Oberfläche, abgebbar ist.

Vorzugsweise liegt das Reinigungsmedium als Fluid oder in Partikelform vor.

Zur Unterstützung einer manuellen Reinigung ist vorzugsweise ein automatischer Auftrag eines Reinigungsmediums oder ein Abwaschen eines manuell aufgebrachten Reinigungsmediums mittels der Lackiervorrichtung vorgesehen.

Beispielsweise kann vorgesehen sein, dass mittels der Appliziereinheit ein Hochdruckwasserstrahl zum Abreinigen einer Oberfläche abgebbar ist. Dadurch kann eine verunreinigte Fläche auf besonders einfache Art und Weise gereinigt werden. Hierzu kann an der Appliziereinheit beispielsweise ein Hochdruckreiniger angeordnet sein, welcher vorzugsweise mittels einer Bewegungseinrichtung verfahrbar, insbesondere zusammen mit der Appliziereinheit verfahrbar, ausgebildet ist.

Um eine hohe Luftfeuchtigkeit in der Umgebung der Lackiervorrichtung von vornherein zu vermeiden, kann vorgesehen sein, dass eine Reinigung mit gasförmigem Medium erfolgt.

Bei einer Ausgestaltung der Erfindung ist vorgesehen, dass das schichtbildende Medium ein schichtbildendes Material umfasst, welches einen Flüssigkeitsanteil des Lacks zum Lackieren der Werkstücke aufnimmt und mit dem Lack eine einfach abzureinigende Schicht bildet. Durch Applizieren des schichtbildenden Mediums auf eine nicht zu lackierende Oberfläche kann gewährleistet werden, dass im Betrieb der Lackiervorrichtung nicht an den Fahrzeugkarosserien anhaftende, sondern auf die nicht zu lackierende Oberfläche auftreffende Lackpartikel, sogenannter Lack-Overspray, nicht permanent an der Oberfläche anhaften, sondern einfach abreinigbar sind.

Alternativ oder ergänzend hierzu kann vorgesehen sein, dass das schichtbildende Medium eine Substanz umfasst, welche mindestens eine chemisch reaktive Gruppe aufweist, die mit dem Lack, insbesondere mit dem Lack-Overspray, reagieren kann.

Günstig ist es, wenn die mindestens eine chemisch reaktive Gruppe eine Amingruppe ist.

Besonders günstig ist es, wenn das schichtbildende Medium ein mindestens bi-funktionelles Amin umfasst.

Insbesondere dann, wenn ein Bindemittel des Lacks mindestens bi-funktionell ist, ergibt sich eine vorteilhafte Reaktion, beispielsweise unter Bildung eines Netzwerks, zwischen dem schichtbildenden Medium und dem Lack.

Beispielsweise kann eine oder mehrere der nachfolgenden Reaktionen ablaufen:
a) Reaktion eines Isocyanats mit einem Amin 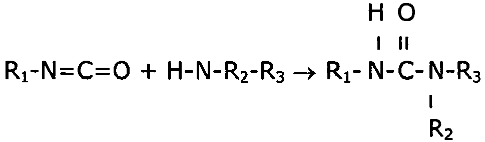
b) Reaktion eines Amins mit einem Epoxid 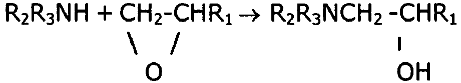
c) Reaktion eines Amins mit einer Carbonsäure

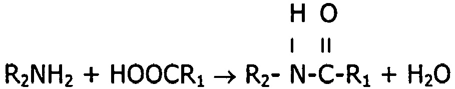

Besonders günstig ist es, wenn die schichtbildende Substanz durch Reaktion mit dem Lack von einem gelartigen Zustand in einen, insbesondere festen, filmartigen Zustand übergeht.

Als Material für einen Flächenschutz eignet sich insbesondere ein mittels der Lackiervorrichtung applizierbares Hilfsmaterial oder Precoat-Material, welches an der damit beaufschlagten Oberfläche eine Schutzschicht bildet.

Ferner kann vorgesehen sein, dass zu schützende Oberflächen, insbesondere solche von Robotern, Verfahrachsen, Gitterrosten, etc., mittels der Appliziereinheit einmalig oder in regelmäßigen Abständen mit Fett, Vaseline, Abziehlack, einer Nanobeschichtung und/oder einer Antihaft-Beschichtung beschichtet werden.

Alternativ oder ergänzend hierzu kann vorgesehen sein, dass zur Vereinfachung oder Vermeidung der Reinigung Nanolacke, welche beispielsweise den Lotuseffekt ausnutzen, mittels der Appliziereinheit auf zu schützende Oberflächen applizierbar sind.

Ferner kann vorgesehen sein, dass mittels der Appliziereinheit ein trocknendes Medium, beispielsweise ein Gas oder ein Gasgemisch, zum Trocknen eines zuvor lackierten Werkstücks oder einer zuvor mit einem, beispielsweise wässrigen, Reinigungsmedium gereinigten Oberfläche auf das Werkstück beziehungsweise auf die gereinigte Oberfläche abgebbar ist.

Günstig ist es, wenn die Lackiervorrichtung eine Bewegungseinrichtung zum motorischen Verfahren der Appliziereinheit umfasst.

Besonders günstig ist es, wenn die Bewegungseinrichtung zum motorischen Verfahren der Appliziereinheit als ein Roboter ausgebildet ist.

Vorteilhafterweise umfasst die Lackiervorrichtung eine Steuereinrichtung zur Steuerung der Bewegungseinrichtung. Insbesondere ist dadurch ein automatischer Betrieb der Lackiervorrichtung möglich.

Die beschriebene Lackiervorrichtung eignet sich insbesondere zur Verwendung in einer Lackieranlage, welche eine Lackierkabine umfasst.

Die beschriebene Lackieranlage kann die vorstehend im Zusammenhang mit der beschriebenen Lackiervorrichtung beschriebenen Merkmale und Vorteile aufweisen.

Insbesondere in Kombination mit einer Trockenauswaschung zur Reinigung eines mit Lack-Overspray verunreinigten Luftstroms kann vorgesehen sein, dass die Appliziereinheit der Lackiervorrichtung weitere Funktionen übernimmt, die über das Lackieren hinausgehen.

So eignet sich die Lackiervorrichtung vorzugsweise zum Applizieren einer Schutzschicht auf eine Wandfläche einer Lackierkabine, einer Fördervorrichtung und/oder einer Strömungskammer.

Eine vereinfachte Abreinigung ergibt sich insbesondere bei der Verwendung einer Kombination aus verschiedenen Medien, insbesondere aus einem Zerstäuber, welche auf verschiedene Bereiche in der Lackierkabine, zum Beispiel auf Fenster, Wände, Gitterroste, Verfahrachsen, Bodenflächen, Roboterkomponenten, die Fördervorrichtung, Bereiche unter der Gitterrostebene und/oder die Lackiervorrichtung selbst aufgebracht werden.

Vorzugsweise kann die Lackierkabine mittels der Lackiervorrichtung mit einer vollständigen oder zumindest einer teilweisen Beschichtung aus einer Abziehfolie und/oder aus Vaseline versehen werden.

Bei einer Ausgestaltung der Lackieranlage ist unterhalb der Lackierkabine ein Filter zum Reinigen von mit Lack-Overspray beaufschlagter Luft vorgesehen, dessen Filterelemente mit einer Schicht aus einem Hilfsmaterial oder Precoat-Material versehen sind und der einen Auffangtrichter für von den Filterelementen abgereinigtes Hilfsmaterial oder Precoat-Material umfasst. Damit bei einem Reinigungsvorgang der Lackieranlage anfallende grobe Verunreinigungen nicht in den Filter gelangen und das in dem Filter angeordnete Hilfsmaterial oder Precoat-Material nicht übermäßig verunreinigt wird, ist vorzugsweise vorgesehen, dass an einem Einlass des Filters, welcher beispielsweise eine Engstelle für einen Luftstrom bildet, eine luftdurchlässige Filtermatte angeordnet ist, welche den Einlass des Filters verschließt.

Ferner können die nachfolgend aufgeführten Merkmale und Vorteile vorzugsweise Bestandteil der vorliegenden Erfindung sein:
- durch einen automatisierten Betrieb der Lackiervorrichtung ist ein verringerter Personalaufwand gewährleistet;
- durch eine vereinfachte Reinigung und/oder eine verringerte Verschmutzung der Lackieranlage ergibt sich ein geringerer Reinigungsaufwand und somit ein kostengünstigerer Betrieb der Lackieranlage;
- durch die Vermeidung starker Verschmutzungen des Hilfsmaterials oder Precoat-Materials können Entsorgungskosten eingespart werden.

Ferner ist vorgesehen, dass der Hilfsmaterialaufnahmebehälter mit einer Waage versehen ist.

Diese Ausbildung des Hilfsmaterialaufnahmebehälters ermöglicht es, den aktuellen Betriebszustand des Hilfsmaterialaufnahmebehälters in einfacher Weise zu überwachen, um insbesondere eine Entleerung eines Gemisches aus Hilfsmaterial und Fluidlack-Overspray aus dem Hilfsmaterialaufnahmebehälter gezielt steuern zu können.

Ferner kann vorgesehen sein, dass die Einlassöffnung nach oben durch ein oberes Leitelement begrenzt ist, welches mindestens eine Durchtrittsöffnung aufweist.

Dies bietet den Vorteil, dass Hilfsmaterial aus der Filtervorrichtung durch mindestens eine Durchtrittsöffnung des oberen Leitelements zu einem unteren Leitelement gelangen kann, durch welches die Einlassöffnung der Filtervorrichtung nach unten begrenzt ist und das im Betrieb der Filtervorrichtung mit Lacktropfen belegt werden kann, welche sich von dem unteren Leitelement (beispielsweise von einer unteren Einlaufschräge) lösen und in den Hilfsmaterialaufnahmebehälter fallen und dort Sinterplatten für die Fluidisierung des Materials in dem Hilfsmaterialaufnahmebehälter zusetzen könnten.

Durch das aus der Filtervorrichtung durch die mindestens eine Durchtrittsöffnung des oberen Leitelements zu dem unteren Leitelement der Einlassöffnung gelangende Hilfsmaterial werden jedoch die Lackpartikel, die sich an dem unteren Leitelement absetzen könnten, entklebt und mit dem Hilfsmaterial belegt und somit unschädlich gemacht.

Das Hilfsmaterial kann insbesondere dann durch die mindestens eine Durchtrittsöffnung des oberen Leitelements zu dem unteren Leitelement gelangen, wenn das Filterelement abgereinigt wird und das abgesprengte Gemisch aus Hilfsmaterial und Fluidlack-Overspray (Filterkuchen) von dem abgereinigten Filterelement durch die mindestens eine Durchtrittsöffnung des oberen Leitelements auf das untere Leitelement fällt.

Um das Gewicht des in dem Hilfsmaterialaufnahmebehälter enthaltenen Gemisches aus Hilfsmaterial und Fluidlack-Overspray möglichst präzise bestimmen zu können, ist es günstig, wenn der Hilfsmaterialaufnahmebehälter einen unteren Abschnitt umfasst, der mechanisch von einem oberen Abschnitt des Hilfsmaterialaufnahmebehälters entkoppelt ist.

Diese mechanische Entkopplung kann beispielsweise dadurch erzielt werden, dass ein Kompensator zwischen dem unteren Abschnitt und dem oberen Abschnitt des Hilfsmaterialaufnahmebehälters vorgesehen ist.

Ein solcher Kompensator kann insbesondere aus einem flexiblen Material, beispielsweise aus einem flexiblen Kunststoffmaterial, gebildet sein.

Ferner ist es günstig, wenn mittels der Waage das Gewicht des unteren Abschnitts des Hilfsmaterialaufnahmebehälters und des darin enthaltenen Material ermittelbar ist.

Besonders günstig ist es, wenn die Einlassöffnung nach unten durch ein unteres Leitelement begrenzt ist und Hilfsmaterial aus der Filtervorrichtung durch mindestens eine Durchtrittsöffnung des oberen Leitelements zu dem unteren Leitelement gelangen kann. Auf diese Weise kann Hilfsmaterial, insbesondere von einem Filterelement der Filtervorrichtung abgereinigtes Hilfsmaterial, in einfacher Weise auf das untere Leitelement der Einlassöffnung der Filtervorrichtung gelangen, wo es sich dort absetzende Lackpartikel entkleben und/oder mit dem Hilfsmaterial belegen kann, so dass diese Lackpartikel nicht mehr in den Hilfsmaterialaufnahmebehälter fallen und dort Sinterplatten für die Fluidisierung zusetzen können.

Besonders vorteilhaft ist es, wenn das obere Leitelement eine Mehrzahl von Durchtrittsöffnungen aufweist, durch welche Hilfsmaterial aus der Filtervorrichtung zu dem unteren Leitelement gelangen kann.

Insbesondere kann vorgesehen sein, dass das obere Leitelement einen Durchtrittsbereich aufweist, in dem die Durchtrittsöffnungen angeordnet sind, wobei die Durchtrittsöffnungen mindestens 25 % der Fläche des Durchtrittsbereichs überdecken.

Die Durchtrittsöffnungen können insbesondere in einem regelmäßigen Muster, beispielsweise in einem Rechteck- oder Quadrat-Gitter, in dem Durchtrittsbereich des oberen Leitelements angeordnet sein.

Das erfindungsgemäße Verfahren ermöglicht es, den beim Applizieren des Fluidlacks auf die zu lackierenden Werkstücke entstehenden und von einem den Applikationsbereich durchsetzenden Luftstrom aufgenommenen Fluidlack-Overspray aus diesem Luftstrom zu entfernen und den gereinigten Luftstrom in einem Umluftkreislauf wieder dem Applikationsbereich oder aber einer Umgebung der Lackieranlage zuzuführen.

Bei dem Verfahren ist vorgesehen, dass der Rohgasstrom so durch mindestens eine Einlassöffnung in die Filtervorrichtung eingeleitet wird, dass der Rohgasstrom in einen Hilfsmaterialaufnahmebehälter zum Aufnehmen eines Hilfsmaterials gerichtet in die Filtervorrichtung eintritt. Hierdurch kann das mindestens eine Filterelement in einfacher und effizienter Weise mit Hilfsmaterial beaufschlagt werden, ohne dass solches Hilfsmaterial in den Applikationsbereich der Lackieranlage gelangt.

Der Rohgasstrom wird in einem Innenraum des Hilfsmaterialaufnahmebehälters umgelenkt.

Vorzugsweise beträgt die mittlere Strömungsgeschwindigkeit des Rohgasstroms beim Passieren der engsten Stelle der Einlassöffnung mindestens ungefähr 2 m/s.

Ferner ist vorzugsweise vorgesehen, dass der Rohgasstrom so in die Filtervorrichtung eingeleitet wird, dass die Strömung des Rohgases im Bereich der Einlassöffnung nicht abreißt.

Der aus der Einlassöffnung austretende Rohgasstrom wird vorzugsweise in dem Hilfsmaterialaufnahmebehälter zu dem mindestens einen Filterelement hin umgelenkt.

Ferner kann vorgesehen sein, dass in dem Hilfsmaterialaufnahmebehälter befindliches Hilfsmaterial mittels mindestens einer Aufwirbelungseinrichtung aufgewirbelt wird.

Vorzugsweise strömt der Rohgasstrom durch eine Strömungskammer von einem Applikationsbereich zum Applizieren des Fluidlacks auf zu lackierende Gegenstände bis zu der mindestens einen Einlassöffnung der mindestens einen Filtervorrichtung.

Dabei kann vorgesehen sein, dass die Strömungsgeschwindigkeit des Rohgasstroms beim Durchströmen der Strömungskammer kontinuierlich zunimmt.

Ferner kann bei dem beschriebenen Verfahren vorgesehen sein, dass ein Hilfsmaterial zu dem mit Fluidlack-Overspray beladenen Rohgasstrom zugegeben wird,
wobei das Hilfsmaterial zumindest teilweise in einem Hilfsmaterialaufnahmebehälter angeordnet ist und der Füllstand des Hilfsmaterials in dem Hilfsmaterialaufnahmebehälter mittels eines Füllstandssensors ermittelt wird. Bei einem solchen Verfahren wird der Betriebszustand eines Hilfsmaterialaufnahmebehälters, welcher von dem mindestens einen Filterelement abgereinigtes Hilfsmaterial aufnimmt, einzeln überwacht, um insbesondere den Zeitpunkt einer Entleerung des Hilfsmaterialaufnahmebehälters möglichst genau auf den Betriebszustand des Hilfsmaterialaufnahmebehälters abstimmen zu können.

Dabei kann insbesondere vorgesehen sein, dass der Füllstandssensor ein Signal erzeugt, das einem Wert aus einer Vielzahl diskreter Füllstandshöhen oder aus einem Kontinuum von Füllstandshöhen entspricht.

Insbesondere kann vorgesehen sein, dass der Füllstandssensor ein analoges Signal erzeugt.

Als Füllstandssensor kann insbesondere ein kapazitiver Sensor verwendet werden.

Bei einer bevorzugten Ausgestaltung des Verfahrens ist vorgesehen, dass das Hilfsmaterial in dem Hilfsmaterialaufnahmebehälter durch Zuführen eines gasförmigen Mediums in einen Innenraum des Hilfsmaterialaufnahmebehälters fluidisiert wird.

Ferner kann vorgesehen sein, dass das in dem Hilfsmaterialaufnahmebehälter befindliche Hilfsmaterial mittels einer Aufwirbelungseinrichtung aufgewirbelt wird.

Besonders günstig ist es, wenn der Füllstandssensor und die Aufwirbelungseinrichtung gemeinsam aus einem Innenraum des Hilfsmaterialaufnahmebehälters entnommen werden.

Ferner kann vorgesehen sein, dass ein mittels der Aufwirbelungseinrichtung erzeugter Medienkegel aus gasförmigem Medium eine Bodenfläche des Hilfsmaterialaufnahmebehälters im Wesentlichen vollständig überstreicht.

Vorzugsweise wird das in dem Hilfsmaterialaufnahmebehälter befindliche Material durchmischt.

Ferner kann bei dem Verfahren zum Betreiben einer Lackieranlage vorgesehen sein, dass ein Hilfsmaterial in den Strömungsweg eines mit Fluidlack-Overspray beladenen Rohgasstroms eingebracht wird, bevor der Rohgasstrom mindestens ein Filterelement zum Abtrennen des Oversprays aus dem Rohgasstrom passiert, und dass das Verfahren ferner folgende Verfahrensschritte umfasst:
- Ermitteln, ob eine ausreichende Rohgasströmung durch das mindestens eine Filterelement vorhanden ist; und
- Sperren des Einbringens von Hilfsmaterial in den Strömungsweg des Rohgasstroms, wenn festgestellt wird, dass keine ausreichende Rohgasströmung vorhanden ist.

Hierdurch wird ein Einbringen von Hilfsmaterial in den Applikationsbereich der Lackieranlage auch bei nicht ordnungsgemäßem Betrieb zuverlässig verhindert.

Wenn ein Einbringen von Hilfsmaterial in den Strömungsweg des Rohgasstroms durch Aufwirbeln von in einem Hilfsmaterialaufnahmebehälter befindlichem Hilfsmaterial mittels einer Aufwirbelungseinrichtung erfolgt, so wird bei Fehlen einer ausreichenden Rohgasströmung vorzugsweise die Funktion der Aufwirbelungseinrichtung gesperrt.

Wenn ein Einbringen von Hilfsmaterial in den Strömungsweg des Rohgasstroms durch Abreinigen von Hilfsmaterial von mindestens einem Filterelement erfolgt, so wird bei Fehlen einer ausreichenden Rohgasströmung vorzugsweise die Abreinigung des mindestens einen Filterelements gesperrt.

Wenn ein Einbringen von Hilfsmaterial in den Strömungsweg des Rohgasstroms durch Zuführen mittels einer Düsenanordnung erfolgt, so wird bei Fehlen einer ausreichenden Rohgasströmung vorzugsweise die Funktion der Düsenanordnung gesperrt.

Zur Feststellung des Fehlens einer ausreichenden Rohgasströmung gibt es eine Vielzahl von Möglichkeiten.

So kann beispielsweise vorgesehen sein, dass das Fehlen einer ausreichenden Rohgasströmung anhand eines Druckabfalls an mindestens einem Filterelement festgestellt wird. Ist der gemessene Druckabfall zu gering, so liegt keine ausreichende Rohgasströmung vor.

Alternativ oder ergänzend hierzu kann das Fehlen einer ausreichenden Rohgasströmung anhand des Betriebszustands eines stromabwärts des mindestens einen Filterelements angeordneten Gebläses festgestellt werden.

Hierzu kann der Betriebszustand des Gebläses beispielsweise mittels einer Stromüberwachung, mittels eines Frequenzumrichters und/oder mittels Messung des Druckabfalls an dem Gebläse überwacht werden.

Alternativ oder ergänzend hierzu kann das Fehlen einer ausreichenden Rohgasströmung auch mittels eines Durchflussmessgeräts festgestellt werden, das insbesondere stromabwärts des mindestens einen Filterelements angeordnet sein kann.

Das beschriebene Verfahren verlängert die Prozessstabilität bei Störfällen und dient dem Schutz empfindlicher Anlagenbauteile bei Betriebsstörungen.

Das beschriebene Verfahren eignet sich zur Anwendung in einem trockenen Fluidlack-Overspray-Abscheidungssystem für Lackierkabinen in der Automobilindustrie und im allgemeinen Industrie-Lackieranlagen-Bereich, um den Lackierprozess aufrechtzuerhalten und Schäden zu vermeiden oder zumindest zu verringern.

Ferner kann vorgesehen sein, dass das Verfahren zum Betreiben einer Lackieranlage folgende Verfahrensschritte umfasst:
- Aufteilen des Rohgasstroms in mindestens zwei Teil-Rohgasströme, die durch verschiedene Einlassöffnungen in mindestens zwei verschiedene Filtervorrichtungen eintreten, welche jeweils mindestens ein Filterelement zum Abtrennen des Oversprays aus dem jeweiligen Teil-Rohgasstrom umfassen;
- Abtrennen des Oversprays aus den Teil-Rohgasströmen mittels der Filterelemente;
- Abreinigen von Material von den Filterelementen mehrerer verschiedener Filtervorrichtungen;
- Auffangen des abgereinigten Materials aus den mehreren verschiedenen Filtervorrichtungen in demselben Aufnahmebehälter;
- mechanisches Durchmischen des abgereinigten Materials aus den mehreren verschiedenen Filtervorrichtungen in dem Aufnahmebehälter mittels einer Mischvorrichtung.

Hierdurch wird es ermöglicht, in einfacher und effizienter Weise eine ausreichende Fließfähigkeit der Mischung aus Hilfsmaterial und von den Filterelementen abgereinigtem Fluidlack-Overspray in dem Aufnahmebehälter aufrechtzuerhalten.

Dabei ist der Aufnahmebehälter vorzugsweise direkt senkrecht unter den Filtervorrichtungen angeordnet, von denen der Aufnahmebehälter abgereinigtes Material aufnimmt.

Ferner kann vorgesehen sein, dass die Teil-Rohgasströme zumindest teilweise durch den Aufnahmebehälter hindurchgeleitet werden, um dabei Hilfsmaterial aus dem Aufnahmebehälter aufzunehmen.

Ferner kann vorgesehen sein, dass das Verfahren zum Betreiben einer Lackieranlage folgenden Verfahrensschritt umfasst:
- Abgeben eines von dem Lack zum Lackieren der Werkstücke verschiedenen schichtbildenden Mediums zum Applizieren einer Schicht auf einer Oberfläche mittels der Appliziereinheit.

Hierdurch wird ein Verfahren zum Betrieb einer Lackiervorrichtung bereitgestellt, das flexibel einsetzbar und mit einer möglichst geringen Anzahl von Komponenten auf geringem Raum ausführbar ist, da mittels der Appliziereinheit sowohl Lack als auch ein von dem Lack verschiedenes schichtbildendes Medium abgegeben wird.

Bei einer besonderen Ausgestaltung dieses Verfahrens ist vorgesehen, dass mittels des Mediums eine Oberfläche außerhalb der Lackiervorrichtung selbst beschichtet wird.

Günstig ist es, wenn zwischen dem schichtbildenden Medium und dem Lack, insbesondere zwischen dem schichtbildenden Medium und dem Lack-Overspray, eine chemische Reaktion stattfindet.

Besonders günstig ist es, wenn die schichtbildende Substanz von einem gelartigen Zustand in einen filmartigen Zustand übergeht.

Die chemische Reaktion kann insbesondere zwischen einer eine Amingruppe aufweisenden Substanz des schichtbildenden Mediums und dem Lack stattfinden.

Bei dem erfindungsgemäßen Verfahren zum Betreiben einer Lackieranlage wird das Gewicht oder die Masse des Gemisches in dem Hilfsmaterialaufnahmebehälter mittels einer Waage ermittelt.

Dabei kann die Waage insbesondere an einen unteren Abschnitt des Hilfsmaterialaufnahmebehälters, der mechanisch von einem oberen Abschnitt des Hilfsmaterialaufnahmebehälters entkoppelt ist, angekoppelt sein.

Ferner wird vorzugsweise mittels der Waage das Gewicht oder die Masse des unteren Abschnitts des Hilfsmaterialaufnahmebehälters und des darin enthaltenen Materials ermittelt.

Um die Brauchbarkeit des in dem Hilfsmaterialaufnahmebehälter enthaltenen Materials zur Belegung des mindestens einen Filterelements mit einer Schutzschicht beurteilen zu können, kann vorgesehen sein, dass Material aus dem Hilfsmaterialaufnahmebehälter in mindestens einer Aufwirbelphase aufgewirbelt wird und durch einen Vergleich des Gewichts oder der Masse des in dem Hilfsmaterialaufnahmebehälter vor der Aufwirbelphase und nach der Aufwirbelphase enthaltenen Materials eine Reinigungskapazität oder Wirksamkeit des im Hilfsmaterialaufnahmebehälter enthaltenen Materials ermittelt wird.

Die "Wirksamkeit" ist ein Maß für die Fähigkeit des Materials, am Filterelement haften und Fluidlack-Overspray binden zu können.

Eine solche Wirksamkeit kann insbesondere als Quotient aus der Abnahme des Gewichts oder der Masse des in dem Hilfsmaterialaufnahmebehälter enthaltenen Materials durch das Aufwirbeln und der Netto-Aufwirbelzeit ermittelt werden.

Zur genaueren Ermittlung der Wirksamkeit kann vorgesehen sein, dass ein Aufwirbelzyklus mit mehreren, durch Aufwirbelpausen voneinander getrennten Aufwirbelphasen durchgeführt wird und das Gewicht oder die Masse des in dem Hilfsmaterialaufnahmebehälter vor der ersten Aufwirbelphase des Aufwirbelzyklus und nach der letzten Aufwirbelphase des Aufwirbelzyklus jeweils enthaltenen Materials zur Ermittlung der Wirksamkeit verglichen wird.

Je größer der Wert für diese Wirksamkeit ist, um so besser ist das Material aus dem Hilfsmaterialaufnahmebehälter zur Bildung einer Schutzschicht an dem mindestens einen Filterelement geeignet.

Es ist daher günstig, wenn Material aus dem Hilfsmaterialaufnahmebehälter entnommen wird, wenn die ermittelte Wirksamkeit und/oder die ermittelte Gewichts- oder Massendifferenz einen vorgegebenen Mindestwert unterschreitet.

Das entnommene Material, ein Gemisch aus Hilfsmaterial und Fluidlack-Overspray, wird in diesem Fall durch frisches Hilfsmaterial ersetzt.

Ferner kann bei dem Verfahren zum Betreiben einer Lackieranlage vorgesehen sein, dass beim Abreinigen mindestens eines Filterelements mindestens einer Filtervorrichtung Hilfsmaterial von dem betreffenden Filterelement durch mindestens eine Durchtrittsöffnung in einem oberen Leitelement, das eine Einlassöffnung der Filtervorrichtung nach oben begrenzt, zu einem unteren Leitelement, das die Einlassöffnung der Filtervorrichtung nach unten begrenzt, gelangt.

Ein Verfahren zum Herstellen einer Vorrichtung zum Abscheiden von Fluidlack-Overspray aus einem Overspray-Partikel enthaltenden Rohgasstrom kann folgende Verfahrensschritte umfassen:
a) Vormontieren mindestens einer Einheit zur Verwendung in einer Vorrichtung zum Abtrennen von Fluidlack-Overspray aus einem Overspray-Partikel enthaltenden Rohgasstrom an einem Herstellort, wobei die Einheit Folgendes umfasst:
   - einen Filterelementaufnahmeraum zur Aufnahme mindestens eines Filterelements zum Abtrennen des Oversprays aus dem Rohgasstrom;
   - mindestens einen Hilfsmaterialaufnahmebehälter zur Aufnahme eines Hilfsmaterials, das dem Rohgasstrom zugegeben wird, bevor der Rohgasstrom das mindestens eine Filterelement passiert;
   - mindestens eine Trennwand zum Abtrennen des Filterelementaufnahmeraums von einer Strömungskammer der Vorrichtung zum Abtrennen von Fluidlack-Overspray, welche von dem Rohgasstrom vor dessen Eintritt in die Einheit durchströmt wird; und
   - mindestens eine Einlassöffnung, durch welche der Rohgasstrom aus der Strömungskammer in die Einheit eintritt;
b) Transportieren der mindestens einen vormontierten Einheit von dem Herstellort zu einem Montageort;
c) Anordnung der mindestens einen vormontierten Einheit in einer Arbeitsposition am Montageort.

Hierdurch wird ein Verfahren zum Herstellen einer Vorrichtung zum Abscheiden von Fluidlack-Overspray aus einem Overspray-Partikel enthaltenden Rohgasstrom geschaffen, welches besonders einfach und rasch durchführbar ist.

Gemäß dem beschriebenen Verfahren kann die Vorrichtung zum Abscheiden von Fluidlack-Overspray nämlich in einfacher Weise aus einer der gewünschten Kapazität entsprechenden Anzahl von vormontierten Einheit zusammengesetzt werden.

Insbesondere kann vorgesehen sein, dass mindestens zwei vormontierte Einheiten an einem Herstellort hergestellt, zum Montageort transportiert, in einer Arbeitsposition angeordnet und miteinander oder mit einer dazwischen angeordneten Trennwand verbunden werden.

Ergänzend hierzu können die vormontierten Einheiten mit einer Tragekonstruktion des Applikationsbereichs einer Lackieranlage verbunden werden.

Der Herstellort der vormontierten Einheit liegt vorzugsweise außerhalb des Gebäudes, in welchem die Vorrichtung zum Abscheiden von Fluidlack-Overspray aus einem Rohgasstrom endmontiert wird, insbesondere außerhalb des Fabrikgeländes, auf welchem diese Vorrichtung montiert wird. Vorzugsweise wird die Einheit auf dem Fabrikgelände eines Herstellers vormontiert und dann über öffentliche Verkehrswege zu dem Fabrikgelände des Betreibers der Vorrichtung zum Abtrennen von Fluidlack-Overspray aus einem Rohgasstrom transportiert und dort in diese Vorrichtung eingebaut.

Ein Verfahren zum Umbau einer bestehenden Vorrichtung zum Abscheiden von Fluidlack-Overspray aus einem Overspray-Partikel enthalten Rohgasstrom, welche eine Tragekonstruktion für einen Applikationsbereich umfasst, kann folgende Verfahrensschritte umfassen:
a) Vormontieren mindestens einer Einheit zur Verwendung in einer Vorrichtung zum Abtrennen von Fluidlack-Overspray aus einem Overspray-Partikel enthaltenden Rohgasstrom an einem Herstellort, wobei die Einheit Folgendes umfasst:
   - einen Filterelementaufnahmeraum zur Aufnahme mindestens eines Filterelements zum Abtrennen des Oversprays aus dem Rohgasstrom;
   - mindestens einen Hilfsmaterialaufnahmebehälter zur Aufnahme eines Hilfsmaterials, das dem Rohgasstrom zugegeben wird, bevor der Rohgasstrom das mindestens eine Filterelement passiert;
   - mindestens eine Trennwand zum Abtrennen des Filterelementaufnahmeraums von einer Strömungskammer der Vorrichtung zum Abtrennen von Fluidlack-Overspray, welche von dem Rohgasstrom vor dessen Eintritt in die Einheit durchströmt wird; und
   - mindestens eine Einlassöffnung, durch welche der Rohgasstrom aus der Strömungskammer in die Einheit eintritt;
b) Abbau eines Teils der bestehenden Vorrichtung, so dass der von einer vormontierten Einheit in ihrer Arbeitsposition beanspruchte Raum freigegeben wird;
c) Anordnen einer vormontierten Einheit in der freigegebenen Arbeitsposition;
d) Verbinden der vormontierten Einheit mit der Tragekonstruktion für den Applikationsbereich;
e) Wiederholung der Schritte b), c) und d), bis alle vormontierten Einheiten in ihrer Arbeitsposition angeordnet und mit der Tragekonstruktion für den Applikationsbereich verbunden sind.

Auf diese Weise kann eine bestehende Vorrichtung zum Abscheiden von Fluidlack-Overspray durch die vorstehend beschriebene modular aufgebaute Vorrichtung zum trockenen Abtrennen von Fluidlack-Overspray ersetzt werden, ohne dass es hierfür erforderlich ist, den Applikationsbereich der Anlage zum Lackieren von Werkstücken, insbesondere Fahrzeugkarosserien, zu demontieren oder einen neuen Stahlbau für den Applikationsbereich erstellen zu müssen.

Durch die Variabilität der Höhe der vormontierten Einheiten und durch die Möglichkeit, zwei in Querrichtung der Vorrichtung zum Abscheiden von Fluidlack-Overspray voneinander beabstandete Einheiten in beliebigem Abstand voneinander aufzustellen, kann eine so hergestellte Vorrichtung zum Abscheiden von Fluidlack-Overspray an einen Applikationsbereich mit beliebigen Abmessungen in Längsrichtung und in Querrichtung angepasst werden. Insbesondere ist es möglich, eine bestehende Vorrichtung zum nassen Abtrennen von Fluidlack-Overspray mittels einer Auswaschung durch die vorstehend beschriebene, modular aufgebaute Vorrichtung zum trockenen Abtrennen von Fluidlack-Overspray zu ersetzen.

Weitere Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer Lackierkabine mit einer darunter angeordneten Vorrichtung zum Abtrennen von Fluidlack-Overspray aus einem Overspray-Partikel enthaltenden Rohgasstrom, welche eine unter der Lackierkabine angeordnete Strömungskammer und auf beiden Seiten der Strömungskammer jeweils drei Filtermodule umfasst;
- Fig. 2: einen schematischen vertikalen Querschnitt durch die Anlage aus Fig. 1;
- Fig. 3: einen der Fig. 2 entsprechenden schematischen vertikalen Querschnitt durch die Anlage aus Fig. 1, wobei zusätzlich die jeweilige Strömungsrichtung des Rohgases, der aus den Filtermodulen austretenden Abluft und der zur Erzeugung von Querluftschleiern in die Strömungskammer eingespeisten Zuluft durch Pfeile angezeigt sind;
- Fig. 4: eine schematische Draufsicht von oben auf die Anlage aus den Fig. 1 bis 3;
- Fig. 5: eine schematische Seitenansicht der Anlage aus den Fig. 1 bis 4;
- Fig. 6: eine schematische perspektivische Darstellung der Vorrichtung zum Abtrennen von Fluidlack-Overspray aus einem Overspray-Partikel enthaltenden Rohgasstrom, welche unter der Lackierkabine der Anlage aus den Fig. 1 bis 5 angeordnet ist und welche die Strömungskammer in entlang der Längsrichtung der Strömungskammer aufeinanderfolgende Abschnitte unterteilende Quertrennwände aufweist;
- Fig. 7: eine schematische perspektivische Darstellung eines einzelnen Filtermoduls, das zur Anordnung zwischen zwei benachbarten weiteren Filtermodulen vorgesehen ist (Mittelmodul);
- Fig. 8: eine schematische perspektivische Darstellung eines einzelnen Filtermoduls, das zur Anordnung neben einem weiteren Filtermodul vorgesehen ist und auf der gegenüberliegenden Seite ein Ende einer Filtermodul-Reihe bildet (Eckmodul);
- Fig. 9: einen schematischen vertikalen Querschnitt durch ein Filtermodul;
- Fig. 10: einen schematischen vertikalen Querschnitt durch ein Filtermodul und den angrenzenden Bereich der Strömungskammer, in welchem die jeweilige lokale Strömungsrichtung des Rohgasstroms durch Pfeile angezeigt ist;
- Fig. 11: eine schematische perspektivische Darstellung eines Randbereichs einer Einlassöffnung eines Filtermoduls;
- Fig. 12: eine schematische Vorderansicht eines Filtermoduls;
- Fig. 13: einen schematischen vertikalen Schnitt durch einen Hilfsmaterialaufnahmebehälter mit im Inneren des Behälters angeordnetem Füllstandssensor und Aufwirbelungseinrichtung;
- Fig. 14: eine schematische Seitenansicht einer Revisionstür des Hilfsmaterialaufnahmebehälters aus Fig. 13, mit an der Revisionstür gehaltenem Füllstandssensor und Aufwirbelungseinrichtung;
- Fig. 15: eine schematische Draufsicht auf die Außenseite der Revisionstür aus Fig. 14;
- Fig. 16: eine schematische Draufsicht von oben auf ein in dem Hilfsmaterialaufnahmebehälter aus Fig. 13 angeordnetes Auffanggitter;
- Fig. 17: eine schematische Darstellung einer Vorrichtung zum Zuführen von frischem Hilfsmaterial aus einem Vorlagebehälter zu in ihrer Arbeitsposition befindlichen Hilfsmaterialaufnahmebehältern der in Fig. 13 dargestellten Art;
- Fig. 18: eine schematische Darstellung einer Abführvorrichtung zum Abführen von mit Overspray vermischtem Hilfsmaterial aus den Hilfsmaterialaufnahmebehältern zu einem Sammelbehälter;
- Fig. 19: eine schematische Darstellung eines Filtermoduls und einer stromabwärts des Filtermoduls angeordneten Abluftleitung mit Gebläse sowie verschiedener Vorrichtungen zur Überwachung des Betriebszustands des Gebläses und einer Vorrichtung zum Zuführen von Druckluft zu den Filterelementen, zu einer Aufwirbelungseinheit und zu einem Fluidboden des Filtermoduls;
- Fig. 20: einen schematischen vertikalen Querschnitt durch eine zweite Ausführungsform einer Vorrichtung zum Abtrennen von Fluidlack-Overspray aus einem Overspray-Partikel enthaltenden Abluftstrom, welche geneigte Strömungsleitbleche zum Leiten eines Querluftstroms und einen begehbaren Steg mit geneigter Oberseite zwischen den Filtermodulen umfasst;
- Fig. 21: einen schematischen vertikalen Querschnitt durch eine alternative Ausführungsform eines Hilfsmaterialaufnahmebehälters, welcher mit einem pneumatisch betriebenen Rührwerk zum Durchmischen des im Hilfsmaterialaufnahmebehälter befindlichen Materials und zum Vergleichmäßigen der Vorlage versehen ist;
- Fig. 22: eine schematische Draufsicht von oben auf den Hilfsmaterialaufnahmebehälter mit pneumatisch betriebenem Rührwerk aus Fig. 21;
- Fig. 23: einen schematischen vertikalen Schnitt durch eine weitere alternative Ausführungsform eines Hilfsmaterialaufnahmebehälters, der mit einer elektrisch betriebenen Welle und Paddeln zum Durchmischen des im Hilfsmaterialaufnahmebehälter befindlichen Materials und zum Vergleichmäßigen der Vorlage versehen ist;
- Fig. 24: eine schematische Draufsicht von oben auf den Hilfsmaterialaufnahmebehälter mit elektrisch betriebener Welle aus Fig. 23;
- Fig. 25: eine der Fig. 11 entsprechende schematische perspektivische Darstellung eines Randbereichs einer Einlassöffnung einer alternativen Ausführungsform eines Filtermoduls, bei welchem das die Einlassöffnung nach oben begrenzende obere Leitblech mit einer Vielzahl von Durchtrittsöffnungen versehen ist;
- Fig. 26: einen der Fig. 13 entsprechenden schematischen vertikalen Schnitt durch eine alternative Ausführungsform eines Hilfsmaterialaufnahmebehälters, der einen unteren Abschnitt und einen oberen Abschnitt umfasst, welche durch einen dazwischen angeordneten Kompensator mechanisch entkoppelt sind, und mit einer Behälterwaage versehen ist;
- Fig. 27: eine der Fig. 15 entsprechende schematische Draufsicht auf die Außenseite einer alternativen Ausführungsform einer Revisionstür des Hilfsmaterialaufnahmebehälters;
- Fig. 28: eine der Fig. 17 entsprechende schematische Darstellung einer alternativen Vorrichtung zum Zuführen von frischem Hilfsmaterial aus einem Vorlagebehälter zu in ihrer Arbeitsposition befindlichen Hilfsmaterialaufnahmebehältern, wobei ein Vorlagebehälter der Vorrichtung mittels eines Kompensators mechanisch von einer Zellenradschleuse der Vorrichtung entkoppelt und mit einer Waage versehen ist;
- Fig. 29: einen schematischen Querschnitt durch ein Filtermodul und einen darunter angeordneten Aufnahmebehälter mit einer Mischvorrichtung;
- Fig. 30: einen schematischen Längsschnitt durch drei in einer Längsrichtung der Anlage aufeinanderfolgende Filtermodule und einen unter den Filtermodulen angeordneten Aufnahmebehälter mit einer Mischvorrichtung;
- Fig. 31: eine schematische Seitenansicht einer Mischvorrichtung mit zwei Wendeln mit entgegengesetztem Drehsinn, welche um eine horizontale Drehachse drehbar sind;
- Fig. 32: eine schematische Seitenansicht von zwei Gruppen von jeweils vier Filtermodulen, wobei jeder Gruppe von Filtermodulen ein Aufnahmebehälter mit einer Mischvorrichtung zum Durchmischen von aus den Filtermodulen jeweils einer Gruppe abgereinigtem Material zugeordnet ist;
- Fig. 33: eine schematische Seitenansicht einer Gruppe von acht Filtermodulen, wobei dieser großen Gruppe von Filtermodulen ein einziger langer Aufnahmebehälter zugeordnet ist, dessen Mischvorrichtung zwei um eine im Wesentlichen horizontal ausgerichtete Drehachse drehbare Drehwellen zur Halterung von Mischwerkzeugen aufweist, welche in Richtung der Drehachse hintereinander angeordnet sind;
- Fig. 34: einen schematischen vertikalen Querschnitt durch eine Lackieranlage mit einer an einem Lackierroboter angeordneten Appliziereinheit; und
- Fig. 35: eine schematische Seitenansicht der Appliziereinheit aus Fig. 34.

Gleiche oder funktional äquivalente Elemente sind in allen Figuren mit denselben Bezugszeichen bezeichnet.

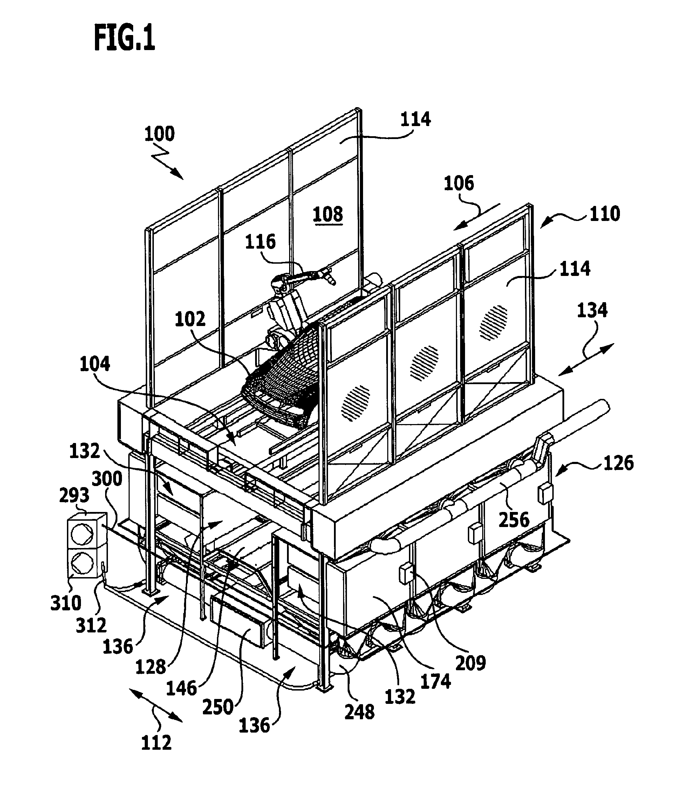

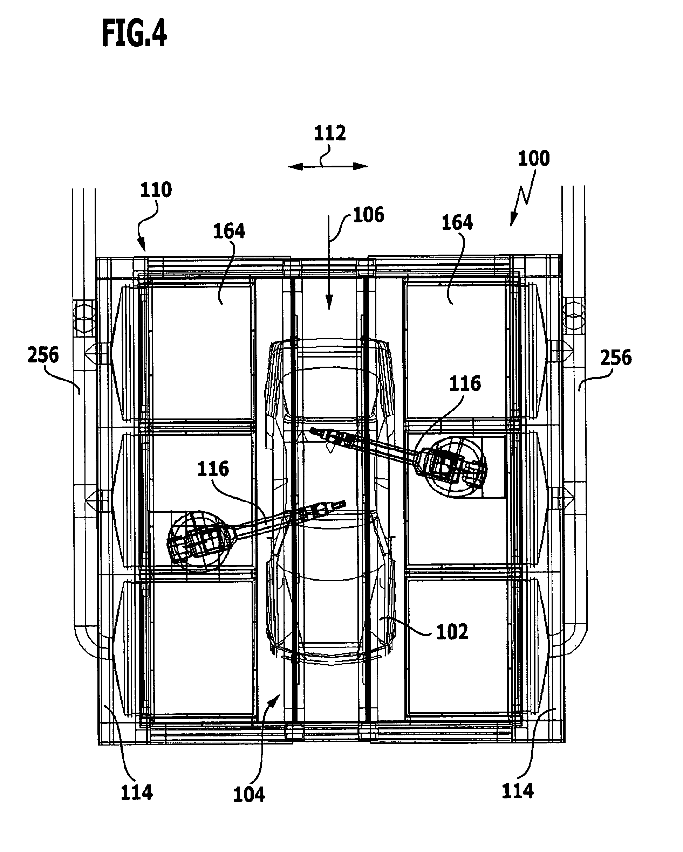

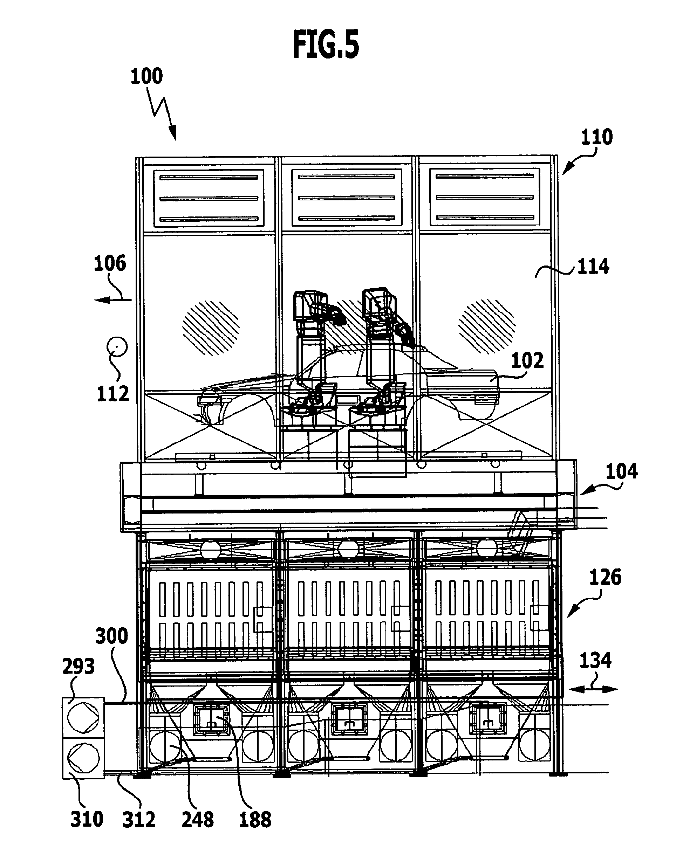

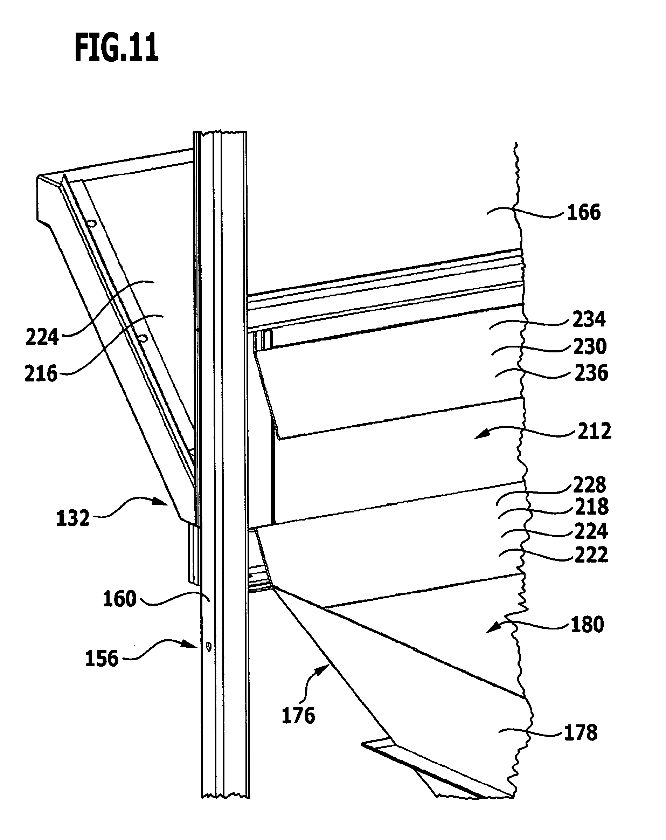

Eine in den Fig. 1 bis 19 dargestellte, als Ganzes mit 100 bezeichnete Anlage zum Spritzlackieren von Fahrzeugkarosserien 102 umfasst eine rein schematisch dargestellte Fördervorrichtung 104, mittels welcher die Fahrzeugkarosserien 102 längs einer Förderrichtung 106 durch einen Applikationsbereich 108 einer als Ganzes mit 110 bezeichneten Lackierkabine bewegt werden können.

Der Applikationsbereich 108 ist der Innenraum der Lackierkabine 110, welche in einer senkrecht zur Förderrichtung 106, die der Längsrichtung der Lackierkabine 110 entspricht, verlaufenden horizontalen Querrichtung 112 zu beiden Seiten der Fördervorrichtung 104 durch jeweils eine Kabinenwand 114 begrenzt ist.

Zu beiden Seiten der Fördervorrichtung 104 sind in der Lackierkabine 110 Spritzlackiereinrichtungen 116, beispielsweise in Form von Lackierrobotern, angeordnet.

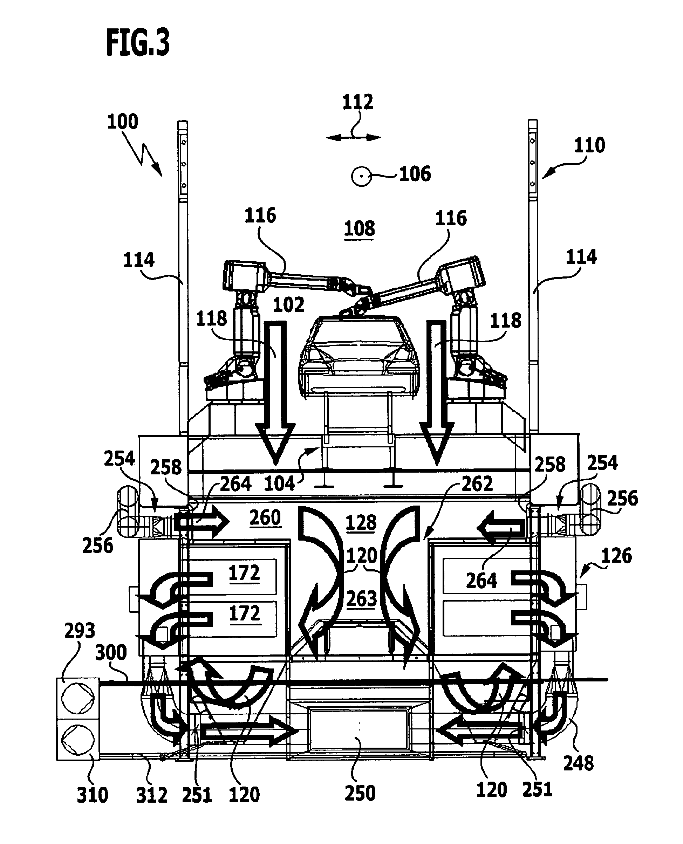

Mittels eines (nur ausschnittsweise dargestellten) Umluftkreislaufs wird ein Luftstrom erzeugt, welcher den Applikationsbereich 108 im Wesentlichen vertikal von oben nach unten durchsetzt, wie dies in Fig. 3 durch die Pfeile 118 angedeutet ist.

Dieser Luftstrom nimmt im Applikationsbereich 108 Lack-Overspray in Form von Overspray-Partikeln auf. Der Begriff "Partikel" umfasst dabei sowohl feste als auch flüssige Teilchen, insbesondere Tröpfchen.

Bei Verwendung von Fluidlack besteht der Fluidlack-Overspray aus Lacktröpfchen. Die meisten der Overspray-Partikel weisen eine größte Abmessung im Bereich von ungefähr 1 µm bis ungefähr 100 µm auf.

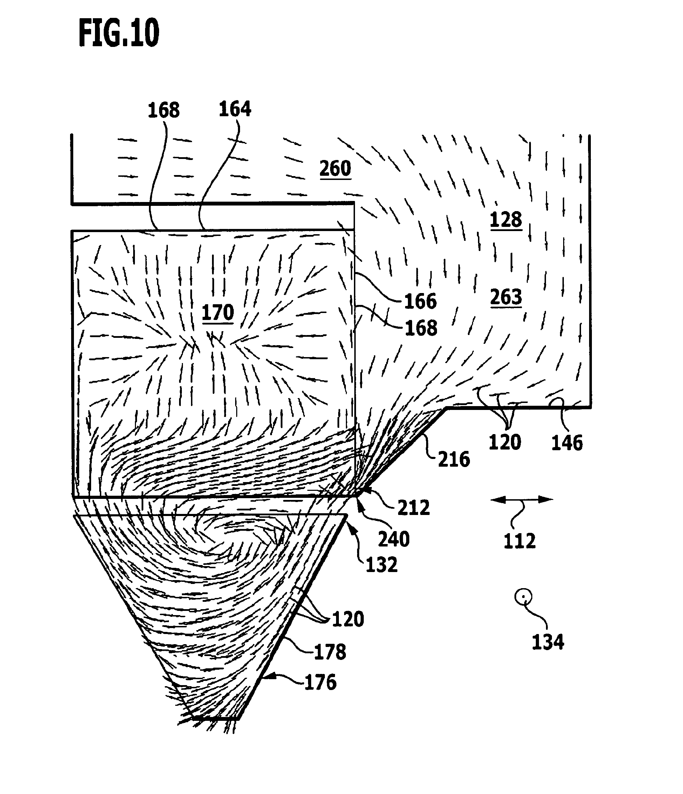

Der mit den Overspray-Partikeln aus dem Applikationsbereich 108 beladene Abluftstrom wird im Folgenden als Rohgasstrom bezeichnet. Die Strömungsrichtung des Rohgasstroms ist in den Fig. 3 und 10 durch Pfeile 120 dargestellt.

Der Rohgasstrom verlässt die Lackierkabine 110 nach unten und gelangt in eine als Ganzes mit 126 bezeichnete Vorrichtung zum Abtrennen von Fluidlack-Overspray aus dem Rohgasstrom, welche unterhalb des Applikationsbereichs 108 angeordnet ist.

Die Vorrichtung 126 umfasst eine im Wesentlichen quaderförmige Strömungskammer 128, welche sich in der Förderrichtung 106 über die ganze Länge der Lackierkabine 110 hinweg erstreckt und in der Querrichtung 112 durch vertikale Seitenwände 130 begrenzt ist, die im Wesentlichen mit den seitlichen Kabinenwänden 114 der Lackierkabine 110 fluchten, so dass die Strömungskammer 128 im Wesentlichen dieselbe horizontale Querschnittsfläche aufweist wie die Lackierkabine 110 und im Wesentlichen vollständig innerhalb der vertikalen Projektion der Grundfläche der Lackierkabine 110 angeordnet ist.

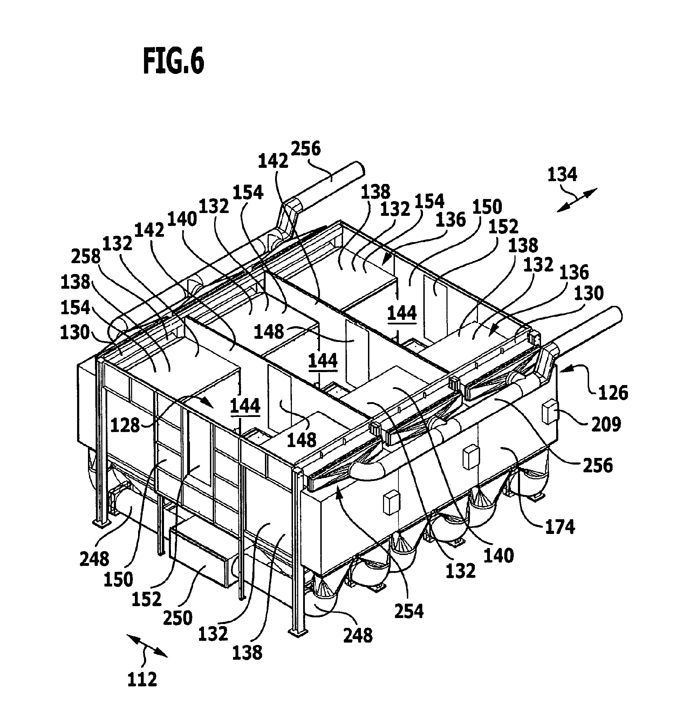

Wie am besten aus Fig. 6 zu ersehen ist, sind auf beiden Seiten der Strömungskammer 128 jeweils mehrere, beispielsweise drei, (in der vorstehenden Beschreibung auch als Filtervorrichtungen bezeichnete) Filtermodule 132 angeordnet, welche zwei sich in der Längsrichtung 134 (welche mit der Förderrichtung 106 übereinstimmt) der Vorrichtung 126 zum Abtrennen von Fluidlack-Overspray erstreckende Modulreihen 136 bilden.

Jede der Modulreihen 136 umfasst zwei Eckmodule 138, welche jeweils ein Ende einer Modulreihe 136 bilden, und mindestens ein zwischen zwei benachbarten Filtermodulen 132 angeordnetes Mittelmodul 140.

Zur Vermeidung von Längsströmungen des Rohgasstroms in der Längsrichtung 134 der Strömungskammer 128 und zur Vermeidung von Strömungen des Rohgases zwischen den einzelnen Filtermodulen 132 können sich in der Querrichtung 112 erstreckende vertikale Quertrennwände 142 vorgesehen sein, welche zwischen jeweils zwei in der Längsrichtung 134 aufeinanderfolgenden Filtermodulen 132 angeordnet sind und die Strömungskammer 128 in längs der Längsrichtung 134 aufeinanderfolgende Strömungskammerabschnitte 144 unterteilen.

Durch diese Quertrennwände 142 ist eine definierte Einstellung der Rohgasströmung für jedes einzelne Filtermodul 132 unabhängig von der Rohgasströmung durch die anderen Filtermodule 132 möglich.

Außerdem können durch die Quertrennwände 142 Bereiche mit unterschiedlichen Overspray-Mengen oder unterschiedlichen Lacksorten (für eine sortenreine Trennung) voneinander getrennt werden.

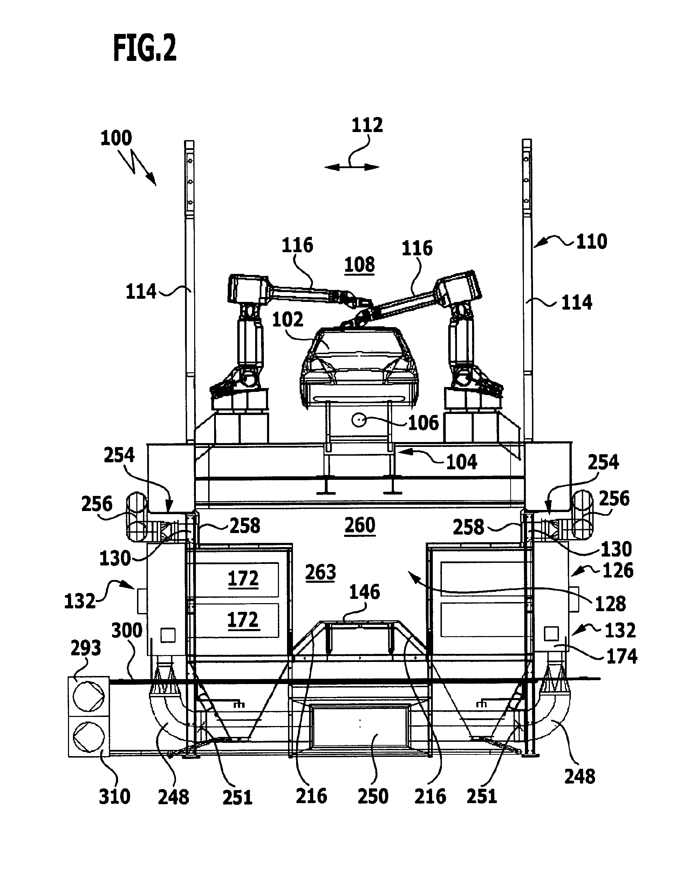

Wie am besten aus Fig. 2 zu ersehen ist, ist zwischen den beiden Modulreihen 136 ein von einer Bedienungsperson begehbarer Steg 146 vorgesehen.

Um die Abschnitte des Stegs 146, welche in den aufeinanderfolgenden Strömungskammerabschnitten 144 angeordnet sind, durchgehend begehen zu können, sind in den Quertrennwänden 142 Durchgangstüren 148 vorgesehen (Fig. 6).

Die die Strömungskammer 128 an ihrem vorderen Ende bzw. an ihrem hinteren Ende abschließenden Stirnwände 150 der Strömungskammer 128 sind mit Zugangstüren 152 versehen, durch welche eine Bedienungsperson von außen in die Strömungskammer 128 gelangen kann.

Jedes der Filtermodule 132 ist als eine vormontierte Einheit 154 ausgebildet, die an einem vom Montageort der Lackieranlage entfernten Ort hergestellt und als Einheit zum Montageort der Lackieranlage transportiert wird. Am Montageort wird die vormontierte Einheit 154 in der vorgesehenen Arbeitsposition angeordnet und mit einer oder mehreren benachbarten vormontierten Einheiten 154 oder mit den dazwischen angeordneten Quertrennwänden 142 sowie mit einer Tragekonstruktion des Applikationsbereichs 108 verbunden.

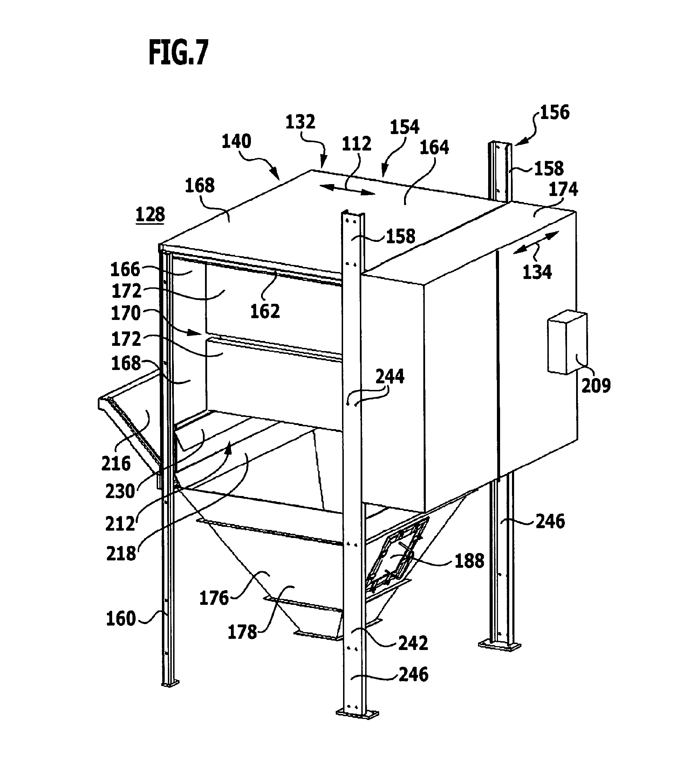

Der Aufbau eines Filtermoduls 132 wird am Beispiel eines Mittelmoduls 140 im Folgenden unter Bezugnahme auf die Fig. 7 und 9 bis 16 beschrieben:
Das Modul umfasst eine Tragekonstruktion 156 aus zwei vertikalen hinteren Stützen 158 und zwei vertikalen vorderen Stützen 160, welche an ihrem oberen Ende über horizontale Querstreben 162 mit jeweils einer der hinteren Stützen 158 verbunden sind (Fig. 7).

Ferner sind die vorderen Stützen 160 an ihren oberen Enden mittels einer weiteren (nicht dargestellten) Querstrebe miteinander verbunden.

Auch die hinteren Stützen 158 sind mittels (nicht dargestellter) Querstreben oder mittels eines (nicht dargestellten) Verbindungsrahmens miteinander verbunden.

Die Querstreben am oberen Ende der Tragekonstruktion 156 tragen eine horizontale Deckenwand 164.

An den Vorderseiten der vorderen Stützen 160 ist eine vertikale Vorderwand 166 des Filtermoduls 132 gehalten.

Die Deckenwand 164 und die Vorderwand 166 bilden Trennwände 168 des Filtermoduls 132, welche einen innerhalb des Filtermoduls 132 angeordneten Filterelementaufnahmeraum 170 von dem außerhalb des Filtermoduls 132 befindlichen Bereich der Strömungskammer 128 trennen.

In dem Filterelementaufnahmeraum 170 des Filtermoduls 132 sind mehrere, beispielsweise zehn, Filterelemente 172 in zwei Reihen übereinander angeordnet, welche von einem gemeinsamen Grundkörper 174, der an den Rückseiten der hinteren Stützen 158 gehalten ist, in horizontaler Richtung abstehen.

Die Filterelemente 172 können beispielsweise aus Platten aus gesintertem Polyethylen, die an ihrer Außenfläche mit einer Membran aus Polytetrafluorethylen (PTFE) versehen sind, ausgebildet sein.

Die Beschichtung aus PTFE dient dazu, die Filterklasse der Filterelemente 172 zu erhöhen (d.h. deren Durchlässigkeit zu verringern) und ferner das permanente Anhaften des aus dem Rohgasstrom abgetrennten Fluidlack-Oversprays zu verhindern.

Die Beschichtung der Filterelemente 172 enthält ferner einen elektrisch leitfähigen Bestandteil, beispielsweise Graphit, um eine Ableitung elektrostatischer Ladungen von den Filterelementen 172 und antistatische Eigenschaften der Filterelemente 172 zu gewährleisten.

Sowohl das Grundmaterial der Filterelemente 172 als auch deren PTFE-Beschichtung weisen eine Porosität auf, so dass das Rohgas durch die Poren in den Innenraum des jeweiligen Filterelements 172 gelangen kann.

Um das Verkleben der Filteroberflächen zu verhindern, sind dieselben ferner mit einer Sperrschicht aus in den Rohgasstrom abgegebenem Hilfsmaterial versehen. Dieses vorzugsweise partikelförmige Hilfsmaterial wird üblicherweise auch als "Precoat"-Material bezeichnet.

Die Sperrschicht bildet sich im Betrieb der Vorrichtung 126 durch Abscheidung des in den Rohgasstrom 120 abgegebenen Hilfsmaterials an den Filteroberflächen und verhindert, dass die Filteroberflächen durch anhaftenden Fluidlack-Overspray verkleben.

Hilfsmaterial aus dem Rohgasstrom 120 setzt sich auch an den Innenseiten der Deckenwand 164 und der Vorderwand 166 des Filtermoduls 132 ab, wo es ebenfalls ein Anhaften von Fluidlack-Overspray verhindert.

Als Hilfsmaterial kann grundsätzlich jedes Medium verwendet werden, welches dazu in der Lage ist, den Flüssigkeitsanteil des Fluidlack-Oversprays aufzunehmen und sich an Overspray-Partikeln anzulagern und damit denselben die Klebrigkeit zu nehmen.

Insbesondere kommen als Hilfsmaterialien beispielsweise Kalk, Steinmehl, Aluminiumsilikate, Aluminiumoxide, Siliziumoxide, Pulverlack oder ähnliches in Betracht.

Alternativ oder ergänzend hierzu können als Hilfsmaterial zur Aufnahme und/oder Bindung des Oversprays auch Partikel mit einer Hohlraumstruktur und relativ zu ihren Außenabmessungen großer innerer Oberfläche verwendet werden, beispielsweise Zeolithe oder andere hohle, beispielsweise kugelförmige Körper aus Polymeren, Glas oder Aluminiumsilikat und/oder natürliche oder synthetisch erzeugte Fasern.

Alternativ oder ergänzend hierzu können als Hilfsmaterial zur Aufnahme und/oder Bindung des Oversprays auch chemisch mit dem Overspray reagierende Partikel verwendet werden, beispielsweise chemisch reaktive Partikel aus Amin-, Epoxid-, Carboxyl-, Hydroxyl- oder Isocyanatgruppen, chemisch reaktive Partikel aus mit Octylsilan nachbehandeltem Aluminiumoxid oder feste oder flüssige Mono-, Oligo- oder Polymere, Silane, Silanole oder Siloxane.

Als Hilfsmaterial kann auch ein Abfallprodukt aus einem Produktionsprozess verwendet werden, beispielsweise ein Abfallprodukt aus der Pulverlackverarbeitung oder ein Holzstaub oder ein Metallstaub aus der Holz- bzw. Metallverarbeitung.

Das Hilfsmaterial besteht vorzugsweise aus einer Vielzahl von Hilfsmaterial-Partikeln, welche einen mittleren Durchmesser im Bereich von beispielsweise ungefähr 10 µm bis ungefähr 100 µm aufweisen.

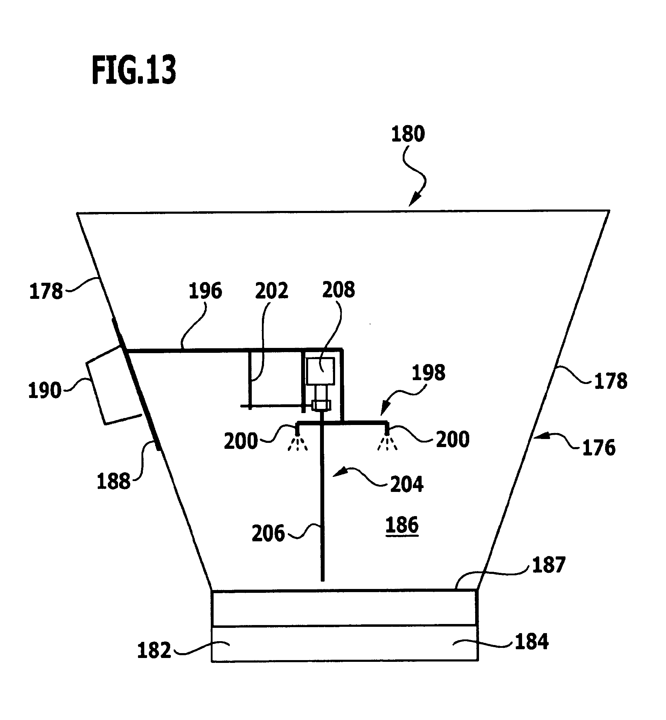

Um das Hilfsmaterial dem Rohgasstrom zugeben zu können, ohne dass die Gefahr besteht, dass das Hilfsmaterial in den Applikationsbereich 108 der Lackieranlage 100 gelangt, ist jedes Filtermodul 132 mit einem an der Tragekonstruktion 156 gehaltenen Hilfsmaterialaufnahmebehälter 176 versehen, welcher beispielsweise eine trichterförmige Gestalt in Form eines umgekehrten Pyramidenstumpfes aufweist (Fig. 13).

Die vier trapezförmigen Seitenwände 178 des Hilfsmaterialaufnahmebehälters 176 sind gegenüber der Vertikalen in einem Winkel von mindestens ungefähr 60° geneigt.

Die Höhe des Hilfsmaterialaufnahmebehälters 176 beträgt beispielsweise ungefähr 1,1 m.

Die oberen Ränder der Seitenwände 178 umschließen eine Zugangsöffnung 180 des Hilfsmaterialaufnahmebehälters 176, durch welche der mit Overspray beladene Rohgasstrom 120 in den Hilfsmaterialaufnahmebehälter 176 eintreten und aus demselben wieder entweichen kann.

Der im Wesentlichen horizontal ausgerichtete Boden 182 ist als ein poröser Fluidboden 184 ausgebildet, der mit einem gasförmigen Medium, insbesondere mit Druckluft, durchspülbar ist, um das im Innenraum 186 des Hilfsmaterialaufnahmebehälters 176 angeordnete Hilfsmaterial zu fluidisieren und lokal unterschiedliche Füllhöhen des Hilfsmaterials innerhalb des Hilfsmaterialaufnahmebehälters 176 zu egalisieren.

Während des Betriebs der Anlage 100 wird der Fluidboden intermittierend, beispielsweise dreimal pro Minute für jeweils ungefähr zwei Sekunden, in Betrieb genommen.

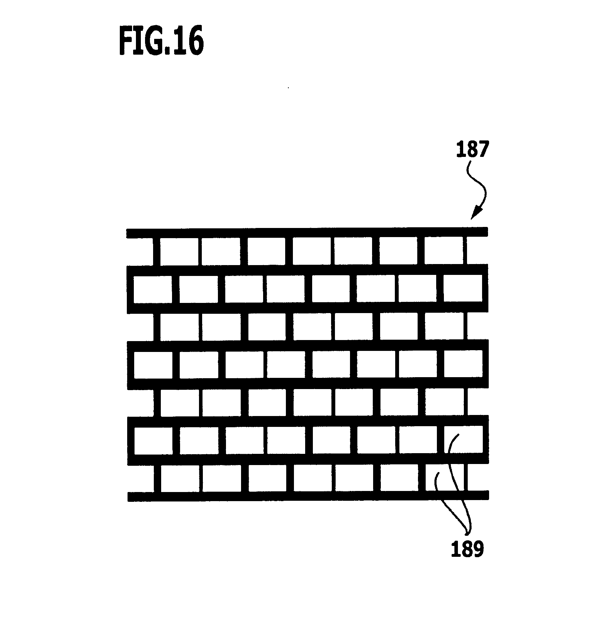

Um zu verhindern, dass der Fluidboden 184 durch herabfallende größere Gegenstände beschädigt wird, ist in einem Abstand von beispielsweise 20 cm über dem Fluidboden 184 ein Auffanggitter oder Rückhaltegitter 187 angeordnet, welches sich in horizontaler Richtung über den gesamten Querschnitt des Innenraums 186 des Hilfsmaterialaufnahmebehälters 176 erstreckt und eine Vielzahl von Reihen waben- oder rechteckförmiger Durchtrittsöffnungen 189 für den Durchtritt von Hilfsmaterial durch das Rückhaltegitter 187 aufweist. Die Durchtrittsöffnungen sind von Reihe zu Reihe versetzt zueinander angeordnet und weisen eine Größe von beispielsweise ungefähr 30 mm x 30 mm auf (Fig. 16).

Um den Zugang zu dem Innenraum 186 des Hilfsmaterialaufnahmebehälters 176 für Wartungszwecke zu ermöglichen, ist eine der Seitenwände 178 mit einer Revisionsöffnung versehen, welche im Betrieb des Filtermoduls 132 durch eine Revisionstür 188 mit einem Handgriff 190 verschlossen ist (siehe die Fig. 13 bis 15).

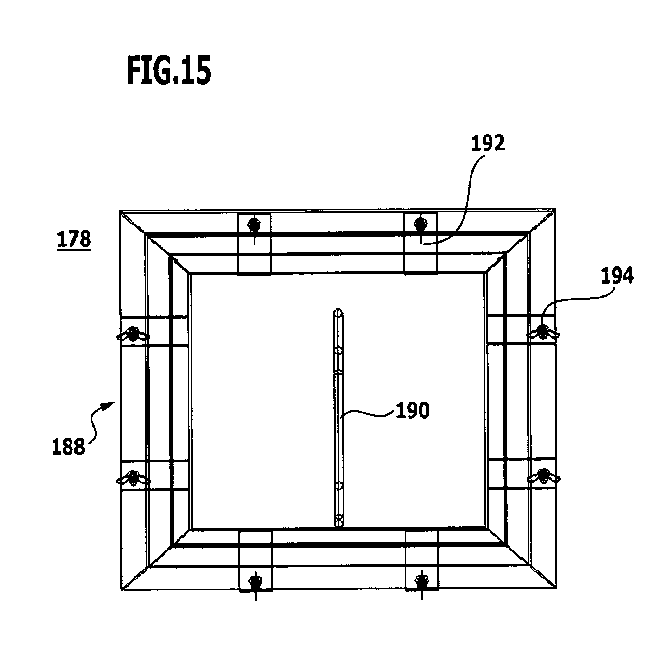

Wie aus Fig. 15 zu ersehen ist, ist die Revisionstür 188 mittels Klemmen 192 mit Flügelmuttern 194 an der zugeordneten Seitenwand 178 des Hilfsmaterialaufnahmebehälters 176 lösbar gehalten.

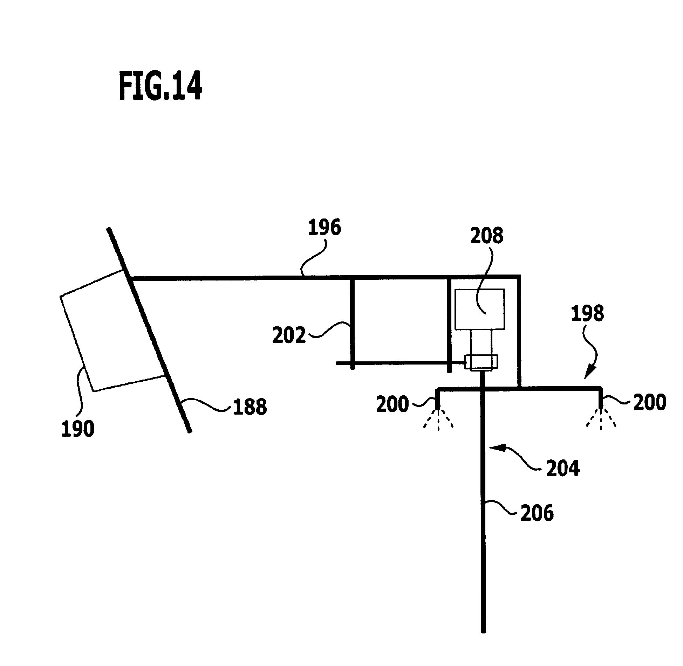

An der Revisionstür 188 ist eine Druckluftrohrleitung 196 gehalten, welche zu einer Aufwirbelungseinrichtung 198 führt (Fig. 14).

Die Aufwirbelungseinrichtung 198 dient dazu, Druckluftimpulse in das darunter befindliche Hilfsmaterial abzugeben, um dieses Hilfsmaterial aufzuwirbeln und so in den durch den Hilfsmaterialaufnahmebehälter 176 hindurchgeführten Rohgasstrom einzubringen.

Außerdem wird durch die Aufwirbelung des Hilfsmaterials mittels der Aufwirbelungseinrichtung 198 eine Homogenisierung der in dem Hilfsmaterialaufnahmebehälter 176 vorhandenen Mischung aus Hilfsmaterial und daran gebundenem Overspray erzielt.

Während des Betriebs der Anlage 100 wird die Aufwirbelungseinrichtung 198 intermittierend, beispielsweise viermal pro Minute für jeweils ungefähr 5 Sekunden, in Betrieb genommen.

Die Aufwirbelungseinrichtung 198 umfasst mehrere, beispielsweise zwei, Austrittsdüsen 200 für Druckluft, welche als Kegeldüsen ausgebildet sind und jeweils einen sich nach unten zu dem Boden 182 des Hilfsmaterialaufnahmebehälters 176 hin erweiternden Druckluftkegel erzeugen können.

Vorzugsweise sind die Austrittsdüsen 200 so ausgebildet und angeordnet, dass die von den Austrittsdüsen 200 erzeugten Druckluftkegel gemeinsam die Bodenfläche des Hilfsmaterialaufnahmebehälters 176 vollständig überstreichen.

Ferner ist an der Druckluftrohrleitung 196 eine Halterung 202 für einen Füllstandssensor 204 angeordnet, welcher ein stabförmiges Sensorelement 206 und ein Sensorgehäuse 208 mit darin untergebrachter Sensorelektronik umfasst (Fig. 14).

Der Füllstandssensor 204 ist als ein analoger, insbesondere kapazitiver, Sensor ausgebildet und dient dazu, ein Signal zu erzeugen, das jeweils einem Wert aus einer Vielzahl diskreter Füllstandshöhen oder aus einem Kontinuum von Füllstandshöhen entspricht, um den Füllstand des Hilfsmaterials in dem Hilfsmaterialaufnahmebehälter 176 möglichst genau ermitteln zu können.

Das stabförmige Sensorelement 206 des Füllstandssensors 204 ist im Wesentlichen vertikal ausgerichtet und möglichst weit von den Seitenwänden 178 des Hilfsmaterialaufnahmebehälters 176 in der Nähe der Mitte des Innenraums 186 des Hilfsmaterialaufnahmebehälters 176 angeordnet, um das Messergebnis des Füllstandssensors 204 möglichst wenig durch Randeffekte zu beeinträchtigen (Fig. 13).

Das stabförmige Sensorelement 206 des Füllstandssensors 204 ist im Wesentlichen senkrecht zu dem horizontalen Boden 182 des Hilfsmaterialaufnahmebehälters 176 ausgerichtet.

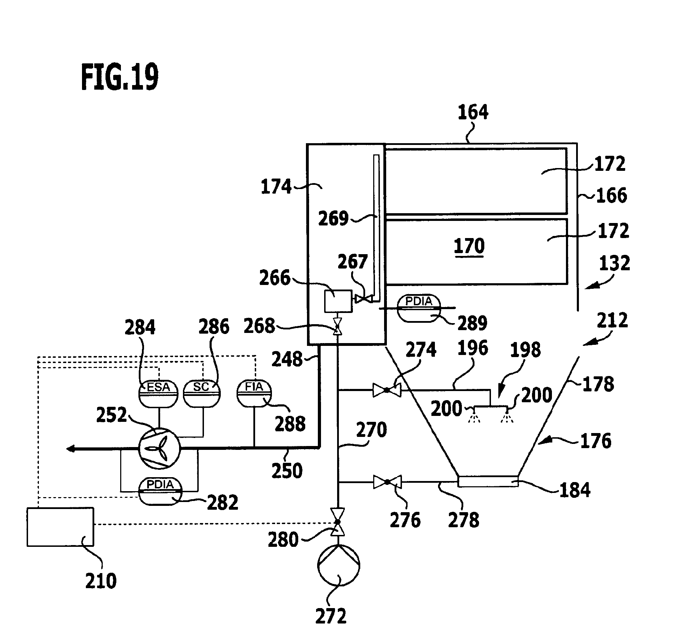

Das Signal, das von dem Füllstandssensor 204 erzeugt wird, wird über eine (nicht dargestellte) Signalleitung an einen elektrischen Anschlusskasten 209 des Filtermoduls 132, der an dem Grundkörper 174 der Filterelemente 172 angeordnet ist (siehe Fig. 7), und von dort an eine Steuervorrichtung der Anlage 100, die in Fig. 19 schematisch dargestellt und mit 210 bezeichnet ist, übermittelt.

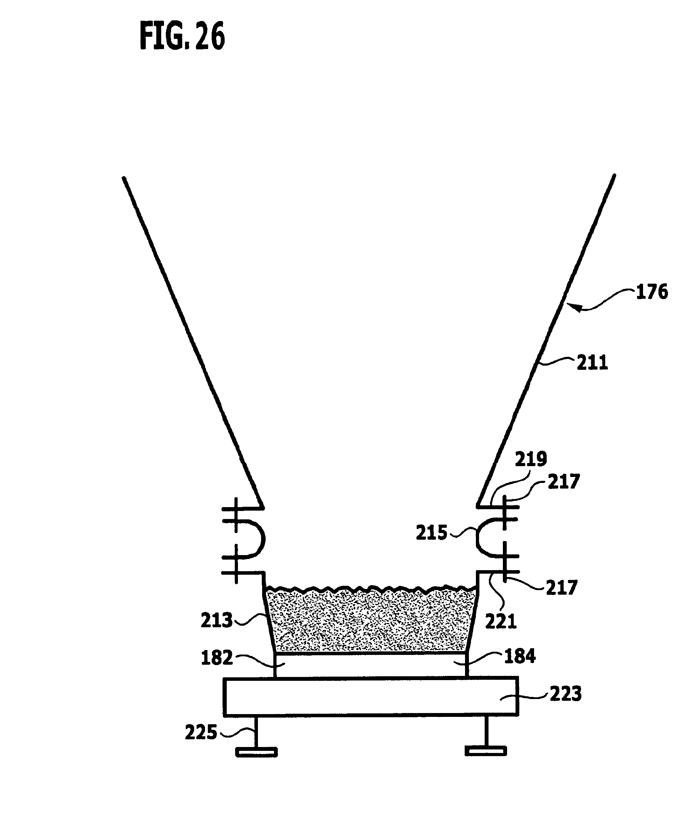

Bei einer in Fig. 26 dargestellte alternativen Ausführungsform eines Hilfsmaterialaufnahmebehälters 176 wird die Menge des Materials, das im Hilfsmaterialaufnahmebehälter 176 aufgenommen ist, nicht durch eine Füllstandsmessung, sondern durch eine Gewichtsmessung ermittelt.

Hierfür ist der Hilfsmaterialaufnahmebehälter 176 in einen oberen Abschnitt 211 und einen unteren Abschnitt 213 unterteilt, wobei die beiden Abschnitte durch einen Kompensator 215 miteinander verbunden sind, welcher als ein ringförmig geschlossenes, kragenförmiges, flexibles Element ausgebildet ist, das durch geeignete Befestigungsmittel 217 einerseits mit einem Befestigungsflansch 219 am unteren Ende des oberen Abschnitts 211 und andererseits mit einem Befestigungsflansch 221 an einem oberen Ende des unteren Abschnitts 213 des Hilfsmaterialaufnahmebehälters 176 verbunden ist.

Der Kompensator 215 kann beispielsweise aus einem flexiblen Kunststoffmaterial gebildet sein.

Der Boden 182 des unteren Abschnitts 213 des Hilfsmaterialaufnahmebehälters 176 ist wie bei der in Fig. 13 dargestellten Ausführungsform als ein poröser Fluidboden 184 ausgebildet.

Der Boden 182 ruht auf einer Behälterwaage 223, welche sich mit Füßen 225 an einem Untergrund abstützt.

Das im Hilfsmaterialaufnahmebehälter 176 aufgenommene Material (Gemisch aus Hilfsmaterial und von den Filterelementen 172 abgereinigtem Fluidlack-Overspray) befindet sich vollständig im unteren Abschnitt 213 des Hilfsmaterialaufnahmebehälters 176, welcher durch den Kompensator 215 mechanisch von dem oberen Abschnitt 211 und damit von den übrigen Bestandteilen des Filtermoduls 132 entkoppelt ist.

Mittels der Behälterwaage 223 ist daher die Summe aus dem Gewicht des unteren Abschnitts 213 und des darin aufgenommenen Materials oder - nach einer entsprechenden Kalibrierung - nur das Gewicht des im unteren Abschnitt 213 des Hilfsmaterialaufnahmebehälters 176 aufgenommenen Materials messbar.

Die Behälterwaage 223 erzeugt ein elektrisches Messsignal, das über eine (nicht dargestellte) Signalleitung an den elektrischen Anschlusskasten 209 des Filtermoduls 132, der an dem Grundkörper 174 der Filterelemente 172 angeordnet ist (siehe Fig. 7), und von dort an eine Steuervorrichtung der Anlage 100, die in Fig. 19 schematisch dargestellt und mit 210 bezeichnet ist, übermittelt wird.

Aufgrund des Vorhandenseins der Behälterwaage 223 kann bei dieser Ausführungsform des Hilfsmaterialaufnahmebehälters 176 der Füllstandssensor 204 entfallen.

Ferner kann die Aufwirbelungseinrichtung 198 statt an der Revisionstür 188 an dem oberen Abschnitt 211 des Hilfsmaterialaufnahmebehälters 176 oder an einem anderen Bauelement des Filtermoduls 132 gehalten sein.

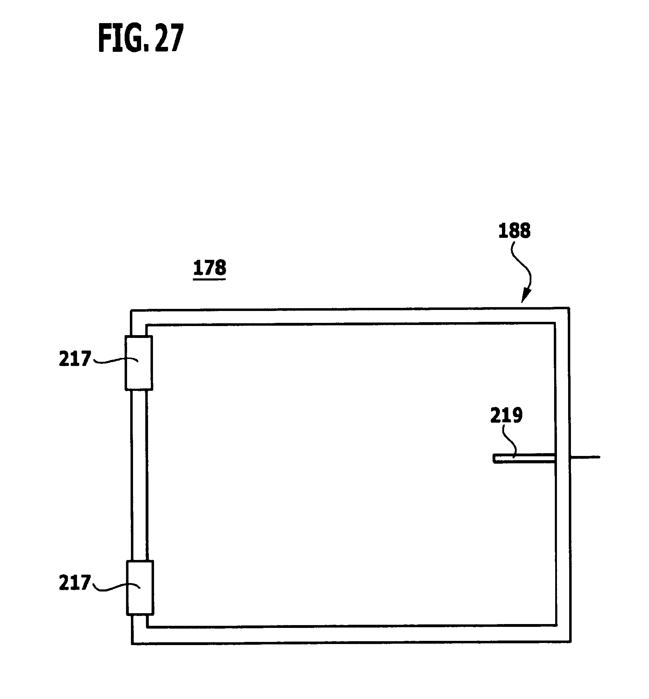

Statt der in Fig. 15 dargestellten Revisionstür 188, welche mittels Klemmen 192 mit Flügelmuttern 194 an der zugeordneten Seitenwand 178 des Hilfsmaterialaufnahmebehälters 176 lösbar gehalten ist, kann daher alternativ eine Revisionstür 188 der in Fig. 27 dargestellten Art eingesetzt werden, welche mittels Scharnieren 217 schwenkbar an der zugeordneten Seitenwand 178 des Hilfsmaterialaufnahmebehälters 176 gehalten und mittels eines schwenkbar an der Revisionstür 188 gelagerten Hebels 219 in einer Schließstellung relativ zu der Seitenwand 178 des Hilfsmaterialaufnahmebehälters 176 verriegelbar ist.

Sowohl bei der in Fig. 27 als auch bei der in Fig. 15 dargestellten Ausführungsform einer Revisionstür 188 kann vor der durch die jeweilige Revisionstür 188 verschlossenen Revisionsöffnung an der Außenseite des Hilfsmaterialaufnahmebehälters 176 eine (nicht dargestellte) Auffangwanne zum Auffangen von beim Öffnen der Revisionstür 188 aus dem Hilfsmaterialaufnahmebehälter 176 herausfallendem Staub vorgesehen sein.

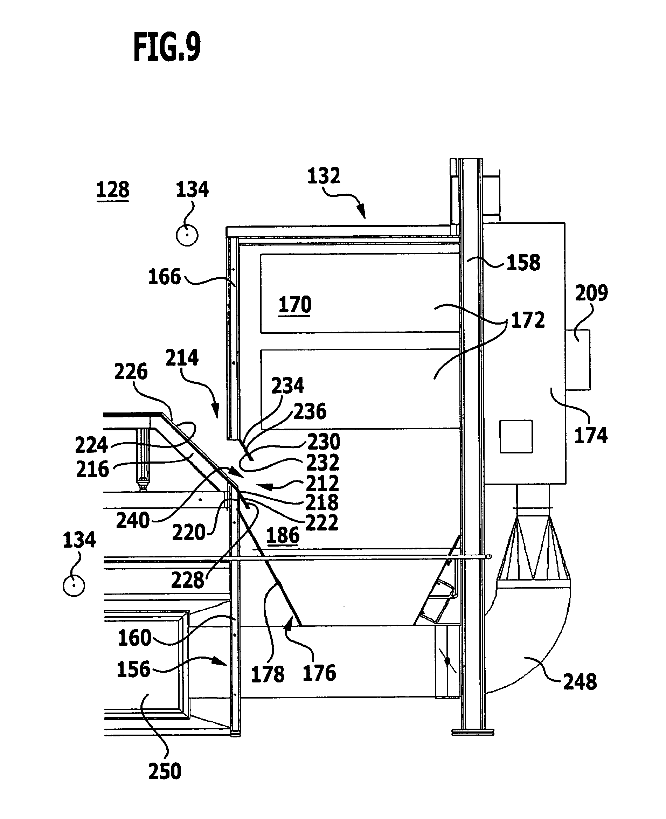

Um die in das Filtermodul 132 eintretende Rohgasströmung gezielt in den Innenraum 186 des Hilfsmaterialaufnahmebehälters 176 hinein zu lenken und einen direkten Zutritt der Rohgasströmung aus der Strömungskammer 128 zu den Filterelementen 172 hin zu verhindern, ist jedes Filtermodul 132 ferner mit einer schlitzförmigen Einlassöffnung 212 versehen, die als ein Einlasskanal 214 ausgebildet ist, der beispielsweise, wie insbesondere aus Fig. 9 zu ersehen ist, einen sich in der Strömungsrichtung des Rohgasstroms bis zu einer Engstelle 240 verengenden durchströmbaren Querschnitt aufweist.

Alternativ oder ergänzend hierzu kann auch vorgesehen sein, dass der Einlasskanal 214 einen sich in der Strömungsrichtung des Rohgasstroms von einer Engstelle 240 aus erweiternden durchströmbaren Querschnitt aufweist.

Der Einlasskanal 214 wird nach unten hin durch eine Einlaufschräge 216, welche sich von den vorderen Stützen 160 der Tragekonstruktion 156 aus unter einem Winkel von beispielsweise ungefähr 40° bis ungefähr 65° gegenüber der Horizontalen geneigt schräg nach oben erstreckt, und durch ein sich an das untere Ende der Einlaufschräge 216 angrenzendes unteres Leitblech 218 begrenzt, welches stärker gegen die Horizontale geneigt ist als die Einlaufschräge 216, beispielsweise unter einem Winkel von ungefähr 55° bis ungefähr 70°, und welches über einen oberen, im Wesentlichen vertikal ausgerichteten Abschnitt 220 einer Seitenwand 178 des Hilfsmaterialaufnahmebehälters 176 hinaus vorsteht und in den Innenraum 186 des Hilfsmaterialaufnahmebehälters 176 hineinragt.

Auf diese Weise wirkt das untere Leitblech 218 als ein Rückhalteelement 222, welches Hilfsmaterial aus dem Hilfsmaterialaufnahmebehälter 176 von der Einlassöffnung 212 fernhält und verhindert, dass aufgewirbeltes Hilfsmaterial auf der Seite der Einlassöffnung 212 entlang der Seitenwand 178 aus dem Hilfsmaterialaufnahmebehälter 176 hinaus gelangt.

Außerdem verhindert das untere Leitblech 218 ein Abreißen der Rohgasströmung nach dem Passieren der Einlaufschräge 216 und gewährleistet eine gerichtete Rohgasströmung in den Hilfsmaterialaufnahmebehälter 176 hinein.

Das untere Leitblech 218 weist eine Tiefe (d.h. eine Ausdehnung in der Strömungsrichtung des Rohgasstroms) von beispielsweise ungefähr 100 mm auf.

Die Einlaufschräge 216 und das untere Leitblech 218 erstrecken sich in der Längsrichtung 134 der Strömungskammer 128 über im Wesentlichen die gesamte Länge der Einlassöffnung 212 von beispielsweise ungefähr 1 m bis ungefähr 2 m, welche nahezu der Ausdehnung des gesamten Filtermoduls 132 in der Längsrichtung 134 entspricht.

Die Oberseite der Einlaufschräge 216 und die Oberseite des unteren Leitblechs 218 bilden zusammen eine untere Leitfläche 224 der Einlassöffnung 212, welche die Einlassöffnung 212 nach unten begrenzt und in ihrem oberen Abschnitt 226, der durch die Einlaufschräge 216 gebildet ist, gegenüber der Horizontalen eine Neigung von ungefähr 40° bis ungefähr 65° aufweist und in ihrem unteren Abschnitt 228, der durch das untere Leitblech 218 gebildet ist, eine stärkere Neigung gegenüber der Horizontalen von ungefähr 55° bis ungefähr 70° aufweist.

Nach oben hin wird die Einlassöffnung 212 durch den unteren Rand der Vorderwand 166 und durch ein von dem unteren Rand der Vorderwand 166 schräg nach unten in den Innenraum des Filtermoduls 132 abstehendes oberes Leitblech 230 begrenzt.

Das obere Leitblech 230 ist ebenso wie das untere Leitblech 218 unter einem Winkel von beispielsweise ungefähr 55° bis ungefähr 70° gegen die Horizontale geneigt und erstreckt sich in der Längsrichtung 134 über im Wesentlichen die gesamte Breite der Einlassöffnung 212 von beispielsweise 1 m oder 2 m.

Das obere Leitblech 230 weist eine Tiefe (d.h. eine Ausdehnung längs der Strömungsrichtung des Rohgasstroms) von beispielsweise ungefähr 150 mm auf.

Die untere Seite des oberen Leitblechs 230 bildet eine obere Leitfläche 232, welche die Einlassöffnung 212 nach oben begrenzt und unter einem Winkel von beispielsweise ungefähr 55° bis ungefähr 70° gegen die Horizontale geneigt ist.

Durch diese obere Leitfläche 232 für den Rohgasstrom wird erreicht, dass die Rohgasströmung nicht an der Vorderwand 166 des Filtermoduls 132 abreißt, sondern direkt in den Hilfsmaterialaufnahmebehälter 176 hinein gelenkt wird.

Das obere Leitblech 230 dient ferner als ein Filterabschirmelement 234, da es so ausgebildet und an der Einlassöffnung 212 angeordnet ist, dass es verhindert, dass das in das Filtermodul 132 eintretende Rohgas direkt zu den Filterelementen 172 strömt.

Ferner dient das obere Leitblech 230 als ein Abweiselement 236, welches von den Filterelementen 170 abgereinigtes Material, welches Hilfsmaterial und an das Hilfsmaterial gebundene Overspray-Partikel enthält, von der Einlassöffnung 212 fernhält.

Von den Filterelementen 172 auf die Oberseite des oberen Leitblechs 230 herabfallendes Material wird vielmehr durch die Schrägstellung des oberen Leitblechs 230 in den Hilfsmaterialaufnahmebehälter 176 gelenkt.

Im Betrieb des Filtermoduls 132 sind sowohl die obere Leitfläche 232 als auch die Oberseite des oberen Leitblechs 230 mit einer Beschichtung aus dem Hilfsmaterial versehen, so dass diese Flächen des oberen Leitblechs 230 leicht zu reinigen sind und kein Overspray direkt an dem oberen Leitblech 230 anklebt.

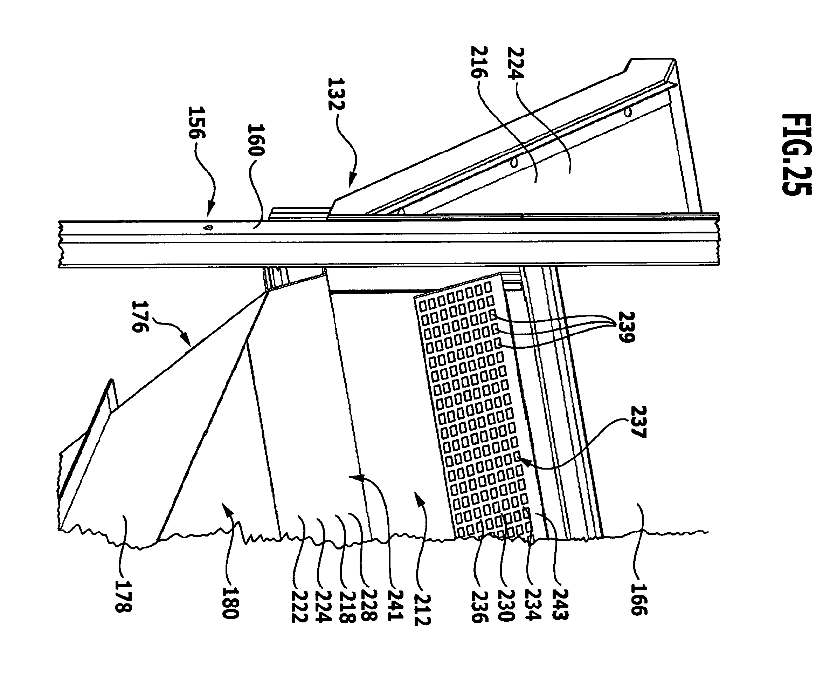

Alternativ zu einem geschlossenen oberen Leitblech 230 kann aber auch, wie in Fig. 25 dargestellt, ein oberes Leitblech 230 verwendet werden, das in einem unteren Durchtrittsbereich 237 mehrere Durchtrittsöffnungen 239 aufweist, welche es ermöglichen, dass von den Filterelementen 172 abgereinigtes Hilfsmaterial durch diese Durchtrittsöffnungen 239 hindurch zu der Oberseite des unteren Leitblechs 218 und/oder zu der Oberseite der Einlaufschräge 216 gelangen kann.

Die Einlaufschräge 216 und das untere Leitblech 218 bilden ein unteres Leitelement 241, welches die Einlassöffnung 212 des Filtermoduls 132 nach unten begrenzt, während das obere Leitblech 230 ein oberes Leitelement 243 bildet, welches die Einlassöffnung 212 des Filtermoduls 132 nach oben begrenzt.

Das auf das untere Leitelement 241 gelangende Hilfsmaterial entklebt Lackpartikel, die sich dort absetzen könnten, und verbindet sich mit diesen Lackpartikeln, so dass sie nicht mehr Sinterplatten des Fluidbodens 184 des Hilfsmaterialaufnahmebehälters 176 zusetzen können, wenn sie in den Hilfsmaterialaufnahmebehälter 176 fallen.

Vorzugsweise überdecken die Durchtrittsöffnungen 239 des oberen Leitelements 243 mindestens 25% der Fläche des Durchtrittsbereichs 237 des oberen Leitelements 243.

Die Durchtrittsöffnungen 239 können beispielsweise rechteckig oder im Wesentlichen quadratisch ausgebildet sein.

Ferner können die Durchtrittsöffnungen 239 in einem regelmäßigen Muster, beispielsweise in einem Rechteck- oder Quadrat-Gitter, in dem Durchtrittsbereich 237 angeordnet sein.

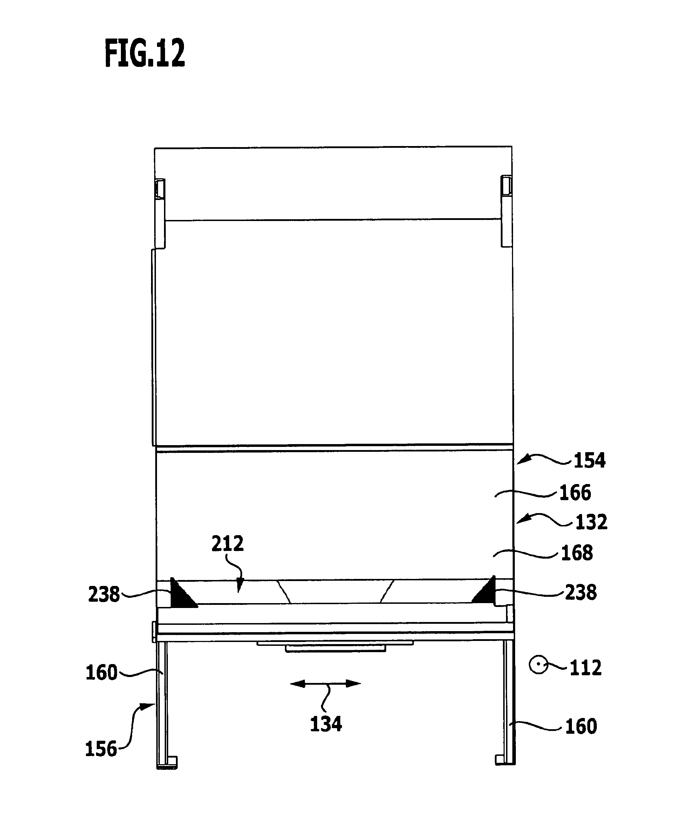

Wie am besten aus Fig. 12 zu ersehen ist, umfasst das Filtermodul 132 ferner zwei Abdeckelemente 238 in Form ungefähr dreieckiger Abdeckbleche, welche den linken und den rechten unteren Eckbereich der Einlassöffnung 212 so abdecken, dass Hilfsmaterial und Overspray aus dem Rohgasstrom von diesen Eckbereichen der Einlassöffnung 212 ferngehalten werden und Ablagerungen von Hilfsmaterial und von Overspray-Partikeln in diesen Eckbereichen und außerhalb des Filtermoduls 132 auf der Einlaufschräge 216 verhindert werden.

Die Oberseiten der Abdeckelemente 238 sind schräg zur Vertikalen und schräg zur Horizontalen ausgerichtet und weisen jeweils eine Oberflächennormale auf, welche in den Außenraum des Filtermoduls 132 nach oben gerichtet ist.

Durch die vorstehend beschriebene Ausgestaltung der Geometrie der Einlassöffnung 212 wird erreicht, dass die Einlassöffnung 212 eine Engstelle 240 aufweist, an welcher der durchströmbare Querschnitt der Einlassöffnung 212 am kleinsten und daher die Rohgasgeschwindigkeit am größten ist.

Vorzugsweise beträgt die Rohgasgeschwindigkeit in der Engstelle von ungefähr 2 m/s bis ungefähr 8 m/s, insbesondere von ungefähr 3 m/s bis ungefähr 5 m/s.

Auf diese Weise wird wirksam verhindert, dass Hilfsmaterial aus dem Inneren des Filtermoduls 132, welches eine geschlossene Box bildet, in die Strömungskammer 128 und von dort in den Applikationsbereich 108 gelangt. Die Aufwirbelung des Hilfsmaterials im Hilfsmaterialaufnahmebehälter 176 und die Abreinigung der Filterelemente 172 können daher zu jedem beliebigen Zeitpunkt erfolgen, ohne die Zufuhr von Rohgas zum Filtermodul 132 oder gar den Betrieb der Spritzlackiereinrichtungen 116 im Applikationsbereich 108 unterbrechen zu müssen.

Ferner ist dadurch, dass der Rohgasstrom in den Hilfsmaterialaufnahmebehälter 176 gerichtet aus der Einlassöffnung 212 austritt, gewährleistet, dass eine Umlenkung des Rohgasstroms im Innenraum 186 des Hilfsmaterialaufnahmebehälters 176 erfolgt. Dadurch wird eine ausreichende Menge von Hilfsmaterial, die durch das Aufwirbeln aus der im Hilfsmaterialaufnahmebehälter 176 befindlichen Vorlage erzeugt wird, durch den Rohgasstrom mitgerissen. Ferner wird mittels der Aufwirbelungseinrichtung 198 im Innenraum 186 des Hilfsmaterialaufnahmebehälters 176 aufgewirbeltes Hilfsmaterial durch den Rohgasstrom 120 aus dem Hilfsmaterialaufnahmebehälter 176 heraus zu den Filterelementen 172 getragen.

Die Rohgasströmung aus der Strömungskammer 128 durch die Einlassöffnung 212 in den Innenraum des Filtermoduls 132 ist in Fig. 10 als Ergebnis einer Strömungssimulation dargestellt. Hieraus ist deutlich zu ersehen, dass sich im Innenraum des Filtermoduls 132 eine Strömungswalze ausbildet, deren horizontal verlaufende Achse etwas tiefer liegt als der obere Rand des Hilfsmaterialaufnahmebehälters 176.

Auf der der Einlassöffnung 212 gegenüberliegenden Seite des Hilfsmaterialaufnahmebehälters 176 strömt die mit Hilfsmaterial beladene Rohgasströmung wieder aus dem Hilfsmaterialaufnahmebehälter 176 heraus und verteilt sich dann über die gesamte Tiefe des Filterelementaufnahmeraums 170, so dass eine Verwirbelung um die Filterelemente 172 ausgebildet wird und aufgrund der hohen Dynamik, die der Rohgasstrom in der Engstelle 240 erhalten hat, eine homogene Verteilung des Hilfsmaterials auf die einzelnen Filterelemente 172 gewährleistet ist.

Da sich kaum Bauteile des Filtermoduls 132 im Strömungsweg des ankommenden Rohgasstroms befinden, wird eine Verschmutzung von Bauteilen durch klebrigen Lack weitgehend verhindert und trotzdem eine für die Filtrierung günstige Anströmung der Filterelemente 172 erhalten.

Dadurch, dass die mittlere Strömungsrichtung des durch die Engstelle 240 in das Filtermodul 132 eintretenden Rohgasstroms unter einem Winkel von mehr als 40° gegen die Horizontale geneigt ist, wird verhindert, dass sich im unteren Bereich des Filterelementaufnahmeraums 170 eine Luftschleuse ausbildet, welche von den Filterelementen 172 abgereinigtes Material sofort wieder zu den Filterelementen 172 zurück befördern würde und zur Ausbildung einander entgegengesetzter Luftwirbel innerhalb des Filtermoduls 132 führen könnte.

Um zwei in einer Modulreihe 136 nebeneinander angeordnete Filtermodule 132 in einfacher Weise und stabil miteinander verbinden zu können oder um ein Filtermodul 132 mit einer angrenzenden Quertrennwand 142 verbinden zu können, umfasst die Tragekonstruktion 156 jedes Filtermoduls 132 mindestens eine hintere Stütze 158, die eine vertikal und in der Querrichtung 112 ausgerichtete, im Wesentlichen ebene Anlagefläche 242 aufweist, welche an eine entsprechende Anlagefläche 242 eines benachbarten Filtermoduls 132 oder an eine benachbarte Quertrennwand 142 angelegt werden kann (Fig. 7). In der Anlagefläche 242 sind ferner Durchtrittsöffnungen 244 für den Durchtritt von Befestigungsmitteln vorgesehen, mittels welcher die als Verbindungselement 246 dienende hintere Stütze 158 mit einem Verbindungselement 246 eines benachbarten Filtermoduls 132 oder mit einer benachbarten Quertrennwand 142 verbindbar ist.

Die als Verbindungselement 246 dienende hintere Stütze 158 weist vorzugsweise ein ungefähr U-förmiges Profil auf.

Wie aus Fig. 7 zu ersehen ist, weist jedes Mittelmodul 140 zwei als Verbindungselemente 246 dienende hintere Stützen 158 mit U-förmigen Profilen auf, deren offene Seiten einander zugewandt sind, damit das Mittelmodul 140 auf beiden Seiten mit einem angrenzenden weiteren Filtermodul 132 oder mit einer Quertrennwand 142 verbindbar ist.

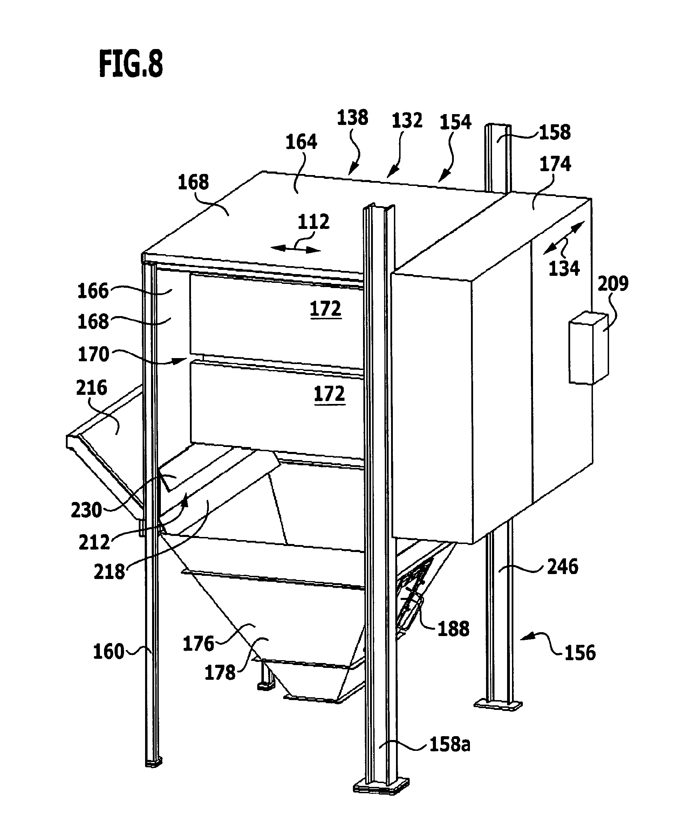

Wie aus Fig. 8 zu ersehen ist, weist jedes Eckmodul 138 nur eine als Verbindungselement 246 ausgebildete hintere Stütze 158 mit U-förmigem Profil auf; die gegenüberliegende hintere Stütze 158a, welche weder mit einem benachbarten Filtermodul 132 noch mit einer benachbarten Quertrennwand 142 verbunden werden muss, kann zur Erhöhung ihrer mechanischen Festigkeit statt eines U-förmigen Profils beispielsweise ein T-förmiges Profil aufweisen.

Im Übrigen stimmen die Eckmodule 138 hinsichtlich Aufbau und Funktion mit den vorstehend im Detail beschriebenen Mittelmodulen 140 überein.

Im Betrieb jedes Filtermoduls 132 überstreicht der Rohgasstrom 120 die Filteroberflächen der Filterelemente 172, wobei sowohl das mitgeführte Hilfsmaterial als auch der mitgeführte Fluidlack-Overspray an den Filteroberflächen abgeschieden werden, und das gefilterte Rohgas gelangt als Abluftstrom durch die porösen Filteroberflächen in die Innenräume der Filterelemente 172, die mit einem Hohlraum innerhalb des Grundkörpers 174, von dem die Filterelemente 172 abstehen, verbunden sind. Von diesem Hohlraum gelangt der gereinigte Abluftstrom in jeweils ein Abluftrohr 248, welches von dem Grundkörper 174 der Filterelemente 172 jedes Filtermoduls 132 zu einem ungefähr mittig unter der Strömungskammer 128 angeordneten und parallel zur Längsrichtung 134 der Strömungskammer 128 verlaufenden Abluftkanal 250 führt (siehe insbesondere die Fig. 2 und 3).

In jedem Abluftrohr 248 ist jeweils eine Klappe 251 angeordnet, mittels welcher der Luftvolumenstrom durch das betreffende Filtermodul 132 einstellbar ist.

Wie aus der schematischen Darstellung der Fig. 19 zu ersehen ist, gelangt die von dem Fluidlack-Overspray gereinigte Abluft aus dem Abluftkanal 250 zu einem Abluftgebläse 252, von wo die gereinigte Abluft über ein (nicht dargestelltes) Kühlregister und eine (nicht dargestellte) Zuführleitung einer oberhalb des Applikationsbereichs 108 angeordneten (nicht dargestellten) Luftkammer, dem sogenannten Plenum, zugeführt wird.

Von dieser Luftkammer gelangt die gereinigte Abluft über eine Filterdecke in den Applikationsbereich 108 zurück.

Von der Zuführleitung zweigt eine (nicht dargestellte) Abluftleitung ab, durch welche ein Teil des gereinigten Abluftstroms (beispielsweise über einen Kamin) an die Umgebung abgegeben wird.

Dieser an die Umgebung abgegebene Teil des Abluftstroms wird durch Frischluft ersetzt, welche in die Strömungskammer 128 über zwei Luftschleiererzeugungsvorrichtungen 254 eingespeist wird, die über jeweils eine Zuluftleitung 256 mit einer (nicht dargestellten) Zuluftanlage verbunden sind (Fig. 1 bis 3).

Jede der Luftschleiererzeugungsvorrichtungen 254 umfasst jeweils eine sich in der Längsrichtung 134 der Strömungskammer 128 erstreckende Zuluftkammer, die über die Zuluftleitung 256 mit Zuluft gespeist wird und über einen Spalt 258, welcher sich längs der Längsrichtung 134 erstreckt und in vertikaler Richtung eine Ausdehnung im Bereich von beispielsweise ungefähr 15 cm bis ungefähr 50 cm aufweist, in einen oberen Abschnitt 260 der Strömungskammer 128 mündet, welcher nach oben durch den Applikationsbereich 108 und nach unten durch die Deckenwände 164 der Filtermodule 132 begrenzt ist.

Der Spalt 258 jeder Zuluftkammer ist knapp oberhalb der Deckenwände 164 der Filtermodule 132 angeordnet, so dass durch das Einströmen der Zuluft aus den Zuluftkammern in im Wesentlichen horizontaler Richtung längs der Oberseiten der Deckenwände 164 der Filtermodule 132 in die Strömungskammer 128 an der Oberseite der Filtermodule 132 jeweils ein Luftschleier gebildet wird, welcher von der jeweils zugeordneten Luftschleiererzeugungsvorrichtung 254 ausgehend zu einer Engstelle 262 zwischen den oberen Rändern der einander gegenüberstehenden Modulreihen 136 gerichtet ist und dadurch verhindert, dass der mit dem Fluidlack-Overspray beladene Rohgasstrom 120 aus dem Applikationsbereich 108 zu der Oberseite der Filtermodule 132 gelangt und der Fluidlack-Overspray aus dem Rohgasstrom 120 sich an der Oberseite der Filtermodule 132 absetzt.

An der Engstelle 262 der Strömungskammer 128 nimmt der vom Rohgasstrom durchströmbare horizontale Querschnitt der Strömungskammer 128 sprunghaft ab, so dass die Strömungsgeschwindigkeit des Rohgasstroms in dem unterhalb der Engstelle 262 befindlichen unteren Abschnitt 263 der Strömungskammer 128 deutlich höher ist als in dem oberhalb der Engstelle 262 befindlichen oberen Abschnitt 260 der Strömungskammer 128.

Die mittlere Strömungsrichtung der Luft in den von der Luftschleiererzeugungsvorrichtungen 254 erzeugten Querluftschleiern an der Oberseite der Filtermodule 132 ist in Fig. 3 durch die Pfeile 264 veranschaulicht.

Der Großteil der durch den Applikationsbereich 108 hindurchgeführten Luft wird somit in einem Umluftkreislauf geführt, welcher den Applikationsbereich 108, die Strömungskammer 128, die Filtermodule 132, die Abluftrohre 248, den Abluftkanal 250, das Abluftgebläse 252 sowie die Zuführleitung und die Luftkammer über dem Applikationsbereich 108 umfasst, wobei eine ständige Aufheizung der im Umluftkreislauf geführten Luft durch die Frischluftzufuhr über die Luftschleiererzeugungsvorrichtungen 254 vermieden wird.

Alternativ oder ergänzend hierzu kann eine Frischluftzufuhr auch an anderer Stelle des Umluftkreislaufs, beispielsweise direkt in die Zuführleitung, erfolgen.

Da die Abtrennung des Fluidlack-Oversprays aus dem Rohgasstrom 120 mittels der Filterelemente 172 trocken, d.h. ohne Auswaschung mit einer Reinigungsflüssigkeit, erfolgt, wird die im Umluftkreislauf geführte Luft beim Abtrennen des Fluidlack-Oversprays nicht befeuchtet, so dass auch keinerlei Vorrichtungen zur Entfeuchtung der im Umluftkreislauf geführten Luft erforderlich sind.

Ferner sind auch keine Vorrichtungen zur Abtrennung von Fluidlack-Overspray aus einer Auswasch-Reinigungsflüssigkeit erforderlich.

Dadurch, dass der von dem Rohgasstrom durchströmbare horizontale Querschnitt der Strömungskammer 128 durch das Vorhandensein der Filtermodule 132 im unterhalb der Engstelle 262 liegenden unteren Abschnitt 263 der Strömungskammer 128 deutlich geringer ist als im oberen Abschnitt 260 der Strömungskammer 128 (beispielsweise im unteren Abschnitt 263 nur ungefähr 35 % bis ungefähr 50 % der horizontalen Querschnittsfläche der Strömungskammer 128 im oberen Abschnitt 260 derselben beträgt), wird die Strömungsgeschwindigkeit des Rohgasstroms auf dessen Weg vom Applikationsbereich 108 durch die Strömungskammer 128 bis zu den Einlassöffnungen 212 der Filtermodule 132 kontinuierlich erhöht, so dass sich ein ansteigendes Geschwindigkeitsprofil in dem Rohgasstrom ergibt.

Dieses ansteigende Geschwindigkeitsprofil hat zur Folge, dass aus den Filtermodulen 132 austretende Partikel nicht in den Applikationsbereich 108 gelangen können.

Dabei beträgt die Geschwindigkeit der Rohgasströmung im Applikationsbereich 108 und im oberen Abschnitt 260 der Strömungskammer 128 beispielsweise bis zu ungefähr 0,6 m/s, während sie im unteren Abschnitt 263 der Strömungskammer beispielsweise im Bereich von ungefähr 0,6 m/s bis ungefähr 3 m/s liegt und in den Einlassöffnungen 212 der Filtermodule 132 bis auf einen Maximalwert im Bereich von ungefähr 3 m/s bis ungefähr 5 m/s ansteigt.

Dadurch, dass die Filterelemente 172 in den Filtermodulen 132 komplett eingehaust sind, ist eine Aktivierung der Filterelemente 172 durch Aufbringen von Hilfsmaterial und eine Abreinigung der Filterelemente 172 jederzeit während des laufenden Lackierprozesses im Applikationsbereich 108 möglich.

Wird die Breite der Lackierkabine 110, d.h. deren Ausdehnung in der Querrichtung 112, verändert, so werden dennoch gleich große Filtermodule 132 verwendet; die Anpassung der Vorrichtung 126 zum Abtrennen von Fluidlack-Overspray erfolgt in diesem Falle lediglich durch eine Erhöhung des Abstands der beiden Modulreihen 136 voneinander und durch eine Verbreiterung des begehbaren Steges 146.

Das Geschwindigkeitsprofil der Rohgasströmung ändert sich bei einer solchen Verbreiterung der Lackierkabine 110 somit nur in dem Bereich bis zu dem begehbaren Steg 146; ab hier, also insbesondere beim Passieren der Einlassöffnungen 212 der Filtermodule 132, ist das Geschwindigkeitsprofil der Rohgasströmung nur noch von der pro Zeiteinheit durchströmenden Rohgasmenge abhängig, nicht aber von der Geometrie der Strömungskammer 128.

Der Abstand der (begehbaren) Deckenwände 164 der Filtermodule 132 von der Unterkante der durch die Lackierkabine 110 hindurch geförderten Fahrzeugkarosserien 102 beträgt aus Wartungsgründen mindestens ungefähr 1,5 m.

Die Filterelemente 172 werden in bestimmten Zeitintervallen, wenn ihre Beladung mit Fluidlack-Overspray und Hilfsmaterial ein vorgegebenes Maß erreicht hat, durch Druckluftimpulse abgereinigt.

Diese Abreinigung kann (in Abhängigkeit vom Druckverlustanstieg an den Filterelementen 172) beispielsweise einmal bis sechsmal pro 8-Stunden-Arbeitsschicht, d.h. ungefähr alle 1 bis 8 Stunden, erfolgen.

Die erforderlichen Druckluftimpulse werden mittels einer Abpulseinheit 266, welche an dem Grundkörper 174 der Filterelemente 172 jedes Filtermoduls 132 angeordnet ist, erzeugt, wobei die Abpulseinheit 266 dazu in der Lage ist, Druckluftimpulse über ein Abpulsventil 267 an Druckluftrohre oder Druckluftlanzen 269 abzugeben, welche innerhalb des jeweiligen Grundkörpers 174 verlaufen und von der Abpulseinheit 266 in die Innenräume der Filterelemente 172 führen (Fig. 19).

Die Abpulseinheit 266 umfasst einen Druckluftbehälter, der sich durch das Öffnen des Abpulsventils 267 schlagartig entleert.

Von den Innenräumen der Filterelemente 172 gelangen die Druckluftimpulse durch die porösen Filteroberflächen in den Filterelementaufnahmeraum 170, wobei die an den Filteroberflächen gebildete Sperrschicht aus Hilfsmaterial und dem daran abgeschiedenen Fluidlack-Overspray von den Filteroberflächen abgelöst wird, so dass die Filteroberflächen in ihren abgereinigten Ursprungszustand zurückversetzt werden.

Die Druckluftlanzen 269 sitzen nicht dicht auf den Filterelementen 172 auf, so dass die Druckluft seitlich zwischen der jeweiligen Druckluftlanze 269 und dem Filterelement 172 durchströmt, wenn der Filterkuchen nicht durchströmbar ist. Der Abpulseinheit 266 umfasst ein Nachfüllventil 268, über welches der Abpulseinheit 266 Druckluft zum Auffüllen des Druckluftbehälters der Abpulseinheit 266 aus einer Druckluftzuführleitung 270 zuführbar ist, die von einem Kompressor 272 gespeist wird (siehe Fig. 19).

An diese Druckluftzuführleitung 270 ist über ein Druckluftventil 274 auch die Druckluftrohrleitung 196 angeschlossen, welche zu den Austrittsdüsen 200 der Aufwirbelungseinrichtung 198 führt.

Ferner ist an die Druckluftzuführleitung 270 auch der Fluidboden 184 jedes Hilfsmaterialaufnahmebehälters 176 über eine mit einem Druckluftventil 276 versehene Druckluftleitung 278 angeschlossen.

Durch das Öffnen des Abpulsventils 267, des Druckluftventils 274 bzw. des Druckluftventils 276 kann somit, abwechselnd oder gleichzeitig, eine Abreinigung der Filterelemente 172, eine Aufwirbelung des Hilfsmaterials im Hilfsmaterialaufnahmebehälter 176 bzw. eine Fluidisierung des Hilfsmaterials im Hilfsmaterialaufnahmebehälter 176 mittels des Fluidbodens 184 ausgelöst werden.

Zwischen den genannten Druckluftventilen und dem Kompressor 272 ist in der Druckluftzuführleitung 270 ein Sperrventil 280 angeordnet, welches durch die Steuervorrichtung 210 im örtlichen Leitstand ansteuerbar ist.

Die Steuervorrichtung 210 sperrt durch Schließen des Sperrventils 280 die Druckluftzufuhr vom Kompressor 272 zu den genannten Druckluftverbrauchern eines Filtermoduls 132 oder aller Filtermodule 132, wenn sie feststellt, dass keine ausreichende Rohgasströmung durch die Filterelemente 172 vorhanden ist.

Um zu ermitteln, ob eine ausreichende Rohgasströmung durch die Filterelemente 172 vorhanden ist, kann beispielsweise vorgesehen sein, dass die Steuervorrichtung 210 den Betriebszustand des Abluftgebläses 252 überwacht.

Diese Überwachung des Betriebszustands des Abluftgebläses 252 kann beispielsweise mittels eines Differenzdruckmessers (PDIA) 282 erfolgen, welcher den Druckabfall zwischen der Druckseite und der Saugseite des Abluftgebläses 252 misst.

Alternativ oder ergänzend hierzu kann der Betriebszustand des Abluftgebläses 252 von der Steuervorrichtung 210 auch mittels eines Stromüberwachungsgerätes (ESA) 284 und/oder mittels eines Frequenzumrichters (SC) 286 überwacht werden.

Ferner kann vorgesehen sein, dass das Fehlen einer ausreichenden Rohgasströmung durch die Filterelemente 172 mittels eines Durchflussmessgeräts (FIA) 288 ermittelt wird, welches den Gasfluss durch den Abluftkanal 250 oder durch eines oder mehrere der Abluftrohre 248 misst.

Ferner besteht die Möglichkeit, das Fehlen einer ausreichenden Rohgasströmung durch die Filterelemente 172 durch Messung des Druckabfalls an den Filterelementen 172 eines Filtermoduls 132 oder aller Filtermodule 132 mittels eines Differenzdruckmesser (PDIA) 289 zu ermitteln, welcher den Druckabfall zwischen dem Innenraum des jeweiligen Filtermoduls 132 einerseits und dem Innenraum des Grundkörpers 174 andererseits misst.

Wenn die Steuervorrichtung 210 aufgrund der ihr übermittelten Signale des Differenzdruckmessers 282, des Stromüberwachungsgeräts 284, des Frequenzumrichters 286 und/oder des Durchflussmessgeräts 288 feststellt, dass die Rohgasströmung durch die Filterelemente 172 unterhalb eines vorgegebenen Schwellenwerts liegt, wird die Druckluftzufuhr zu mindestens einem der Filtermodule 132 durch Schließen des Sperrventils 280 gesperrt.

Auf diese Weise wird verhindert, dass Hilfsmaterial durch Aufwirbeln mittels der Aufwirbelungseinheit 198, durch Abreinigen der Filterelemente 172 oder durch Fluidisieren des Hilfsmaterialvorrats im Hilfsmaterialaufnahmebehälter 176 in den Strömungsweg des Rohgases und insbesondere durch die Einlassöffnung 212 eines Filtermoduls 132 in die Strömungskammer 128 und von dort in den Applikationsbereich 108 gelangt.

Diese Sperrung der Druckluftzufuhr kann für alle Filtermodule 132 gemeinsam oder für die einzelnen Filtermodule 132 getrennt voneinander erfolgen. Im letzteren Falle erfolgt die Ermittlung des Fehlens einer ausreichenden Rohgasströmung durch die Filterelemente 172 für jedes der Filtermodule 132 getrennt, und es ist entweder für jedes Filtermodul 132 ein eigener Kompressor 272 vorgesehen oder die Druckluftzuführleitungen 270 zu den einzelnen Filtermodulen 132 sind über separat voneinander schaltbare Sperrventile 280 einzeln sperrbar oder freigebbar.

Das Hilfsmaterial wird bei der vorstehend beschriebenen Vorrichtung 126 zum Abtrennen von Fluidlack-Overspray ausschließlich innerhalb der Filtermodule 132 durch Aufwirbeln des Hilfsmaterials in dem jeweiligen Hilfsmaterialaufnahmebehälter 176 dem Rohgasstrom zugegeben.

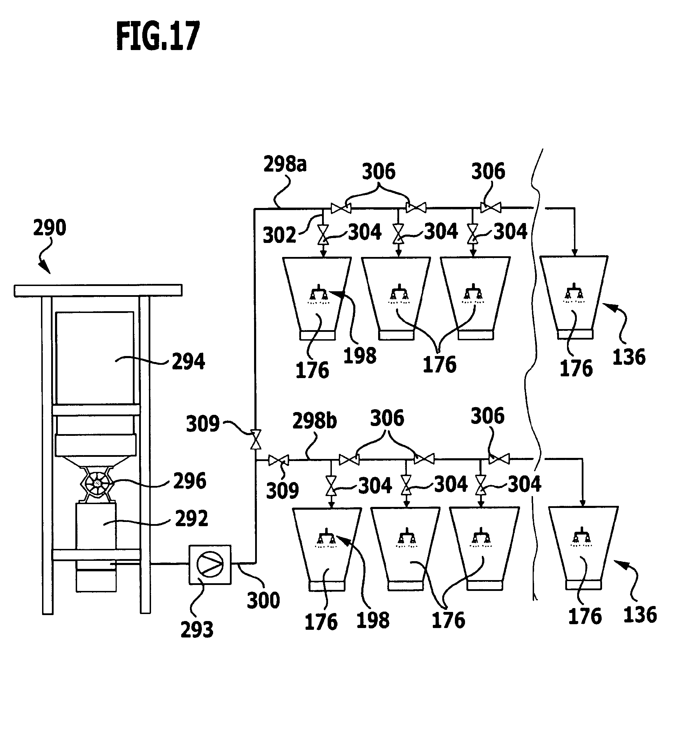

Um frisches Hilfsmaterial den in ihrer Arbeitsposition innerhalb der Filtermodule 132 fest montierten Hilfsmaterialaufnahmebehältern 176 zuführen zu können, umfasst die Vorrichtung 126 zum Abtrennen von Fluidlack-Overspray eine in Fig. 17 schematisch dargestellte Hilfsmaterial-Zuführvorrichtung 290, welche einen Vorlagebehälter 292 umfasst, der als Blowpot oder als einfacher Fluidisierungsbehälter ausgebildet sein kann.

Blowpots sind an sich beispielsweise aus der JP 02123025 A oder der JP 06278868 A bekannt und wurden in Beschichtungsanlagen bisher dazu verwendet, Pulverlack zu den in der Nähe der Zerstäuber befindlichen Applikationsbehältern zu fördern. Es handelt sich um relativ kleine verschließbare Behälter mit einem luftdurchlässigen Boden, durch den Luft zum Fluidisieren des Pulvers und zu dessen Förderung in den Behälter geleitet wird.

Während ein Blowpot durch den Druck der Fluidisierungsluft entleert werden kann, wird andernfalls dem Fluidisierungsbehälter zur Materialförderung eine Pulverdosierpumpe 293 nachgeschaltet (siehe Fig. 1), wie beispielsweise die in der WO 03/024612 A1 beschriebene sogenannte DDF-Pumpe oder eine andere nach dem Dichtstromprinzip mit Saug-/Druckwechsel fördernde Dosierpumpe, wie sie beispielsweise aus der EP 1 427 536 B1, der WO 2004/087331 A1 oder aus Fig. 3 der DE 101 30 173 A1 bekannt sind.

Zum Befüllen des Vorlagebehälters 292 ist oberhalb desselben ein größerer Vorratsbehälter (Gebinde oder "Big Bag") 294 für das frische Hilfsmaterial angeordnet, aus dem im einfachsten Fall das Material durch eine mit einer Klappe verschließbare Öffnung in den Vorlagebehälter (Silo) 292 rieseln kann. Um den Vorlagebehälter 292 auch während der Materialförderung kontinuierlich nachfüllen zu können und Zeitverluste im Betrieb zu vermeiden, ist aber vorzugsweise zwischen dem Vorratsbehälter 294 und dem Vorlagebehälter 292 eine mechanische Fördereinrichtung 296, beispielsweise eine Zellenradschleuse oder eine Förderschnecke, angeordnet. Bei Einsatz einer solchen Fördereinrichtung lässt sich vorteilhafterweise auch eine gewünschte Füllmenge einstellen, im Fall einer Zellenradschleuse über die vorab bestimmte Füllmenge pro Zelle.

Der Vorlagebehälter 292 ist über eine in zwei Zweige 298a, 298b verzweigende Hauptleitung 300, von der Stichleitungen 302 zu jeweils einem der Hilfsmaterialaufnahmebehälter 176 führen, mit jedem der Hilfsmaterialaufnahmebehälter 176 verbunden. Dabei führt jeder der Zweige 298a, 298b der Hauptleitung 300 jeweils zu den Hilfsmaterialaufnahmebehältern 176 einer Modulreihe 136.

Die Hauptleitung 300 besteht vorzugsweise aus flexiblen Schläuchen.

Hierfür können Schläuche mit einem Innendurchmesser bis etwa 14 mm, insbesondere von ungefähr 6 mm bis ungefähr 12 mm, verwendet werden.

Die Stichleitungen 302 können rohrförmig sein und sind mit jeweils einem mechanischen Quetschventil 304 versehen, wobei in der Strömungsrichtung des Hilfsmaterials hinter der Abzweigung der jeweiligen Stichleitung 302 jeweils ein zweites Quetschventil 306 angeordnet ist.

Weitere Quetschventile 309 sind an der Verzweigung der beiden Zweige 298a, 298b der Hauptleitung 300 angeordnet, um diese beiden Zweige 298a, 298b nach Bedarf öffnen oder schließen zu können.

Im Betrieb der Hilfsmaterial-Zuführvorrichtung 290 sind die Hauptleitung 300 und alle Stichleitungen 302 zunächst leer. Wenn ein bestimmter Hilfsmaterialaufnahmebehälter 176 mit frischem Hilfsmaterial beschickt werden soll, wird die Hauptleitung hinter der Abzweigstelle der zugehörigen Stichleitung 302 durch Schließen des jeweils zugeordneten Quetschventils 306 gesperrt, die betreffende Stichleitung 302 durch Öffnen des zugeordneten Quetschventils 304 geöffnet und anschließend das Hilfsmaterial von dem Vorlagebehälter 292 in den betreffenden Hilfsmaterialaufnahmebehälter 176 gefördert.

Anschließend wird der vorstehend beschriebene Leitungsweg in den betreffenden Hilfsmaterialaufnahmebehälter 176 entleert und gespült. Dies bietet den Vorteil, dass die Beschickungsmenge immer genau bestimmt und dosierbar ist und dass der Leitungsweg nicht blockiert werden kann, da stets eine Spülung in den beschickten Hilfsmaterialaufnahmebehälter 176 erfolgt.

Jede der Stichleitungen 302 mündet in eine der Seitenwände 178 des jeweils zugeordneten Hilfsmaterialaufnahmebehälters 176, vorzugsweise in einem Bereich nahe des oberen Randes des Hilfsmaterialaufnahmebehälters 176, damit eine möglichst große Hilfsmaterialmenge durch die Stichleitung 302 zugeführt werden kann.

Die Stichleitung 302, welche zu dem jeweils letzten Hilfsmaterialaufnahmebehälter 176 einer Modulreihe 136 führt, bedarf keiner Quetschventilanordnung, da zur Beschickung dieses letzten Hilfsmaterialaufnahmebehälters 176 lediglich alle in der Hauptleitung 300 stromaufwärts von diesem Hilfsmaterialaufnahmebehälter 176 angeordneten Quetschventile 306 und 309 geöffnet sein müssen.

Statt der vorstehend beschriebenen Quetschventilanordnungen können an den Verzweigungen des Hilfsmaterial-Leitungssystems auch aus dem Stand der Technik an sich bekannte mechanische Quetschweichen oder andere Formen von Pulverweichen vorgesehen sein.

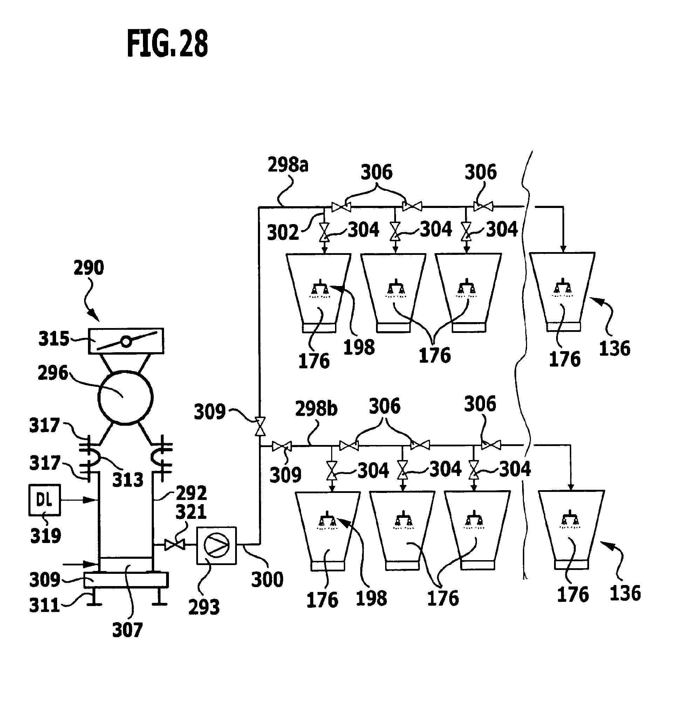

Bei einer in Fig. 28 dargestellten alternativen Ausführungsform einer Hilfsmaterial-Zuführvorrichtung 290 wird die Füllmenge im Vorlagebehälter 292 nicht über die Fördermenge der Zellenradschleuse 296 bestimmt, sondern über eine Gewichtsbestimmung des im Vorlagebehälter 292 vorhandenen Hilfsmaterials ermittelt.

Hierzu ruht ein Boden 307 des Vorlagebehälters 292, der als Fluidboden ausgebildet sein kann, auf einer Waage 309, die sich mit Füßen 311 an einem Untergrund abstützt.

Der Vorlagebehälter 292 ist über einen ringförmigen, flexiblen Kompensator 313 mit der Zellenradschleuse 296 verbunden, welche über eine Klappe 315 aus einem (in Fig. 28 nicht dargestellten) Gebinde oder "Big Bag" mit frischem Hilfsmaterial befüllbar ist.

Der Kompensator 313 ist über geeignete Befestigungsmittel 317 einerseits mit einem Befestigungsflansch der Zellenradschleuse 296 und andererseits mit einem Befestigungsflansch des Vorlagebehälters 292 verbunden.

Durch den Kompensator 313 ist der Vorlagebehälter 292 mechanisch von der Zellenradschleuse 296 entkoppelt, so dass mittels der Waage 309 präzise das Gewicht des Vorlagebehälters 292 und des darin enthaltenen Hilfsmaterials oder - nach geeigneter Kalibrierung - nur das Gewicht des im Vorlagebehälter 292 vorhandenen frischen Hilfsmaterials gemessen wird.

Der Kompensator 313 kann beispielsweise aus einem flexiblen Kunststoffmaterial gebildet sein.

Anders als bei der in Fig. 17 dargestellten Ausführungsform einer Hilfsmaterial-Zuführvorrichtung 290 wird bei der in Fig. 28 dargestellten Ausführungsform das frische Hilfsmaterial nicht mittels einer Pulverdosierpumpe 293 aus dem Vorlagebehälter 292 in die Hauptleitung 300 gefördert, sondern durch Beaufschlagen des Innenraums des Vorlagebehälters 292 mit Druckluft aus einer Druckluftquelle 319, wenn ein in der Hauptleitung 300 angeordnetes Sperrventil 321 geöffnet ist.

Es ist aber grundsätzlich auch möglich, einen mit einer Waage 309 versehenen Vorlagebehälter 292 mit einer Pulverdosierpumpe 293 zu kombinieren, und eine Förderung des frischen Hilfsmaterials mittels in den Vorlagebehälter 292 eingeleiteter Druckluft kann auch mit einer Bestimmung der Füllmenge im Vorlagebehälter 292 über die Fördermenge der Zellenradschleuse 296 kombiniert werden.

Im Übrigen stimmt die in Fig. 28 dargestellte Ausführungsform einer Hilfsmaterial-Zuführvorrichtung 290 hinsichtlich Aufbau und Funktion mit der in Fig. 17 dargestellten Ausführungsform einer solchen Hilfsmaterial-Zuführvorrichtung 290 überein, auf deren vorstehende Beschreibung insoweit Bezug genommen wird.

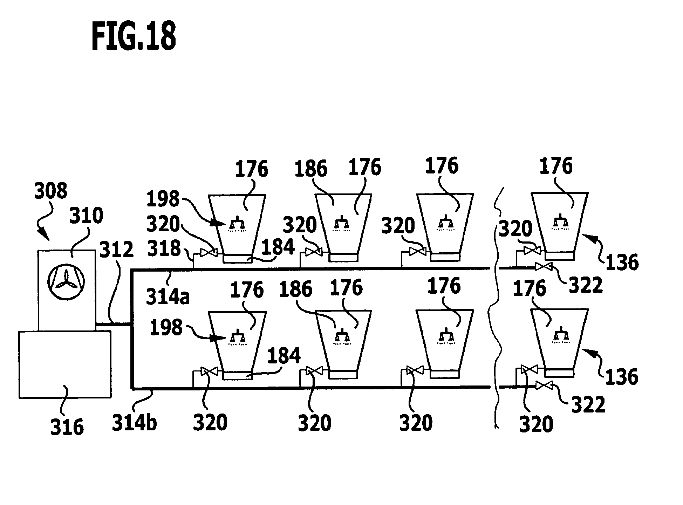

Um vor der Zufuhr von frischem Hilfsmaterial zu einem Hilfsmaterialaufnahmebehälter 176 das darin angesammelte, mit Overspray vermischte Hilfsmaterial entnehmen und einer Entsorgung oder Weiterverwertung zuführen zu können, umfasst die Vorrichtung 126 zum Abtrennen von Fluidlack-Overspray ferner eine in Fig. 18 schematisch dargestellte Hilfsmaterial-Abführvorrichtung 308.

Die Hilfsmaterial-Abführvorrichtung 308 umfasst ihrerseits ein Sauggebläse 310, beispielsweise ein Staubsaugergebläse, welches gebrauchtes Hilfsmaterial aus einer Hauptleitung 312, die sich in zwei Zweige 314a, 314b verzweigt, in einen unter dem Sauggebläse 310 angeordneten Sammelbehälter 316 fördert.

Jeweils einer der Zweige 314a, 314b der Hauptleitung 312 führt zu den Hilfsmaterialaufnahmebehältern 176 einer Modulreihe 136 und ist über jeweils eine Stichleitung 318, welche mittels eines Quetschventils 320 verschließbar ist, an jeden der Hilfsmaterialaufnahmebehälter 176 der betreffenden Modulreihe 136 angeschlossen.

Am Ende jedes Zweiges 314a, 314b der Hauptleitung 312 ist jeweils ein Kugelhahn 322 angeordnet, durch welchen bei Bedarf Förderluft in die Hauptleitung 312 zuführbar ist, um das Absaugen des Hilfsmaterials aus der Hauptleitung 312 zum Sauggebläse 310 zu erleichtern.

Die Stichleitungen 318 münden jeweils knapp über dem Fluidboden 184 in den Innenraum 186 des jeweiligen Hilfsmaterialaufnahmebehälters 176, vorzugsweise in einem Eckbereich des Hilfsmaterialaufnahmebehälters 176, in welchem zwei Seitenwände 178 aneinandergrenzen.

Besonders günstig für eine effiziente und möglichst vollständige Absaugung des gebrauchten Hilfsmaterials aus einem Hilfsmaterialaufnahmebehälter 176 ist es, wenn sich die Stichleitung 318 in zwei Absaugleitungen verzweigt, von denen jede an einem anderen Eckbereich in den Innenraum 186 des Hilfsmaterialaufnahmebehälters 176 mündet.

Wenn ein bestimmter Hilfsmaterialaufnahmebehälter 176 von gebrauchtem, mit Overspray vermischtem Hilfsmaterial entleert werden soll, so wird hierfür das Quetschventil 320 der jeweils zugeordneten Stichleitung 318 geöffnet und mittels des Sauggebläses 310 das im Hilfsmaterialaufnahmebehälter 176 vorhandene Material durch die Stichleitung 318 und die Hauptleitung 312 angesaugt und in den Sammelbehälter 316 gefördert.

Der Absaugvorgang wird durch Schließen des jeweils zugeordneten Quetschventils 320 beendet.

Während des Absaugvorgangs wird der Fluidboden 184 des betreffenden Hilfsmaterialaufnahmebehälters 176 dauerhaft in Betrieb genommen, d.h. während des ganzen Absaugvorgangs mit Druckluft durchströmt, um das abzusaugende Material zu fluidisieren und gut fließfähig zu machen.

Ferner kann das Absaugen des gebrauchten Materials aus dem Hilfsmaterialaufnahmebehälter 176 dadurch unterstützt werden, dass während des Absaugvorgangs die Aufwirbelungseinrichtung 198 des betreffenden Hilfsmaterialaufnahmebehälters 176 kontinuierlich oder intervallweise (für beispielsweise 6 x 5 Sekunden pro Minute) in Betrieb genommen wird, weil durch die Beaufschlagung des abzusaugenden Materials mit Druckluft von oben durch die Austrittsdüsen 200 der Aufwirbelungseinrichtung 198 das Material aufgelockert und zu den Mündungsöffnungen der Stichleitung 318 hin bewegt wird.

Falls die Absaugung des gebrauchten Hilfsmaterials aus einem der Hilfsmaterialaufnahmebehälter 176 nicht einwandfrei funktioniert, was daran zu erkennen ist, dass der zugeordnete Füllstandssensor 204 einen nicht mehr absinkenden Füllstand meldet, muss der Betrieb der Vorrichtung 126 zum Abtrennen von Fluidlack-Overspray nicht unterbrochen werden. Vielmehr kann stattdessen Hilfsmaterial aus einem anderen Hilfsmaterialaufnahmebehälter 176 abgesaugt werden, welcher an demselben Zweig 314a oder 314b der Hauptleitung 312 angeschlossen ist. Hierdurch kann in vielen Fällen die Blockade des Materialtransports aus dem blockierten Hilfsmaterialaufnahmebehälter 176 behoben werden, so dass anschließend das Material aus dem zuvor blockierten Hilfsmaterialaufnahmebehälter 176 abgesaugt werden kann.

Das aus den Hilfsmaterialaufnahmebehälter 176 abgesaugte Material, welches Hilfsmaterial zusammen mit Overspray-Partikeln enthält, kann entweder entsorgt oder - gegebenenfalls nach einer Aufbereitung - zumindest teilweise in der Beschichtungsanlage wiederverwendet werden.

Ferner kann vorgesehen sein, die Stoffe des Hilfsmaterials so zu wählen, dass sie nach Gebrauch in der Beschichtungsanlage für andere Zwecke als für die Beschichtung von Werkstücken verwertet werden können. Beispielsweise kann das gebrauchte Hilfsmaterial als Dämmmaterial verwendet oder, beispielsweise in der Ziegel- oder Zementindustrie oder dergleichen, thermisch verwertet werden, wobei der an das Hilfsmaterial gebundene Fluidlack-Overspray ebenfalls als Energieträger bei einem für die Produktion erforderlichen Verbrennungsvorgang genutzt werden kann.

Nach dem Absaugen des gebrauchten Hilfsmaterials aus einem Hilfsmaterialaufnahmebehälter 176 wird derselbe mittels der vorstehend bereits beschriebenen Hilfsmaterial-Zuführvorrichtung 290 mit frischem Hilfsmaterial befüllt, und zwar beispielsweise bis zu einem Erstbefüllungsfüllstand von ungefähr 50 % des gesamten Fassungsvermögens des Hilfsmaterialaufnahmebehälters 176.

Durch die Anreicherung von Fluidlack-Overspray, welcher eine geringere Dichte aufweist als das Hilfsmaterial, in dem Gemisch aus Hilfsmaterial und Overspray, welches in dem Hilfsmaterialaufnahmebehälter 176 vorhanden ist, nimmt die Dichte dieses Gemisches während des Betriebs eines Filtermoduls 132 immer weiter ab, so dass die Sperrschicht, welche sich auf den Filterelementen 172 des Filtermoduls 132 aufbaut, ein immer größeres Volumen aufweist.

Der Füllstand des Materials im Hilfsmaterialaufnahmebehälter 176 unmittelbar vor einem Abreinigungsvorgang der Filterelemente 172 nimmt daher immer weiter ab.

Bei einem vorgegebenen Restfüllstand, welcher beispielsweise ungefähr 10 % des Fassungsvermögens des Hilfsmaterialaufnahmebehälters 176 entspricht, wird das mit Overspray vermischte Hilfsmaterial aus dem Hilfsmaterialaufnahmebehälter 176 abgesaugt, wie vorstehend beschrieben. Durch das Absaugen vor einem Abreinigungsvorgang der Filterelemente 172 wird erreicht, dass hauptsächlich das unbrauchbar gewordene Material, das sich im Hilfsmaterialaufnahmebehälter 176 angesammelt hat und nicht die Sperrschicht auf den Filterelementen 172 bildet, aus dem Hilfsmaterialaufnahmebehälter 176 entnommen wird.

Alternativ zu dieser Vorgehensweise kann auch vorgesehen sein, dass der Füllstand des Materials im Hilfsmaterialaufnahmebehälter 176 jeweils nach einem Abreinigungsvorgang der Filterelemente 172 des Filtermoduls 132 gemessen wird und ein Absaugvorgang eingeleitet wird, wenn ein vorgegebener Höchstfüllstand, beispielsweise 90 % des maximalen Fassungsvermögens des Hilfsmaterialaufnahmebehälters 176, erreicht ist.

In jedem Fall wird der Füllstand des Materials im Hilfsmaterialaufnahmebehälter 176, welcher einen Absaugvorgang auslöst, mittels des Füllstandssensors 204, der im jeweiligen Hilfsmaterialaufnahmebehälter 176 angeordnet ist, bestimmt.

Alternativ oder ergänzend zu einer Bestimmung des Zeitpunkts für einen Absaugvorgang mittels des Füllstandssensor 204, der im jeweiligen Hilfsmaterialaufnahmebehälter 176 angeordnet ist, kann bei Verwendung der in Fig. 26 dargestellten alternativen Ausführungsform eines Hilfsmaterialaufnahmebehälters 176, welcher mit einer Behälterwaage 223 versehen ist, der geeignete Zeitpunkt für die Auslösung eines Absaugvorgangs wie folgt bestimmt werden: Material aus dem Hilfsmaterialaufnahmebehälter 176 wird aufgewirbelt; durch einen Vergleich des Gewichts des in dem Hilfsmaterialaufnahmebehälter 176 vor der Aufwirbelphase und nach der Aufwirbelphase enthaltenen Materials wird eine Wirksamkeit des im Hilfsmaterialaufnahmebehälter 176 enthaltenen Materials ermittelt; und
Material wird aus dem Hilfsmaterialaufnahmebehälter 176 entnommen, wenn die ermittelte Wirksamkeit einen vorgegebenen Mindestwert unterschreitet.

Hierfür wird beispielsweise mittels der Aufwirbelungseinrichtung 198 des betreffenden Hilfsmaterialaufnahmebehälters 176 während eines Aufwirbelzyklus das im Hilfsmaterialaufnahmebehälter 176 befindliche Material in mehreren aufeinanderfolgenden Aufwirbelphasen, die durch Aufwirbelpausen voneinander beabstandet sind, aufgewirbelt, wobei das aufgewirbelte Material zu den Filterelementen 172 des betreffenden Filtermoduls 132 getragen wird und sich zumindest teilweise dort absetzt.

Während eines Aufwirbelzyklus können beispielsweise vier Aufwirbelphasen von beispielsweise jeweils 5 Sekunden Dauer durchgeführt werden, und zwischen den Aufwirbelphasen kann jeweils eine Aufwirbelpause von beispielsweise 10 Sekunden eingehalten werden.

Die Nettoaufwirbelzeit eines solchen Aufwirbelzyklus beträgt somit beispielsweise 4 x 5 Sekunden = 20 Sekunden.

Zwischen aufeinanderfolgenden Aufwirbelzyklen wird eine längere Aufwirbelpause von beispielsweise ungefähr 60 Sekunden eingehalten.

Das von der Behälterwaage 223 gemessene Gewicht des Materials im Hilfsmaterialaufnahmebehälter 176 wird vor dem Aufwirbelzyklus und nach dem Aufwirbelzyklus gespeichert, und aus diesen Speicherwerten wird durch Differenzbildung ermittelt, wieviel Material während der Aufwirbelphasen des Aufwirbelzyklus aus dem Hilfsmaterialaufnahmebehälter ausgetragen worden ist.

Die Wirksamkeit wird dann ermittelt, indem die Masse des aus dem Hilfsmaterialaufnahmebehälter 176 während des Aufwirbelzyklus ausgetragenen Materials durch die Nettoaufwirbelzeit der Aufwirbelphasen des Aufwirbelzyklus geteilt wird.

Bei einem angenommenen Masseverlust des im Hilfsmaterialaufnahmebehälter 176 enthaltenden Materials von beispielsweise 4 kg und einer Nettoaufwirbelzeit von 20 Sekunden beträgt die Wirksamkeit somit beispielsweise 12 kg/min.

Je größer die ermittelte Wirksamkeit ist, umso mehr Material aus dem Hilfsmaterialaufnahmebehälter wird bis zu den Filterelementen 172 getragen und schlägt sich dort als Schutzschicht nieder. Je höher die Wirksamkeit, desto besser ist also die Qualität des im Hilfsmaterialaufnahmebehälter enthaltenen Materials und insbesondere dessen Fähigkeit, an den Filterelementen 172 haften und Fluidlack-Overspray binden zu können.

Es wird daher Material aus dem Hilfsmaterialaufnahmebehälter entnommen, wenn die ermittelte Wirksamkeit einen - beispielsweise empirisch ermittelten - vorgegebenen Mindestwert unterschreitet.

Das durch Absaugen entnommene Material wird durch frisches Hilfsmaterial ersetzt, das mittels der Hilfsmaterial-Zuführvorrichtung 290 dem jeweiligen Hilfsmaterialaufnahmebehälter 176 zugeführt wird.

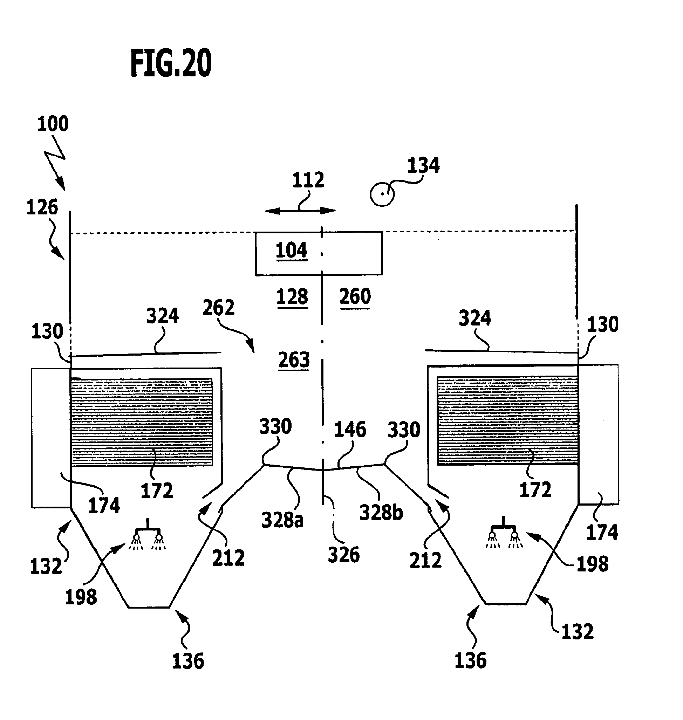

Eine in Fig. 20 in einem schematischen Querschnitt dargestellte zweite Ausführungsform einer Anlage 100 zum Lackieren von Fahrzeugkarosserien 102 unterscheidet sich von der vorstehend beschriebenen ersten Ausführungsform dadurch, dass oberhalb der Filtermodule 132 separate Querluftschleierleitbleche 324 angeordnet sind, welche dazu dienen, die von den Luftschleiererzeugungsvorrichtungen 254 zugeführte Zuluft zu der Engstelle 262 zwischen dem oberen Abschnitt 260 und dem unteren Abschnitt 263 der Strömungskammer 128 hin zu leiten.

Diese Querluftschleierleitbleche 324 sind unter einem Winkel von beispielsweise ungefähr 1° bis ungefähr 3° gegen die Horizontale zu der jeweils benachbarten Seitenwand 130 der Strömungskammer 128 hin geneigt, so dass von oben auf die Querluftschleierleitbleche 324 gelangende Flüssigkeiten nicht zu der Engstelle 262, sondern zu den Seitenwänden 130 hin abfließen.

Auf diese Weise wird gewährleistet, dass beispielsweise aufgrund eines Schlauchplatzers ausströmender Lack aus dem Applikationsbereich 108 oder Löschwasser nicht in den unteren Abschnitt 263 der Strömungskammer 128 und von dort in die Filtermodule 132 gelangen, sondern vielmehr an den Seiten der Strömungskammer 128 abfließen können.

Ferner ist bei dieser Ausführungsform der begehbare Steg 146 zwischen den Modulreihen 136 in zwei im Wesentlichen spiegelsymmetrisch zu einer vertikalen Längsmittelebene 326 der Strömungskammer 128 ausgebildete Hälften 328a, 328b unterteilt, welche jeweils unter einem Winkel von beispielsweise ungefähr 1° bis beispielsweise ungefähr 3° gegenüber der Horizontalen zu der Längsmittelebene 326 hin geneigt sind, so dass von oben auf den begehbaren Steg 146 gelangende Flüssigkeiten, wie beispielsweise Lack oder Löschwasser, nicht über die seitlichen Ränder 330 des begehbaren Stegs 146 hinweg zu den Einlassöffnungen 212 der Filtermodule 132 gelangen, sondern in der Mitte des begehbaren Stegs 146 zurückgehalten werden.

Sowohl der begehbare Steg 146 als auch die Querluftschleierleitbleche 324 können zusätzlich in der Längsrichtung 134 der Strömungskammer 128 gegen die Horizontale geneigt sein, so dass die auf diesen Elementen befindlichen Flüssigkeiten aufgrund der Schwerkraftwirkung zu einer Abflussöffnung abfließen können.

Alternativ hierzu kann der Steg 146 aber auch eine im Wesentlichen horizontal ausgerichtete Oberseite aufweisen.

Im Übrigen stimmt die in Fig. 20 dargestellte zweite Ausführungsform einer Anlage 100 zum Lackieren von Fahrzeugkarosserien 102 hinsichtlich Aufbau und Funktion mit der in den Fig. 1 bis 19 dargestellten ersten Ausführungsform überein, auf deren vorstehende Beschreibung insoweit Bezug genommen wird.

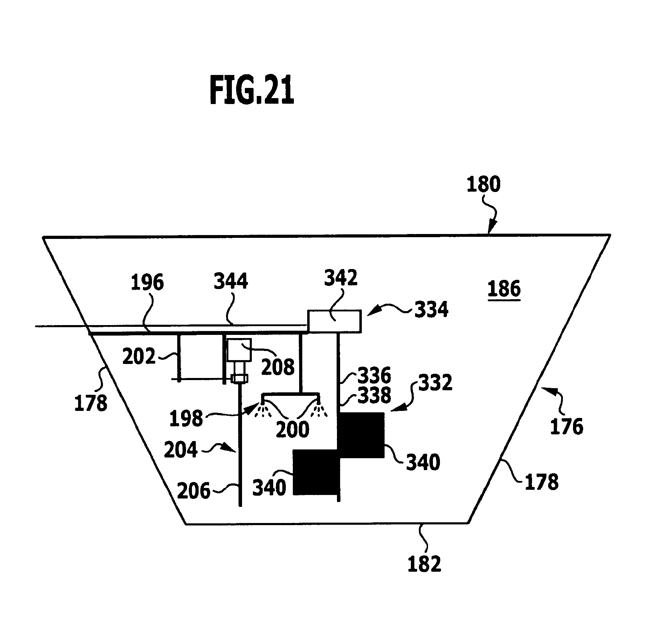

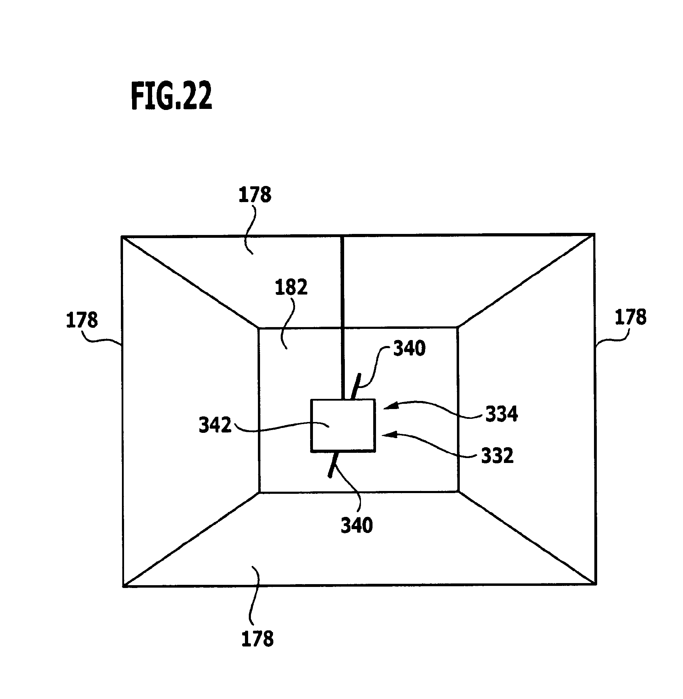

Die Hilfsmaterialaufnahmebehälter 176 der Filtermodule 132 der vorstehend beschriebenen Anlagen 100 zum Lackieren von Fahrzeugkarosserien 102 können alternativ oder ergänzend zu dem in Fig. 13 dargestellten Fluidboden 184 auch andere Einrichtungen 332 zum Durchmischen des im Hilfsmaterialaufnahmebehälter 176 befindlichen Materials aufweisen, beispielsweise ein in den Fig. 21 und 22 schematisch dargestelltes pneumatisch betriebenes Rührwerk 334.

Das pneumatisch betriebene Rührwerk 334 umfasst einen Rührer 336 mit mindestens zwei drehfest an einer im Wesentlichen vertikal ausgerichteten Rührwelle 338 angeordneten Rührwerkpaddeln 340 und eine in den Fig. 21 und 22 rein schematisch dargestellte Rührwerkturbine 342, mittels welcher die Rührwelle 338 zu einer Drehbewegung um ihre vertikale Achse antreibbar ist.

Die Rührwerkpaddel 340 sind in einem Winkelabstand von beispielsweise ungefähr 180° und in der Axialrichtung der Rührwelle 338 gegeneinander versetzt an der Rührwelle 338 angeordnet.

Der Rührwerkturbine 342 ist Druckluft über eine Druckluftzuführleitung 344 zuführbar.

Wird der Rührwerkturbine 342 über die Druckluftzuführleitung 344 Druckluft zugeführt, so versetzt die zugeführte Druckluft die Rührwerkturbine 342 in eine Drehbewegung um deren vertikale Achse, worauf sich die drehfest mit der Rührwerkturbine 342 verbundene Rührwelle 338 ebenfalls in Bewegung setzt.

Dabei wird das im Hilfsmaterialaufnahmebehälter 176 befindliche Material durch die sich drehenden Rührwerkpaddel 340 durchmischt, und die Oberfläche des im Hilfsmaterialaufnahmebehälter 176 befindlichen Materials wird geglättet. Im Hilfsmaterialaufnahmebehälter 176 durch Unterhöhlung gebildete Materialbrücken werden aufgebrochen.

Auf diese Weise wird eine gute Durchmischung des Materials im Hilfsmaterialaufnahmebehälter 176 und eine Vergleichmäßigung des Füllstands des Materials innerhalb des Hilfsmaterialaufnahmebehälters 176 erzielt.

Durch den pneumatischen Antrieb des Rührwerks 334 wird eine Funkenbildung innerhalb des Hilfsmaterialaufnahmebehälters 176 vermieden und ein ausreichender Explosionsschutz gewährleistet.

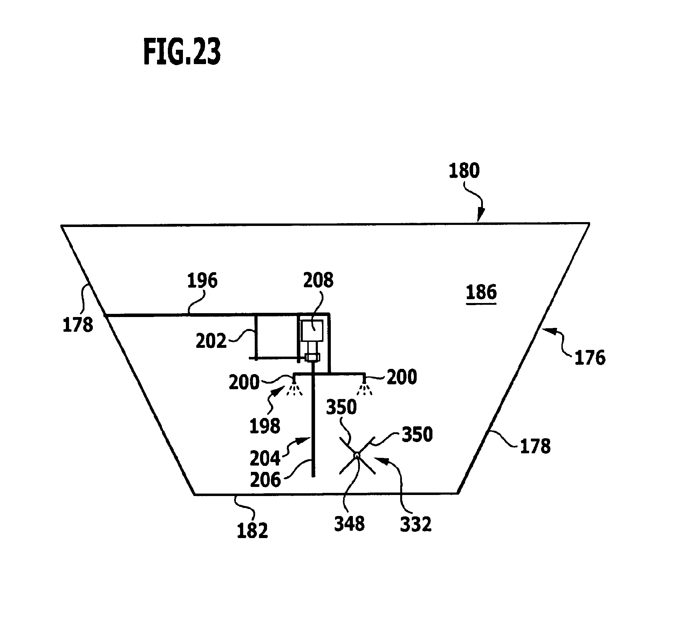

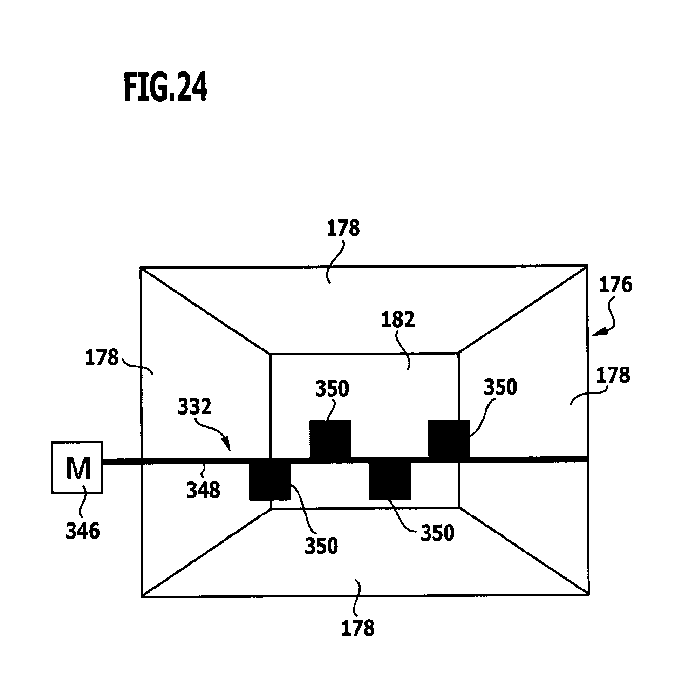

Eine in den Fig. 23 und 24 dargestellte alternative Ausführungsform einer Einrichtung 332 zum Durchmischen des im Hilfsmaterialaufnahmebehälter 176 befindlichen Materials umfasst einen Elektromotor 346, der seitlich neben dem Hilfsmaterialaufnahmebehälter 176 angeordnet ist und dessen Abtriebswelle 348 durch eine Seitenwand 178 des Hilfsmaterialaufnahmebehälters 176 hindurchgeführt und mit mehreren, beispielsweise vier, Paddeln 350 versehen ist, die drehfest und in einem Winkelabstand von beispielsweise jeweils ungefähr 90° sowie in der Axialrichtung der Abtriebswelle 348 gegeneinander versetzt an der Abtriebswelle 348 angeordnet sind.

Durch Drehen der Abtriebswelle 348 mittels des Elektromotors 346 um deren im Wesentlichen horizontal ausgerichtete Achse werden die Paddel 350 in Drehbewegung versetzt, wodurch die Paddel 350 das im Hilfsmaterialaufnahmebehälter 176 befindliche Material durchmischen und dessen Oberfläche glätten sowie im Hilfsmaterialaufnahmebehälter 176 entstandene Materialbrücken aufbrechen.

Der Umbau einer bereits bestehenden Vorrichtung 126 zum Abtrennen von Fluidlack-Overspray aus einem Overspray-Partikel enthaltenden Rohgasstrom kann unter Verwendung der Filtermodule 132 der vorstehend beschriebenen Anlagen 100 in folgender Weise erfolgen:
Zunächst wird ein Teil der bestehenden Vorrichtung abgebaut, so dass der von einem Filtermodul 132 in seiner Arbeitsposition beanspruchte Raum freigegeben wird.

Anschließend wird ein Filtermodul 132 in der auf diese Weise freigegebenen Arbeitsposition angeordnet und mit der Tragekonstruktion für den Applikationsbereich 108, insbesondere mit den Kabinenwänden 114 der Lackierkabine 110, verbunden.

Anschließend werden diese Schritte wiederholt, bis alle Filtermodule 132 in ihrer Arbeitsposition angeordnet und mit der Tragekonstruktion für den Applikationsbereich 108 verbunden sind.

Auf diese Weise kann beispielsweise eine bestehende Vorrichtung zum nassen Abtrennen von Fluidlack-Overspray durch die vorstehend beschriebene, modular aufgebaute Vorrichtung 126 zum trockenen Abtrennen von Fluidlack-Overspray ersetzt werden, ohne dass es hierfür erforderlich ist, den Applikationsbereich 108 der Anlage 100 zum Lackieren von Fahrzeugkarosserien 102 zu demontieren.

Bei den vorstehend beschriebenen Vorrichtungen 126 zum Abtrennen von Fluidlack-Overspray aus einem Overspray-Partikel enthaltenden Rohgasstrom 120 ist jedem Filtermodul 132 jeweils ein separater Hilfsmaterialaufnahmebehälter 176 zugeordnet.

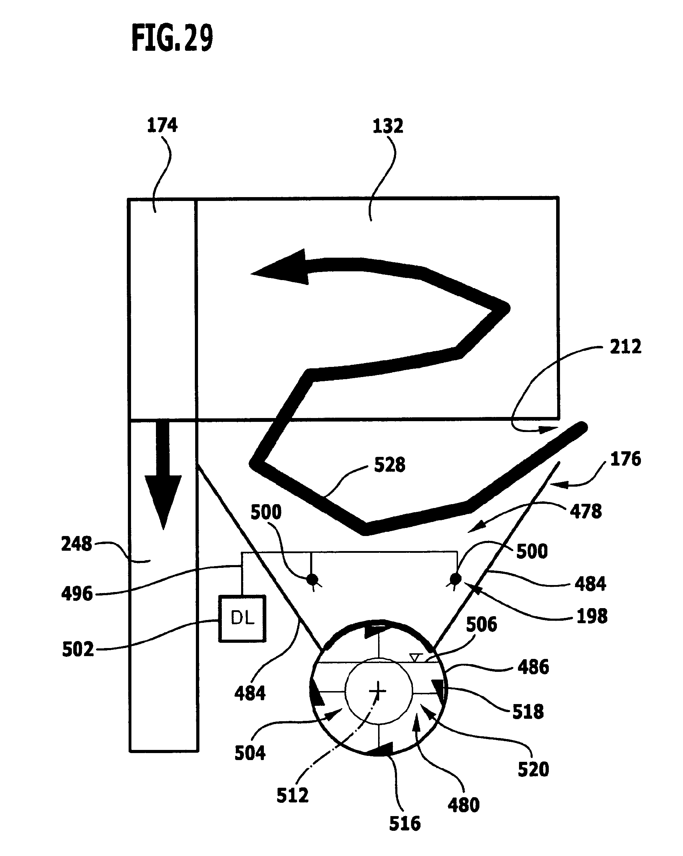

Bei den nachstehend unter Bezugnahme auf die Fig. 29 bis 33 beschriebenen alternativen Ausführungsformen einer solchen Vorrichtung 126 zum Abtrennen von Fluidlack-Overspray sind hingegen mehrere Filtermodule 132 demselben Aufnahmebehälter 176 für Hilfsmaterial zugeordnet, welcher das von den Filterelementen 172 dieser Mehrzahl zugeordneter Filtermodule 132 abgereinigte Material (Hilfsmaterial und Fluidlack-Overspray) aufnimmt.

Im Übrigen stimmen diese in den Fig. 29 bis 33 dargestellten Ausführungsformen einer Vorrichtung 126 zum Abtrennen von Fluidlack-Overspray aus einem Overspray-Partikel enthaltenden Rohgasstrom und die eine solche Vorrichtung 126 enthaltenden Lackieranlagen 100 mit den vorstehend unter Bezugnahme auf die Fig. 1 bis 28 beschriebenen Ausführungsformen hinsichtlich Aufbau und Funktion überein.

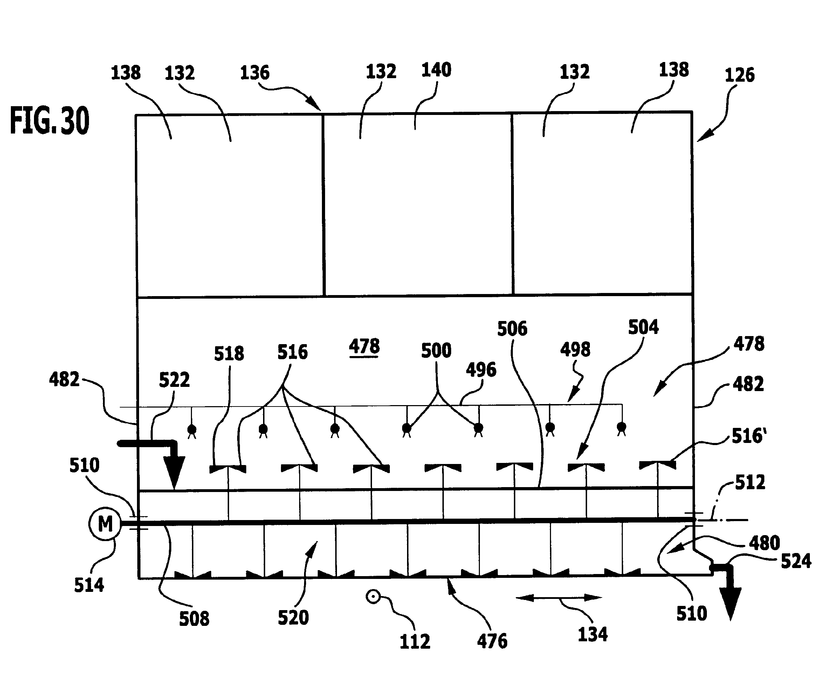

Um das Hilfsmaterial dem Rohgasstrom zugeben zu können, ohne dass die Gefahr besteht, dass das Hilfsmaterial in den Applikationsbereich 108 der Lackieranlage 100 gelangt, und um zusammen mit Fluidlack-Overspray von den Filterelementen 172 abgereinigtes Hilfsmaterial auffangen zu können, ist bei der in den Fig. 29 bis 31 dargestellten Ausführungsform einer Vorrichtung 126 zum Abtrennen von Fluidlack-Overspray aus dem Rohgasstrom jeder Gruppe von mehreren, beispielsweise drei, Filtermodulen 132 jeweils ein gemeinsamer Aufnahmebehälter 176 zugeordnet, welcher sich in der Längsrichtung 134 der Vorrichtung 126 über die gesamte Länge der, beispielsweise drei, zugeordneten Filtermodule 132 hinweg erstreckt (siehe Fig. 30).

Der Aufnahmebehälter 176 ist im Wesentlichen trogförmig ausgebildet und umfasst einen oberen Eintrittsabschnitt 478 sowie einen sich nach unten an den Eintrittsabschnitt 478 anschließenden Mischabschnitt 480.

Der Eintrittsabschnitt 478 ist durch zwei senkrecht zur Längsrichtung 134 verlaufende Stirnwände 482 und zwei einander gegenüberliegende, sich von der einen Stirnwand 482 bis zur anderen Stirnwand 182 erstreckende und gegen die Vertikale unter einem Winkel von mindestens ungefähr 30° geneigte Seitenwände 484 begrenzt.

Der sich nach unten an den Eintrittsabschnitt 478 anschließende Mischabschnitt 480 ist im Wesentlichen zylindrisch ausgebildet und weist eine sich über einen Umfangswinkel von beispielsweise ungefähr 270° erstreckende, zylinderabschnittsförmige Mantelwand 486 auf, deren obere Ränder sich an die unteren Ränder der Seitenwände 484 des Eintrittsabschnitts 478 des Aufnahmebehälters 176 anschließen, so dass sich der Mischabschnitt 480 nach oben hin zu dem Eintrittsabschnitt 478 öffnet.

An einer der Seitenwände 484 des Eintrittsabschnitts 478 des Aufnahmebehälters 176 ist eine Aufwirbelungseinrichtung 198 gehalten, welche dazu dient, Druckluftimpulse in das darunter befindliche, im Aufnahmebehälter 176 aufgenommene Material abzugeben, um dieses Material aufzuwirbeln und so dieses Material, einschließlich des darin enthaltenen Hilfsmaterials, in den durch den Eintrittsabschnitt 478 des Aufnahmebehälters 176 hindurchgeführten Rohgasstrom einzubringen.

Während des Betriebs der Anlage 100 wird die Aufwirbelungseinrichtung 198 intermittierend, beispielsweise viermal pro Minute für jeweils ungefähr 5 Sekunden, in Betrieb genommen.

Die Aufwirbelungseinrichtung 198 umfasst mehrere, beispielsweise mindestens zwei pro Filtermodul 132, Austrittsdüsen 500 für Druckluft, welche als Kegeldüsen ausgebildet sind und jeweils einen sich nach unten zu dem Mischabschnitt 480 des Aufnahmebehälters 176 hin erweiternden Druckluftkegel erzeugen können.

Die Austrittsdüsen 500 sind an einer Druckluftrohrleitung 496 angeordnet, welche durch eine der Seitenwände 484 des Eintrittsabschnitts 478 des Aufnahmebehälters 176 hindurchgeführt ist und zu einer außerhalb des Aufnahmebehälters 176 angeordneten Druckluftquelle 502 führt.

Im Mischabschnitt 480 des Aufnahmebehälters 176 ist eine Mischvorrichtung 504 zum gründlichen mechanischen Durchmischen des von den Filterelementen 172 der verschiedenen Filtermodule 132 abgereinigten Materials, welches den Mischabschnitt 480 bis zu einer Füllhöhe 506 anfüllt, angeordnet (Fig. 29).

Wie am besten aus Fig. 30 zu ersehen ist, umfasst die Mischvorrichtung 504 eine Drehwelle 508, welche sich parallel zur Längsrichtung 134 der Vorrichtung 126 erstreckt und mittels Lagern 510 an den Stirnwänden 582 des Aufnahmebehälters 176 um eine horizontale, parallel zur Längsrichtung 134 verlaufende Drehachse 512 drehbar gelagert ist.

Ein Ende der Drehwelle 508 ist durch eine der Stirnwände 482 des Aufnahmebehälters 176 fluiddicht hindurchgeführt und an einen außerhalb des Aufnahmebehälters 176 angeordneten Drehantrieb 514 (beispielsweise einen elektrischen Antriebsmotor) angekoppelt.

Die Drehwelle 508 der Mischvorrichtung 504 kann sich über die gesamte Länge der Lackierkabine 118 von beispielsweise ungefähr 20 m hinweg erstrecken.

Das Füllvolumen des Materials im Mischabschnitt 480 des Aufnahmebehälters 176 kann beispielsweise mindestens 750 I betragen.

An der Drehwelle 508 sind drehfest mit derselben mehrere Mischwerkzeuge 516 angeordnet, welche beispielsweise als Paddel 518 oder als Pflugscharen ausgebildet sein können.

Die Innenkontur des Mischabschnitts 580 des Aufnahmebehälters 176 ist so an die Außenkontur der Mischwerkzeuge 216 der Mischvorrichtung 504 angepasst, dass die Mischwerkzeuge 516 bei einer vollständigen Umdrehung der Drehwelle 508 der Mischvorrichtung 504 um deren Drehachse 512 einen Mischbereich 520 überstreichen, dessen Außenkontur im Wesentlichen der Innenkontur des Mischabschnitts 480 des Aufnahmebehälters 176 entspricht.

Vorzugsweise überstreicht die Mischvorrichtung 504 bei einer vollständigen Umdrehung um deren Drehachse 512 im Wesentlichen den gesamten Mischabschnitt 480 des Aufnahmebehälters 176.

Durch die mittels des Drehantriebs 514 angetriebene Mischbewegung der Mischvorrichtung 504 werden die Bindungskräfte zwischen den Partikeln, aus denen das im Aufnahmebehälter 176 befindliche Material besteht, zerstört und eine Vermischung des Materials in der Längsrichtung der Drehwelle 508 bewirkt. Aufgrund der Mischbewegung gibt es innerhalb des Aufnahmebehälters 176 keine Konzentrationsunterschiede, und insbesondere ist das Verhältnis von frischem Hilfsmaterial einerseits und von den Filterelementen 172 abgereinigtem Hilfsmaterial und Fluidlack-Overspray andererseits überall im Aufnahmebehälter 176 im Wesentlichen gleich groß.

Um dem Aufnahmebehälter 176 frisches Hilfsmaterial zuführen zu können, ist an einer Stirnwand 482 des Aufnahmebehälters 176 ein Einlass 522 für frisches Hilfsmaterial vorgesehen, welcher mit einer (nicht dargestellten) Quelle für frisches Hilfsmaterial verbunden ist.

An der dem Einlass 522 für frisches Hilfsmaterial gegenüberliegenden Stirnwand 182 ist ein Materialauslass 524 vorgesehen, welcher im unteren Bereich des Mischabschnitts 480, nahe der unteren Kuppe des zylindrischen Mischabschnitts 480, angeordnet ist.

Durch diesen Materialauslass 524 kann mit Fluidlack-Overspray angereichertes Hilfsmaterial aus dem Aufnahmebehälter 176 abgeführt werden, um trotz der Zufuhr von frischem Hilfsmaterial durch den Einlass 522 eine im Wesentlichen konstante Füllhöhe 506 im Aufnahmebehälter 176 aufrechtzuerhalten.

In der Nähe des Materialauslasses 524 ist an der Drehwelle 508, in radialer Richtung oder auch stirnseitig, in axialer Richtung, von der Drehwelle 508 abstehend, ein Mischwerkzeug 516' angeordnet, welches den Materialaustrag durch den Materialauslass 524 unterstützt.

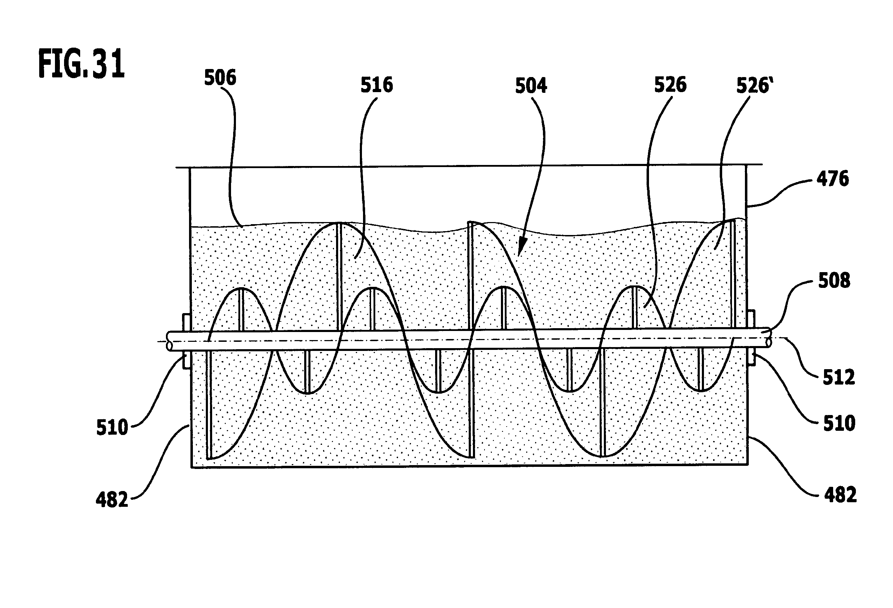

Statt als einzelne, in radialer Richtung von der Drehwelle 508 abstehende Paddel 518 können die Mischwerkzeuge 516 der Mischvorrichtung 504 auch als eine koaxial zur Drehachse 512 der Mischvorrichtung 504 ausgebildete Wendel 526 ausgebildet sein (siehe Fig. 31).

Insbesondere kann die Mischvorrichtung 504 mit zwei Wendeln 526, 526' mit einander entgegengesetztem Drehsinn versehen sein.

Diese Wendeln können dabei dieselbe Ganghöhe, aber unterschiedliche Radien aufweisen.

Durch den gegenläufigen Drehsinn der beiden Wendeln 526, 526' wird eine besonders gute Durchmischung des im Mischabschnitt 180 vorhandenen Materials erreicht.

Durch die Betätigung der Mischvorrichtung 504 wird ferner die Oberfläche des im Aufnahmebehälter 176 befindlichen Materials geglättet, und im Aufnahmebehälter 176 gegebenenfalls durch Unterhöhlung entstandene Materialbrücken werden aufgebrochen.

Jedes Filtermodul 132 ist mit einer schlitzförmigen Einlassöffnung 212 versehen, die als ein Einlasskanal 214 ausgebildet ist, der einen sich in der Strömungsrichtung des Teil-Rohgasstroms 528 bis zu einer Engstelle 240 verengenden durchströmbaren Querschnitt aufweist. Hierdurch wird die aus der Strömungskammer 128 in die Filtermodule 132 eintretende Rohgasströmung in jeweils einem Filtermodul 132 zugeordnete Teil-Rohgasströme 528 unterteilt, diese Teil-Rohgasströme 528 werden gezielt in den Eintrittsabschnitt 178 jeweils eines Aufnahmebehälters 176 hineingelenkt und ein direkter Zutritt der Rohgasströmung aus der Strömungskammer 182 zu den Filterelementen 172 hin wird verhindert.

Die Filterelemente 172 der Filtermodule 132 werden in bestimmten Zeitintervallen, wenn ihre Beladung mit Fluidlack-Overspray und Hilfsmaterial ein vorgegebenes Maß erreicht hat, durch Druckluftimpulse abgereinigt.

Diese Abreinigung kann (in Abhängigkeit vom Druckverlustanstieg an den Filterelementen 172) beispielsweise einmal bis sechsmal pro 8-Stunden-Arbeitsschicht, d.h. ungefähr alle 1-8 Stunden, erfolgen.

Das Hilfsmaterial wird bei der vorstehend beschriebenen Vorrichtung 126 zum Abtrennen von Fluidlack-Overspray ausschließlich durch Aufwirbeln des Hilfsmaterials in dem jeweils zugeordneten Aufnahmebehälter 176 den Teil-Rohgasströmen 528 zugegeben.

Um das im Aufnahmebehälter 176 angesammelte, mit Overspray vermischte Hilfsmaterial entnehmen und einer Entsorgung oder Weiterverwertung zuführen zu können, umfasst die Vorrichtung 126 zum Abtrennen von Fluidlack-Overspray eine (nicht dargestellte) Hilfsmaterial-Abführvorrichtung, welche an die Materialauslässe 524 der Aufnahmebehälter 176 angeschlossen ist und beispielsweise ein Sauggebläse zum Absaugen des Materials aus den Aufnahmebehältern 176 umfasst.

Das aus den Aufnahmebehältern 176 entnommene Material, welches Hilfsmaterial mit Overspray-Partikeln enthält, kann entweder entsorgt oder - gegebenenfalls nach einer Aufbereitung - zumindest teilweise in der Beschichtungsanlage wiederverwendet werden.

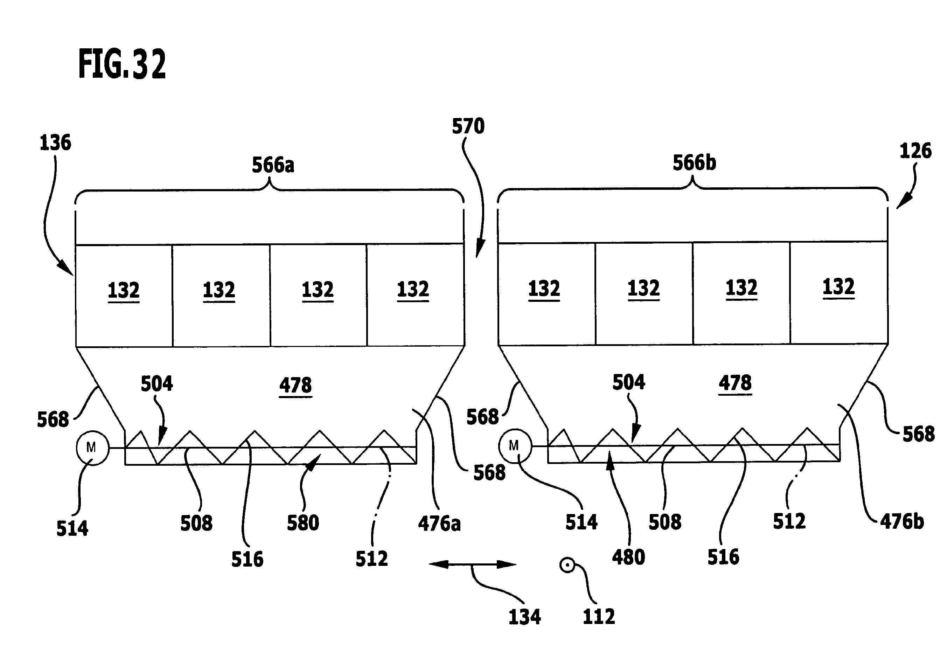

Eine in Fig. 32 in einer schematischen Seitenansicht einer Modulreihe 136 dargestellte zweite Ausführungsform einer Vorrichtung 126 zum Abtrennen von Fluidlack-Overspray unterscheidet sich von der vorstehend beschriebenen Vorrichtung 126 dadurch, dass nicht allen in der Längsrichtung 134 der Vorrichtung 126 hintereinander angeordneten Filtermodulen 132 einer Modulreihe 136 ein einziger Aufnahmebehälter 176, der sich über die gesamte Länge der Modulreihe 136 erstreckt, zugeordnet ist. Stattdessen ist jede Modulreihe 136 in mehrere, beispielsweise zwei, Modulgruppen 566a, 566b mit jeweils mehreren, beispielsweise jeweils vier, Filtermodulen 132 unterteilt. Jeder Modulgruppe 566a, 566b ist jeweils ein Aufnahmebehälter 176a bzw. 176b zugeordnet, welcher das von den Filterelementen 172 der Filtermodule 132 der jeweiligen Modulgruppe 566a, 566b abgereinigte Material (Hilfsmaterial und Fluidlack-Overspray) aufnimmt.

Bei dieser Ausführungsform der Vorrichtung 126 zum Abtrennen von Fluidlack-Overspray sind also jeweils mindestens zwei Aufnahmebehälter 176a, 176b in der Längsrichtung 134 aufeinanderfolgend angeordnet, wobei aber immer noch jeder Aufnahmebehälter 176a, 176b das aus mehreren Filtermodulen 132 abgereinigte Material aufnimmt.

Ferner weist jeder der Aufnahmebehälter 176a, 176b jeweils eine Mischvorrichtung 504 auf, mittels welcher das aus verschiedenen Filtermodulen 132 stammende und von dem jeweiligen Aufnahmebehälter 176a, 176b aufgefangene Material durchmischbar ist.

Bei dieser Ausführungsform sind die Stirnwände 482 der Aufnahmebehälter 176a, 176b nicht durchgehend vertikal ausgebildet, sondern weisen einen den Eintrittsabschnitt 478 stirnseitig begrenzenden oberen geneigten Stirnwandabschnitt 568 auf, welcher so gegenüber der Vertikalen geneigt ist, dass der geneigte Stirnwandabschnitt 568 in der Längsrichtung 134 über den Mischabschnitt 480 des betreffenden Aufnahmebehälters 176a, 176b übersteht.

Hierdurch wird unter den geneigten Stirnwandabschnitten 568 von in der Längsrichtung 134 aufeinanderfolgenden Aufnahmebehältern 176a, 176b und zwischen den Stirnwänden der Mischabschnitte 180 dieser Aufnahmebehälter 176a, 176b genügend Platz für die Unterbringung jeweils eines Drehantriebs 514 einer Mischvorrichtung 504 geschaffen.

Ferner ist darauf zu achten, dass zwischen den Abluftrohren 248 und den Aufnahmebehältern 176a, 176b genügend Raum zum Ausbauen der Drehwelle 508 jeweils einer Mischvorrichtung 504 zur Verfügung steht.

Die in der Längsrichtung 134 der Vorrichtung 126 hintereinander angeordneten Modulgruppen 566a, 566b können verschiedenen Lackierkabinen oder verschiedenen Lackierabschnitten innerhalb derselben Lackierkabine zugeordnet sein, beispielsweise einem Lackierabschnitt für die Innenlackierung der Fahrzeugkarosserien 102 einerseits und einem Lackierabschnitt für die Außenlackierung der Fahrzeugkarosserien 102 andererseits.

Alternativ hierzu kann auch vorgesehen sein, dass in den verschiedenen Lackierabschnitten, welchen die Modulgruppen 566a, 566b zugeordnet sind, unterschiedliche Lackarten auf die Fahrzeugkarosserien 102 appliziert werden, beispielsweise ein Grundlack einerseits und ein Klarlack andererseits.

In dem über dem zwischen den Modulgruppen 566a, 566b liegenden Bereich der Lackieranlage wird kein Lack auf die Fahrzeugkarosserien 102 appliziert.

Im Übrigen stimmt die in Fig. 32 dargestellte Ausführungsform einer Vorrichtung 126 zum Abtrennen von Fluidlack-Overspray hinsichtlich Aufbau und Funktion mit der in den Fig. 29 bis 31 dargestellten Ausführungsform überein, auf deren vorstehende Beschreibung insoweit Bezug genommen wird.

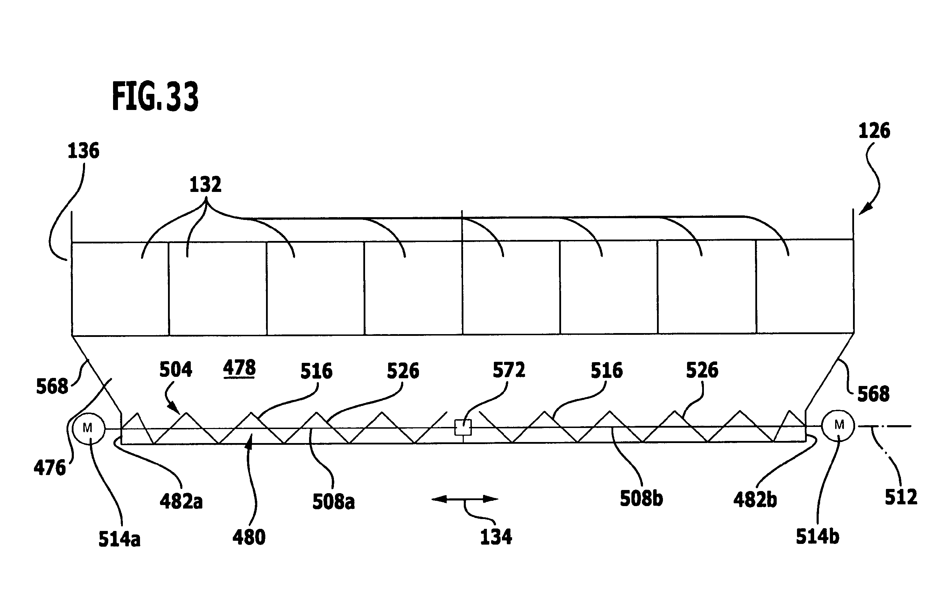

Eine in Fig. 33 in einer schematischen Seitenansicht einer Modulreihe 136 dargestellte Ausführungsform einer Vorrichtung 126 zum Abtrennen von Fluidlack-Overspray unterscheidet sich von der in den Fig. 29 bis 31 dargestellten Ausführungsform dadurch, dass die Anzahl der Filtermodule 132, welche demselben Aufnahmebehälter 176 zugeordnet sind, größer ist (beispielsweise acht Filtermodule 132). Der Aufnahmebehälter 176 weist somit eine sehr große Erstreckung in der Längsrichtung 134 der Vorrichtung 126 (von beispielsweise 16 m oder mehr) auf.

Bei einer so großen Länge des Aufnahmebehälters 176 müsste ein Drehantrieb 514 mit einer sehr hohen Antriebsleistung verwendet werden, um eine sich über die gesamte Länge des Aufnahmebehälters 176 erstreckende, mit Mischwerkzeugen 516 versehene Drehwelle 508 zu einer Drehbewegung anzutreiben.

Bei der in Fig. 33 dargestellten Ausführungsform ist daher vorgesehen, dass die Mischvorrichtung 504 zwei in der Längsrichtung 134 und in der Richtung der gemeinsamen Drehachse 512 aufeinanderfolgende Drehwellen 508a, 508b aufweist, welche von jeweils einem eigenen Drehantrieb 514a, 514b angetrieben werden und jeweils in einem Lager 572 in der Mitte des Aufnahmebehälters 176 sowie an der vorderen Stirnwand 482a bzw. an der hinteren Stirnwand 482b des Aufnahmebehälters 176 drehbar gelagert sind.

Jede der Drehwellen 508a, 508b ist mit einem oder mehreren Mischwerkzeugen 516, beispielsweise mit Wendeln 526, zum Durchmischen des im Aufnahmebehälter 176 aufgenommenen Materials versehen.

Durch die Aufteilung der Mischwerkzeuge 516 auf zwei getrennt voneinander gelagerte und angetriebene Drehwellen 508a, 508b kann die für die Erzeugung der Drehbewegung der Mischwerkzeuge 516 erforderliche Antriebsleistung der Drehantriebe 514a, 514b reduziert werden.

Auch bei dieser Ausführungsform sind die Stirnwände 482a, 482b des Aufnahmebehälters 176 nicht durchgehend vertikal ausgebildet, sondern weisen einen den Eintrittsabschnitt 478 stirnseitig begrenzenden oberen geneigten Stirnwandabschnitt 568 auf, welcher so gegenüber der Vertikalen geneigt ist, dass der geneigte Stirnwandabschnitt 568 in der Längsrichtung 134 über den Mischabschnitt 480 des Aufnahmebehälters 176 übersteht.

Hierdurch wird unter den geneigten Stirnwandabschnitten 568 genügend Platz für die Unterbringung jeweils eines Drehantriebs 514a, 514b der Mischvorrichtung 504 geschaffen.

Im Übrigen stimmt die in Fig. 33 dargestellte Ausführungsform einer Vorrichtung 126 zum Abtrennen von Fluidlack-Overspray hinsichtlich Aufbau und Funktion mit der in den Fig. 29 bis 32 dargestellten Ausführungsform überein, auf deren vorstehende Beschreibung insoweit Bezug genommen wird.

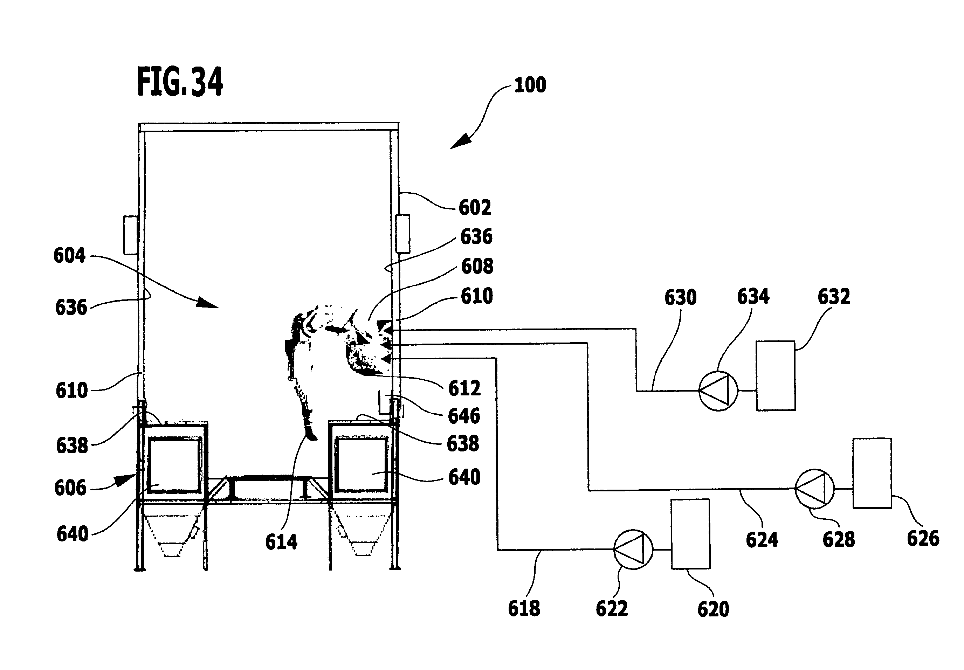

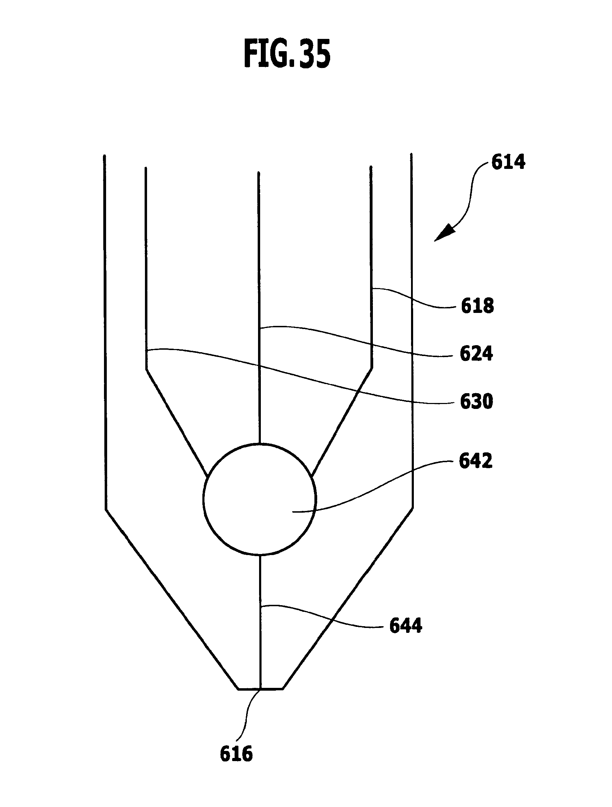

Eine in den Fig. 34 und 35 dargestellte weitere Ausführungsform einer Lackieranlage 100 unterscheidet sich von den vorstehend beschriebenen Ausführungsformen einer solchen Anlage hinsichtlich der Ausgestaltung der Lackiervorrichtungen und insbesondere der Appliziereinheiten dieser Lackiervorrichtungen. Die nachstehend beschriebene besondere Ausgestaltung dieser Lackiervorrichtungen und des Applikationsbereichs der Lackieranlage 100 kann mit jeder der vorstehend beschriebenen Ausgestaltungen und Funktionsweisen einer Vorrichtung 126 zum Abtrennen von Fluidlack-Overspray aus dem Overspray-Partikel enthaltenden Rohgasstrom kombiniert werden.

Der grundsätzliche Aufbau der in den Fig. 34 und 35 dargestellten weiteren Ausführungsform einer Lackieranlage 100 ist beispielsweise aus der DE 10 2005 048 579 A1 bekannt.

Die in Fig. 34 in einem Querschnitt dargestellte Lackieranlage 100 umfasst eine Lackierkabine 602 mit einem Applikationsbereich 604, ein oberhalb der Lackierkabine 602 angeordnetes (nicht dargestelltes) Plenum, durch welches der Lackierkabine 602 Luft zugeführt wird, und einen unterhalb der Lackierkabine 602 angeordneten Filterraum 606, in welchem die in der Lackierkabine 602 mit Lack-Overspray beaufschlagte Luft gereinigt wird.

Mittels einer (nicht dargestellten) Fördervorrichtung sind Fahrzeugkarosserien durch den Applikationsbereich 604 in der Lackierkabine 602 förderbar.

Zum Lackieren der Fahrzeugkarosserien in dem Applikationsbereich 604 der Lackierkabine 602 ist in der Lackierkabine 602 eine Lackiervorrichtung 608 angeordnet.

Die Lackiervorrichtung 608 umfasst einen beispielsweise an einer Seitenwand 610 der Lackierkabine 602 angeordneten Lackierroboter 612, der eine als Lackappliziereinrichtung ausgebildete Appliziereinheit 614 zum Applizieren von Lack auf die Fahrzeugkarosserien trägt.

Die Appliziereinheit 614 ist an einem beweglichen Ende des Lackierroboters 612 angeordnet. Dadurch kann eine Austrittsöffnung 616 der Appliziereinheit 614 (siehe Fig. 35) auf eine Vielzahl von Oberflächen der Fahrzeugkarosserien gerichtet werden, um die Fahrzeugkarosserien besonders einfach lackieren zu können.

Die Lackiervorrichtung 608 weist eine erste Zuleitung 618 zur Zuleitung eines ersten Lacks aus einem ersten Lackbehälter 620 zu der Appliziereinheit 614 mittels einer in der ersten Zuleitung 618 angeordneten ersten Pumpe 622 und eine zweite Zuleitung 624 zur Zuleitung eines zweiten Lacks aus einem zweiten Lackbehälter 626 zu der Appliziereinheit 614 mittels einer in der zweiten Zuleitung 624 angeordneten zweiten Pumpe 628 auf.

Somit kann für die Lackierung der Fahrzeugkarosserien mittels der Lackiervorrichtung 608 zwischen zwei unterschiedlichen Lacken gewählt werden.

Ferner kann die Austrittsöffnung 616 der Appliziereinheit 614 mittels des Lackierroboters 612 auf eine Vielzahl von nicht zu lackierenden Oberflächen der Lackieranlage 100 gerichtet werden, um dieselben mit einer Schutzschicht zu versehen.

Hierzu weist die Lackiervorrichtung 608 eine dritte Zuleitung 630 zum Zuleiten eines Mediums aus einem Mediumbehälter 632 zu der Appliziereinheit 614 auf, wobei in der dritten Zuleitung 630 eine dritte Pumpe 634 vorgesehen ist, um das Medium aus dem Mediumbehälter 632 über die dritte Zuleitung 630 der Appliziereinheit 614 zuzuführen.

Die Appliziereinheit 614 dient somit auch als Mediumabgabeeinrichtung.

Das in dem Mediumbehälter 632 angeordnete Medium ist ein von dem Lack zum Lackieren der Fahrzeugkarosserien verschiedenes Medium. Insbesondere ist das Medium ein schichtbildendes Medium.

Ein schichtbildendes Medium ist beispielsweise ein Precoat-Material oder Hilfsmaterial, welches insbesondere Kalk, Steinmehl, Aluminiumsilikat, Aluminiumoxid, Siliziumoxid, Pulverlack und/oder ähnliches umfasst. Ferner kann das schichtbildende Medium eine Substanz umfassen, welche chemisch reaktive Gruppen, beispielsweise Amingruppen, aufweist.

Mittels der Appliziereinheit 614 ist das schichtbildende Medium insbesondere auf diejenigen Oberflächen der Lackieranlage 100 applizierbar, welche in einem Lackierbetrieb der Lackieranlage 100 mit Lack-Overspray beaufschlagt werden.

Derartige Oberflächen der Lackieranlage 100 sind insbesondere Innenseiten 636 der Seitenwände 610 der Lackierkabine 602, Oberseiten 638 von in dem Filterraum 606 angeordneten Filtervorrichtungen 640 und ein zwischen der Lackierkabine 602 und dem Filterraum 606 angeordneter (nicht dargestellter) Gitterrostboden.

Durch ein Applizieren des schichtbildenden Mediums auf im Lackierbetrieb der Lackieranlage 100 mit Lack-Overspray beaufschlagte Oberflächen haftet der Lack-Overspray nicht direkt an den Oberflächen der Lackieranlage 100, sondern an einer mittels des Mediums gebildeten Schutzschicht an oder reagiert chemisch mit derselben, so dass ein einfaches Abreinigen der Oberflächen der Lackieranlage 100 von Lack-Overspray gewährleistet ist.

Ein Abreinigen der mit Lack-Overspray verunreinigten Oberflächen der Lackieranlage 100 ist insbesondere dadurch möglich, dass die verunreinigten Oberflächen der Lackieranlage 100 mittels der Appliziereinheit 614 mit einem Reinigungsmedium beaufschlagt werden.

Nach einem Reinigungsvorgang sind die gereinigten Oberflächen der Lackieranlage 100 insbesondere bei der Verwendung von wässrigem Reinigungsmedium mittels der Appliziereinheit 614 mit einem trocknenden Medium beaufschlagbar.

Zum Umschalten zwischen einem Lackabgabemodus und einem Mediumabgabemodus der Lackiervorrichtung 608 ist eine Umschaltvorrichtung 642 vorgesehen, welche beispielsweise an der Appliziereinheit 614 angeordnet ist (siehe Fig. 35).

Mittels der Umschaltvorrichtung 642 ist eine Fluidverbindung wahlweise zwischen der ersten Zuleitung 618 und einer in die Austrittsöffnung 616 der Appliziereinheit 614 mündenden Abgabeleitung 644, zwischen der zweiten Zuleitung 624 und der Abgabeleitung 644 oder zwischen der dritten Zuleitung 630 und der Abgabeleitung 644 herstellbar.

Um zu verhindern, dass eine nicht zu lackierende Oberfläche mit Lack beaufschlagt wird oder eine zu lackierende Fahrzeugkarosserie mit, beispielsweise schichtbildendem, Medium beaufschlagt wird, umfasst die Lackiervorrichtung 608 einen Aufnahmebehälter 646, welchem beim Umschalten von einem Lackabgabemodus in einen anderen Lackabgabemodus oder in einen Mediumabgabemodus noch in der Abgabeleitung 644 angeordneter Lack und/oder beim Umschalten von einem Mediumabgabemodus in einen Lackabgabemodus oder in einen anderen Mediumabgabemodus noch in der Abgabeleitung 644 angeordnetes Medium zuführbar ist.

Um der Appliziereinheit 614 voneinander verschiedene Medien zuführen zu können, kann einerseits vorgesehen sein, dass der Mediumbehälter 632 auswechselbar ausgebildet ist.

Andererseits kann vorgesehen sein, dass weitere (nicht dargestellte) Zuleitungen von weiteren (nicht dargestellten) Mediumbehältern zu der Umschaltvorrichtung 642 führen, um dort nicht nur zwischen unterschiedlichen Lacken aus dem ersten Lackbehälter 620 und dem zweiten Lackbehälter 626 und einem Medium aus dem Mediumbehälter 632, sondern zusätzlich aus mehreren Mediumbehältern mit verschiedenen Medien wählen zu können.

Die vorstehend beschriebene Lackieranlage 100 funktioniert wie folgt:
Vor dem Einbringen einer Fahrzeugkarosserie mittels der Fördervorrichtung in den Applikationsbereich 604 der Lackierkabine 602 der Lackieranlage 100 wird auf die im Lackierbetrieb der Lackieranlage 100 mit Lack-Overspray beaufschlagten Oberflächen der Lackieranlage 100 eine Schutzschicht aufgebracht.

Hierzu wird die Austrittsöffnung 616 der Appliziereinheit 614 der Lackiervorrichtung 608 auf eine mit schichtbildendem Medium zu beaufschlagende Oberfläche, beispielsweise die Innenseiten 636 der Seitenwände 610 der Lackierkabine 602, gerichtet.

Die Umschaltvorrichtung 642 wird in einen Mediumabgabemodus versetzt, in welchem die dritte Zuleitung 630 mit der Abgabeleitung 644 der Appliziereinheit 614 in Fluidverbindung steht, um der Austrittsöffnung 616 der Appliziereinheit 614 und somit den Innenseiten 636 der Seitenwände 610 der Lackierkabine 602 schichtbildendes Medium aus dem Mediumbehälter 632 zuzuführen.

Mittels der dritten Pumpe 634 wird Medium aus dem Mediumbehälter 632 angesaugt und über die dritte Zuleitung 630 der Umschaltvorrichtung 642 der Appliziereinheit 614 zugeführt.

Anschließend werden weitere zu schützende Oberflächen, beispielsweise die Oberseiten 638 der Filtervorrichtungen 640 oder der (nicht dargestellte) Gitterrostboden der Lackierkabine 602, mit dem schichtbildenden Medium beaufschlagt, so dass sich auf den im Lackierbetrieb der Lackieranlage 100 möglicherweise mit Lack-Overspray beaufschlagten Oberflächen eine Schutzschicht ausbildet.

Nach Abschluss dieser Verfahrensschritte wird mittels der Umschaltvorrichtung 642 die Fluidverbindung zwischen der dritten Zuleitung 630 und der Abgabeleitung 644 getrennt und eine Fluidverbindung beispielsweise zwischen der ersten Zuleitung 618 und der Abgabeleitung 644 hergestellt.

Um das noch in der Abgabeleitung 644 angeordnete Medium dem Aufnahmebehälter 646 zuzuführen, wird die Austrittsöffnung 616 in einen Innenraum des Aufnahmebehälters 646 gerichtet und der Appliziereinheit 614 mittels der ersten Pumpe 622 solange Lack aus dem ersten Lackbehälter 620 zugeführt, bis die Abgabeleitung 644 kein Medium mehr enthält.

Alternativ oder ergänzend hierzu kann vorgesehen sein, dass die Abgabeleitung 644 zwischen einem Abgeben von Medium und einem Abgeben von Lack mit einem Spülmittel gespült wird.

Eine mittels der Fördervorrichtung in die Lackierkabine 602 geförderte Fahrzeugkarosserie wird dann auf bekannte Art und Weise mittels der an dem Lackierroboter 612 angeordneten Appliziereinheit 614 der Lackiervorrichtung 608 lackiert.

Hierbei gelangt der aus der Austrittsöffnung 616 austretende Lack nicht vollständig auf die zu lackierende Fahrzeugkarosserie. Vielmehr bildet sich Lack-Overspray, welcher sich an nicht zu lackierenden Oberflächen der Lackieranlage 100 niederschlägt.

Durch die zuvor mittels der Appliziereinheit 614 der Lackiervorrichtung 608 an diesen Flächen angeordnete Schutzschicht haftet der Lack-Overspray nicht direkt an den Oberflächen der Lackieranlage 100, sondern an der mittels des schichtbildenden Mediums gebildeten Schutzschicht an oder reagiert chemisch mit derselben.

Nach einem oder mehreren Lackiervorgängen und dem Entfernen der zuletzt in der Lackierkabine 602 lackierten Fahrzeugkarosserie aus der Lackierkabine 602 erfolgt eine einfache Abreinigung der in der Lackieranlage 100 mit Lack-Overspray beaufschlagten Flächen dadurch, dass die mittels des schichtbildenden Mediums gebildete Schutzschicht samt dem daran anhaftenden Lack-Overspray von den Oberflächen der Lackieranlage 100 entfernt wird.

Dies kann beispielsweise durch eine manuelle Abreinigung erfolgen.

Alternativ oder ergänzend hierzu kann mittels der Appliziereinheit 614 der Lackiervorrichtung 608 eine automatische Abreinigung erfolgen. Der Mediumbehälter 632, welcher das schichtbildende Material enthält, wird hierzu durch einen anderen Mediumbehälter 632 ersetzt, welcher ein, beispielsweise wässriges, Reinigungsmedium enthält.

Nach einem Umschaltvorgang an der Umschaltvorrichtung 642 zum Herstellen einer Fluidverbindung zwischen der dritten Zuleitung 630 und der Abgabeleitung 644 werden die zuvor mit schichtbildendem Medium beaufschlagten Oberflächen der Lackieranlage 100 nunmehr mit dem Reinigungsmedium beaufschlagt, wodurch die mittels des schichtbildenden Mediums gebildete Schutzschicht, welche Lack-Overspray aufgenommen hat, von den Oberflächen der Lackieranlage 100 entfernt wird.

Das Material der mit Lack-Overspray verunreinigten Schutzschicht wird anschließend entweder manuell oder mittels (nicht dargestellten) Förderbändern aus der Lackieranlage 100 entfernt.

Nach dem Reinigungsvorgang wird der das Reinigungsmedium enthaltende Mediumbehälter 632 durch einen ein trocknendes Medium, beispielsweise ein gasförmiges Medium, enthaltenden Mediumbehälter 632 ersetzt, und die abgereinigten Oberflächen der Lackieranlage 100 werden mittels der Appliziereinheit 614 mit dem trocknenden Medium beaufschlagt.

Sobald die gereinigten Oberflächen der Lackieranlage 100 trocken sind, wird der Mediumbehälter 632, welcher das trocknende Medium beinhaltet, durch den Mediumbehälter 632, welcher das schichtbildende Medium beinhaltet, ersetzt.

Auf diese Weise ist die Lackieranlage 100 in ihren Ausgangszustand zurückversetzt, so dass ein weiterer Beschichtungsvorgang zur Vorbereitung des Lackierbetriebs der Lackieranlage 100 gestartet werden kann.

Dadurch, dass mittels der Appliziereinheit ein Strom eines von einem Lack zum Lackieren der Werkstücke verschiedenen schichtbildenden Mediums zum Applizieren einer Schicht auf eine Oberfläche abgebbar ist, ist die Lackiervorrichtung flexibel einsetzbar und platzsparend und weist eine geringe Anzahl von Komponenten auf.

Alle Einzelmerkmale der verschiedenen vorstehend beschriebenen Ausführungsformen von Lackieranlagen 100 können frei und in beliebiger Weise mit den einzelnen Merkmalen von anderen der beschriebenen Ausführungsformen kombiniert werden, und zwar sowohl hinsichtlich ihres Aufbaus als auch hinsichtlich ihrer Verwendung und Betriebsweisen.

## Patentansprüche

1. Lackieranlage, umfassend
mindestens eine Lackiervorrichtung mit mindestens einer Appliziereinheit (614) zum Lackieren von Werkstücken mit einem Fluidlack und
eine Vorrichtung (126) zum Abtrennen von Fluidlack-Overspray aus einem Rohgasstrom (120), welche mindestens ein Filterelement (172) zum Abtrennen des Oversprays aus dem Rohgasstrom (120) umfasst, wobei die Vorrichtung (126) zum Abtrennen von Fluidlack-Overspray aus einem Rohgasstrom (120) mindestens eine Filtervorrichtung (132) umfasst, welche
mindestens ein Filterelement (172) zum Abtrennen des Oversprays aus dem Rohgasstrom (120) und
mindestens einen Hilfsmaterialaufnahmebehälter (176) zum Aufnehmen eines Hilfsmaterials umfasst,
wobei die Filtervorrichtung (132) mindestens eine Einlassöffnung (212) umfasst, durch welche der Rohgasstrom (120) in die Filtervorrichtung (132) eintritt,
**dadurch gekennzeichnet,**
**dass** die Einlassöffnung (212) derart ausgebildet und ausgerichtet ist, dass der Rohgasstrom (120) so in den Hilfsmaterialaufnahmebehälter (176) gerichtet in die Filtervorrichtung (132) eintritt, dass er in einem Innenraum (186) des Hilfsmaterialaufnahmebehälters (176) umgelenkt wird, und
**dass** der Hilfsmaterialaufnahmebehälter (176) mit einer Waage (223) versehen ist.

2. Lackieranlage nach Anspruch 1, **dadurch gekennzeichnet, dass** die Vorrichtung (126) zum Abtrennen von Fluidlack-Overspray aus dem Overspray-Partikel enthaltenden Rohgasstrom (120) mindestens eine Einheit (154) umfasst, wobei die Einheit (154) Folgendes umfasst:
- einen Filterelementaufnahmeraum (170) zur Aufnahme mindestens eines Filterelements (172) zum Abtrennen des Oversprays aus dem Rohgasstrom (120);
- mindestens einen Hilfsmaterialaufnahmebehälter (176) zur Aufnahme eines Hilfsmaterials, das dem Rohgasstrom (120) zugegeben wird, bevor der Rohgasstrom (120) das mindestens eine Filterelement (172) passiert;
- mindestens eine Trennwand (168) zum Abtrennen des Filtereiementaufnahmeraums (170) von einer Strömungskammer (128) der Vorrichtung (126) zum Abtrennen von Fluidlack-Overspray, welche von dem Rohgasstrom (120) vor dessen Eintritt in die Einheit (154) durchströmt wird; und
- mindestens eine Einlassöffnung (212), durch welche der Rohgasstrom (120) aus der Strömungskammer (128) in die Einheit (154) eintritt.

3. Lackieranlage nach einem der Ansprüche 1 oder 2, **dadurch gekennzeichnet, dass** der Hilfsmaterialaufnahmebehälter (176) mit einem Rührwerk (334) versehen ist.

4. Lackieranlage nach einem der Ansprüche 1 bis 3, **dadurch gekennzeichnet, dass** der Hilfsmaterialaufnahmebehälter (176) einen unteren Abschnitt (213) umfasst, der mechanisch von einem oberen Abschnitt (211) des Hilfsmaterialaufnahmebehälters (176) entkoppelt ist.

5. Lackieranlage nach Anspruch 4, **dadurch gekennzeichnet, dass** mittels der Waage (223) das Gewicht des unteren Abschnitts (213) des Hilfsmaterialaufnahmebehälters (176) und des darin enthaltenen Materials ermittelbar ist.

6. Verfahren zum Betreiben einer Lackieranlage (100), insbesondere zum Betreiben einer Lackieranlage nach einem der Ansprüche 1 bis 5, umfassend folgende Verfahrensschritte:
- Applizieren von Fluidlack auf zu lackierende Werkstücke, insbesondere Fahrzeugkarosserien (102), mittels mindestens einer Appliziereinheit (614) mindestens einer Lackiervorrichtung;
- Einleiten eines Overspray-Partikel enthaltenden Rohgasstroms (120) in eine Filtervorrichtung (132); und
- Abtrennen des Oversprays aus dem Rohgasstrom (120) mittels mindestens eines in der Filtervorrichtung (132) angeordneten Filterelements (172);
**dadurch gekennzeichnet,**
**dass** der Rohgasstrom (120) so durch mindestens eine Einlassöffnung (212) in die Filtervorrichtung (132) eingeleitet wird, dass der Rohgasstrom (120) in einen Hilfsmaterialaufnahmebehälter (176) zum Aufnehmen eines Hilfsmaterials gerichtet in die Filtervorrichtung eintritt, wobei der Rohgasstrom (120) in einem Innenraum (186) des Hilfsmaterialaufnahmebehälters (176) umgelenkt wird,
wobei das Hilfsmaterial zu dem mit Fluidlack-Overspray beladenen Rohgasstrom (120) zugegeben wird und
wobei ein Gemisch aus Hilfsmaterial und Fluidlack-Overspray in dem Hilfsmaterialaufnahmebehälter (176) angeordnet ist und das Gewicht oder die Masse des Gemisches in dem Hilfsmaterialaufnahmebehälter (176) mittels einer Waage (223) ermittelt wird.

7. Verfahren nach Anspruch 6, **dadurch gekennzeichnet, dass** Material aus dem Hilfsmaterialaufnahmebehälter (176) in mindestens einer Aufwirbelphase aufgewirbelt wird und durch einen Vergleich des Gewichts oder der Masse des in dem Hilfsmaterialaufnahmebehälter (176) vor der Aufwirbelphase und nach der Aufwirbelphase enthaltenen Materials eine Wirksamkeit des im Hilfsmaterialaufnahmebehälter (176) enthaltenen Materials ermittelt wird.

8. Verfahren nach Anspruch 7, **dadurch gekennzeichnet, dass** Material aus dem Hilfsmaterialaufnahmebehälter (176) entnommen wird, wenn die ermittelte Gewichts- oder Massendifferenz einen vorgegebenen Mindestwert unterschreitet.

9. Verfahren nach einem der Ansprüche 7 oder 8, **dadurch gekennzeichnet, dass** das Gewicht oder die Masse von Material in dem Hilfsmaterialaufnahmebehälter (176) mittels der Waage (223) vor und nach einem Aufwirbelzyklus, in dem mehrere aufeinanderfolgende Aufwirbelphasen, die durch Aufwirbelpausen voneinander beabstandet sind, durchgeführt werden, gespeichert wird und dass aus diesen Speicherwerten durch Differenzbildung ermittelt wird, wieviel Material während der Aufwirbelphasen des Aufwirbelzyklus aus dem Hilfsmaterialaufnahmebehälter (176) ausgetragen worden ist.

10. Verfahren nach Anspruch 9, **dadurch gekennzeichnet, dass** die Masse des aus dem Hilfsmaterialaufnahmebehälter (176) während des Aufwirbelzyklus ausgetragenen Materials durch die Nettoaufwirbelzeit der Aufwirbelphasen des Aufwirbelzyklus geteilt wird, um die Wirksamkeit zu ermitteln.

11. Verfahren nach einem der Ansprüche 6 bis 10, **dadurch gekennzeichnet, dass** der Hilfsmaterialaufnahmebehälter mit einem Rührwerk (334) versehen ist.

## Claims

1. A paint shop, comprising
at least one painting device (608) incorporating at least one application unit (614) for painting workpieces with a fluid paint and
a device (126) for separating fluid paint overspray from a stream of crude gas (120) which comprises at least one filter element (172) for separating the overspray from the stream of crude gas (120), wherein the device (126) for separating fluid paint overspray from a stream of crude gas (120) comprises at least one filter device (132) which incorporates
at least one filter element (172) for separating the overspray from the stream of crude gas (120) and
at least one auxiliary material reservoir (176) for accommodating an auxiliary material,
wherein the filter device (132) comprises at least one inlet opening (212) through which the stream of crude gas (120) enters the filter device (132),
**characterized in that**
the inlet opening (212) is configured and oriented in such a manner that the stream of crude gas (120) enters the filter device (132) directed into the auxiliary material reservoir (176) in such a way that it is diverted in an interior space (186) of the auxiliary material reservoir (176), and **in that**
the auxiliary material reservoir (176) is provided with a balance (223).

2. A paint shop in accordance with Claim 1, **characterized in that** the device (126) for separating fluid paint overspray from the stream of crude gas (120) containing overspray particles comprises at least one unit (154), wherein the unit (154) comprises the following:
- a filter element accommodating chamber (170) for accommodating at least one filter element (172) for separating the overspray from the stream of crude gas (120);
- at least one auxiliary material reservoir (176) for accommodating an auxiliary material which is supplied to the stream of crude gas (120) before the stream of crude gas (120) passes the at least one filter element (172);
- at least one partition wall (168) for separating the filter element accommodating chamber (170) from a flow chamber (128) of the device for separating fluid paint overspray through which the crude gas stream (120) flows before its entry into the unit (154); and
- at least one inlet opening (212) through which the stream of crude gas (120) enters the unit (154) from the flow chamber (128).

3. A paint shop in accordance with either of the Claims 1 or 2, **characterized in that** the auxiliary material reservoir (176) is provided with an agitator (334).

4. A paint shop in accordance with any of the Claims 1 to 3, **characterized in that** the auxiliary material reservoir (176) comprises a lower section (213) which is mechanically decoupled from an upper section (211) of the auxiliary material reservoir (176).

5. A paint shop in accordance with Claim 4, **characterized in that** the weight of the lower section (213) of the auxiliary material reservoir (176) and of the material contained therein is determinable by means of the balance (223).

6. A method for the operation of a paint shop (100), in particular for the operation of a paint shop in accordance with any of the Claims 1 to 5, comprising the following processing steps:
- applying fluid paint to workpieces that are to be painted, in particular vehicle bodies (102), by means of at least one application unit (614) of at least one painting device;
- introducing a stream of crude gas (120) containing overspray particles into a filter device (132); and
- separating the overspray from the stream of crude gas (120) by means of at least one filter element (172) arranged in the filter device (132);
**characterized in that**
the stream of crude gas (120) is introduced into the filter device (132) through at least one inlet opening (212) in such a way that the stream of crude gas (120) enters the filter device such as to be directed into an auxiliary material reservoir (176) for accommodating an auxiliary material, wherein the stream of crude gas (120) is diverted in an interior space (186) of the auxiliary material reservoir (176),
wherein the auxiliary material is supplied to the stream of crude gas (120) loaded with fluid paint overspray and
wherein a mixture of auxiliary material and fluid paint overspray is arranged in the auxiliary material reservoir (176) and the weight or the mass of the mixture in the auxiliary material reservoir (176) is determined by means of a balance (223).

7. A method in accordance with Claim 6, **characterized in that** material is whirled up from the auxiliary material reservoir (176) in at least one whirling-up phase and an effectiveness of the material contained in the auxiliary material reservoir (176) is determined by a comparison of the weight or the mass of the material contained in the auxiliary material reservoir (176) prior to the whirling-up phase and after the whirling-up phase.

8. A method in accordance with Claim 7, **characterized in that** material is extracted from the auxiliary material reservoir (176) when the determined weight or mass difference falls below a given minimum value.

9. A method in accordance with either of the Claims 7 or 8, **characterized in that** by means of the balance (223) the weight or the mass of material in the auxiliary material reservoir (176) is stored prior to and after a whirling-up cycle, in which there are undertaken a plurality of successive whirling-up phases which are spaced from each other by whirling-up pauses, and **in that** from these stored values there is determined by difference formation the amount of material that has been withdrawn from the auxiliary material reservoir (176) during the whirling-up phases of the whirling-up cycle.

10. A method in accordance with Claim 9, **characterized in that**, in order to determine the effectiveness, the mass of the material withdrawn from the auxiliary material reservoir (176) during the whirling-up cycle is divided by the net whirling-up time of the whirling-up phases of the whirling-up cycle.

11. A method in accordance with any of the Claims 6 to 10, **characterized in that** the auxiliary material reservoir is provided with an agitator (334).

## Revendications

1. Installation de peinture, comprenant
au moins un dispositif de laquage avec au moins une unité d'application (614) pour la peinture de pièces avec un laque fluide, et
un dispositif (126) pour la séparation de l'excédent de laque fluide d'un flux de gaz brut (120), lequel comprend au moins un élément de filtre (172) pour séparer l'excédent de laque du flux de gaz brut (120), le dispositif (126) pour la séparation de l'excédent de laque fluide d'un flux de gaz brut (120) comprenant au moins un dispositif de filtration (132), lequel comprend
au moins un élément de filtre (172) pour séparer l'excédent de laque du flux de gaz brut (120) et
au moins un conteneur de collecte de matériau auxiliaire (176) destiné à recevoir un matériau auxiliaire,
le dispositif de filtration (132) comprenant au moins une ouverture d'admission (212) par laquelle le flux de gaz brut (120) pénètre dans le dispositif de filtration (132),
**caractérisée en ce que**
l'ouverture d'admission (212) est formée et orientée de telle manière que le flux de gaz brut (120) dirigé vers le conteneur de collecte de matériau auxiliaire (176) pénètre dans le dispositif de filtration (132) de manière à être dévié dans un espace intérieur (186) du conteneur de collecte de matériau auxiliaire (176), et
**en ce que** le conteneur de collecte de matériau auxiliaire (176) est équipé d'une balance (223).

2. Installation de peinture selon la revendication 1, **caractérisée en ce que** le dispositif (126) pour la séparation de l'excédent de laque fluide du flux de gaz brut (120) contenant des particules d'excédent de laque comprend au moins une unité (154), ladite unité (154) comprenant ce qui suit :
- un compartiment de réception d'élément de filtre (170) pour la réception d'au moins un élément de filtre (172) pour la séparation de l'excédent de laque du flux de gaz brut (120) ;
- au moins un conteneur de collecte de matériau auxiliaire (176) pour la réception d'un matériau auxiliaire ajouté au flux de gaz brut (120) avant que le flux de gaz brut (120) passe le ou les éléments de filtre (172) ;
- au moins une paroi de séparation (168) pour la séparation du compartiment de réception d'élément de filtre (170) d'un compartiment d'écoulement (128) du dispositif (126) pour la séparation de l'excédent de laque fluide, lequel est traversé par le flux de gaz brut (120) avant son admission dans l'unité (154) ; et
- au moins une ouverture d'admission (212), par laquelle le flux de gaz brut (120) sortant du compartiment d'écoulement (128) pénètre dans l'unité (154).

3. Installation de peinture selon la revendication 1 ou 2, **caractérisée en ce que** le conteneur de collecte de matériau auxiliaire (176) est équipé d'un agitateur (334).

4. Installation de peinture selon l'une des revendications 1 à 3, **caractérisée en ce que** le conteneur de collecte de matériau auxiliaire (176) comprend une section inférieure (213) mécaniquement désaccouplée d'une section supérieure (211) du conteneur de collecte de matériau auxiliaire (176).

5. Installation de peinture selon la revendication 4, **caractérisée en ce que** le poids de la section inférieure (213) du conteneur de collecte de matériau auxiliaire (176) et du matériau qui y est contenu peut être déterminé au moyen de la balance (223).

6. Procédé de fonctionnement d'une installation de peinture (100), en particulier de fonctionnement d'une installation de peinture selon l'une des revendications 1 à 5, comprenant les étapes suivantes :
- application d'une laque fluide sur les pièces à peindre, en particulier des carrosseries de véhicules (102), au moyen d'au moins une unité d'application (614) d'au moins un dispositif de laquage ;
- introduction d'un flux de gaz brut (120) contenant des particules d'excédent de laque dans un dispositif de filtration (132) ; et
- séparation de l'excédent de laque du flux de gaz brut (120) au moyen d'au moins un élément de filtre (172) disposé dans le dispositif de filtration (132) ;
**caractérisé en ce que**
le flux de gaz brut (120) est introduit par au moins une ouverture d'admission (212) dans le dispositif de filtration (132), de telle manière que le flux de gaz brut (120) dirigé vers un conteneur de collecte de matériau auxiliaire (176) pour la réception d'un matériau auxiliaire pénètre dans le dispositif de filtration, le flux de gaz brut (120) étant dévié dans un espace intérieur (186) du conteneur de collecte de matériau auxiliaire (176),
le matériau auxiliaire étant ajouté au flux de gaz brut (120) chargé en excédent de laque fluide, et
un mélange de matériau auxiliaire et d'excédent de laque fluide étant présent dans le conteneur de collecte de matériau auxiliaire (176) et le poids ou la masse du mélange dans le conteneur de collecte de matériau auxiliaire (176) étant déterminés au moyen d'une balance (223).

7. Procédé selon la revendication 6, **caractérisé en ce que** du matériau du conteneur de collecte de matériau auxiliaire (176) est mis en turbulence lors d'au moins une phase de turbulence et **en ce qu'**un rendement du matériau contenu dans le conteneur de collecte de matériau auxiliaire (176) est déterminé par comparaison du poids ou de la masse du matériau contenu dans le conteneur de collecte de matériau auxiliaire (176) avant la phase de turbulence et après la phase de turbulence.

8. Procédé selon la revendication 7, **caractérisé en ce que** du matériau est prélevé du conteneur de collecte de matériau auxiliaire (176) quand le différentiel de poids ou de masse déterminé est inférieur à une valeur minimale définie.

9. Procédé selon la revendication 7 ou 8, **caractérisé en ce que** le poids ou la masse du matériau dans le conteneur de collecte de matériau auxiliaire (176) déterminés au moyen de la balance (223) sont sauvegardés avant et après un cycle de turbulence où ont lieu plusieurs phases de turbulence successives, espacées entre elles par des pauses de turbulence, et **en ce qu'**à partir desdites valeurs sauvegardées la quantité de matériau extraite du conteneur de collecte de matériau auxiliaire (176) pendant les phases de turbulence du cycle de turbulence est déterminée par formation d'une différence.

10. Procédé selon la revendication 9, **caractérisé en ce que** la masse de matériau extraite du conteneur de collecte de matériau auxiliaire (176) pendant le cycle de turbulence est divisée par le temps de turbulence net des phases de turbulence du cycle de turbulence pour la détermination de rendement.

11. Procédé selon l'une des revendications 6 à 10, **caractérisé en ce que** le conteneur de collecte de matériau auxiliaire est équipé d'un agitateur (334).
